(19) Europäisches Patentamt
European Patent Office
Office européen des brevets

(11) Veröffentlichungsnummer: **0 361 440 A1**

# (12) EUROPÄISCHE PATENTANMELDUNG

(21) Anmeldenummer: **89117849.3**

(22) Anmeldetag: **27.09.89**

(51) Int. Cl.[5]: **C09B 62/503 , C09B 62/04 , D06P 1/38**

(30) Priorität: **30.09.88 DE 3833310**

(43) Veröffentlichungstag der Anmeldung: **04.04.90 Patentblatt 90/14**

(84) Benannte Vertragsstaaten: **BE CH DE ES FR GB IT LI**

(71) Anmelder: **HOECHST AKTIENGESELLSCHAFT**
**Postfach 80 03 20**
**D-6230 Frankfurt am Main 80(DE)**

(72) Erfinder: **Büch, Holger Michael, Dr.**
**Neugasse 4**
**D-6238 Hofheim am Taunus(DE)**
Erfinder: **Springer, Hartmut, Dr.**
**Am Erdbeerstein 27**
**D-6240 Königstein(Taunus)(DE)**

## (54) Wasserlösliche faserreaktive Farbstoffe, Verfahren zu ihrer Herstellung und ihre Verwendung.

(57) Wasserlösliche Farbstoffe, die ein- oder mehrmals die faserreaktive Gruppe der Formel

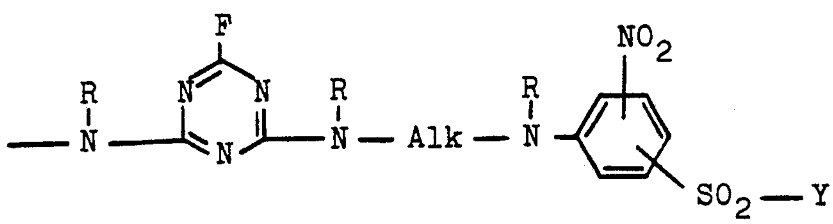

enthalten, in welcher bedeuten:
R ist Wasserstoff oder Alkyl, das durch Carboxy, Cyano, Hydroxy, Sulfo, Sulfato oder Phosphato substituiert sein kann, oder ist gegebenenfalls durch Methyl substituiertes Cycloalkyl,
Alk ist ein Alkylenrest von 2 bis 6 C-Atomen oder ein gegebenfalls durch Heterogruppen und/oder durch methylsubstituierte Cyclohexylengruppen unterbrochener Alkylenrest von 3 bis 10 C-Atomen,
Y ist die Vinylgruppe oder die Ethylgruppe, die in ß-Stellung einen Substituenten enthält, der als Anion unter Bildung der Vinylgruppe eliminierbar ist.
Mit diesen neuen Farbstoffen lassen sich hydroxy- und/oder carbonamidgruppenhaltige Materialien insbesondere Fasermaterialien, wie insbesondere Cellulosefasermaterialien, in echten Tönen färben.

EP 0 361 440 A1

## Wasserlösliche faserreaktive Farbstoffe, Verfahren zu ihrer Herstellung und ihre Verwendung

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, die verbesserte Eigenschaften, nicht nur in Bezug auf die Echtheiten, sondern auch einen hohen Fixiergrad auf dem zu färbenden Material aufweisen. So sind zwar bspw. aus den US-Patentschriften Nrs. 4 515 598, 4 649 193, 4 701 523, 4 703 111, 4 725 674 und 4 731 441, der britischen Patentschrift Nr. 1 576 237, den Europäischen Patentanmeldungs-Veröffentlichungen Nrs. 0 070 806A, 0 070 808A, 0 133 270A, 0 212 264A, 0 141 367A und 0 159 292A und den deutschen Offenlegungsschriften Nrs. 3 628 090 und 3 643 014 faserreaktive Farbstoffe bekannt, gleichwohl lag der vorliegenden Erfindung die Aufgabe zugrunde, neue, diesbezüglich verbesserte Reaktivfarbstoffe zu finden, die insbesondere Baumwolle in allen Farbtönen zu färben vermögen.

Mit der vorliegenden Erfindung wurde diese Aufgabe durch Auffindung von wasserlöslichen Farbstoffen gelöst, die eine Gruppe entsprechend der nachstehend genannten und definierten allgemeinen Formel (1) ein- oder mehrmals, wie zwei- oder dreimal, enthalten.

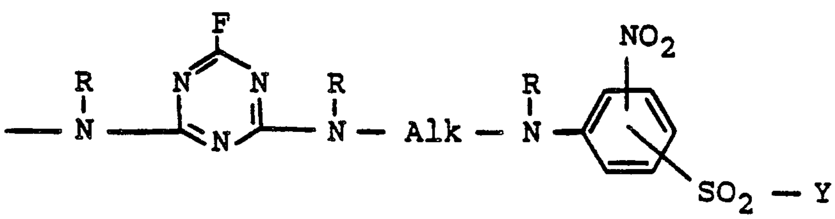

(1)

In dieser Formel bedeuten:

R ist ein Wasserstoffatom oder eine Alkylgruppe von 1 bis 4 C-Atomen, die durch eine Carboxy-, Cyano-, Hydroxy-, Sulfo-, Sulfato- oder Phosphato-Gruppe substituiert sein kann, wie beispielsweise die ß-Cyanoethyl-, ß-Hydroxyethyl-, ß-Sulfatoethyl- oder ß-Sulfoethyl-Gruppe, oder ist ein Cycloalkylrest mit 5 bis 8 C-Atomen, wie der Cyclohexylrest, der durch 1 bis 3 Methylgruppen substituiert sein kann, wobei die R zueinander gleiche oder voneinander verschiedene Bedeutungen haben können;

Alk ist ein geradkettiger oder verzweigter Alkylenrest von 2 bis 6 C-Atomen oder ist ein geradkettiger oder verzweigter Alkylenrest von 3 bis 10 C-Atomen, vorzugsweise von 4 bis 8 C-Atomen, der durch 1, 2, 3 oder 4, vorzugsweise 1 oder 2, Heterogruppen oder durch 1 oder 2 gegebenenfalls durch 1, 2 oder 3 Methylgruppen substituierte Cyclohexylengruppen, oder eine Kombination solcher Gruppen, unterbrochen ist, wobei die Heterogruppen bevorzugt aus den Gruppen der Formeln -O- , $-SO_2-$ und $-N(R'')-$ , in welcher $R''$ ein Wasserstoffatom oder eine Alkylgruppe von 1 bis 4 C-Atomen bedeutet, die durch Sulfo, Carboxy, Hydroxy, Sulfato oder Phosphato substituiert sein kann, ausgewählt sind und wobei von den Heterogruppen die Oxygruppe und die angegebenen Aminogruppen, insbesondere die mit $R''$ gleich Wasserstoff oder Methyl, bevorzugt sind;

Y ist die Vinylgruppe oder eine Gruppe der allgemeinen Formel (2)

$-CH_2-CH_2-X$ (2)

in welcher X für einen Substituenten steht, der als Anion, insbesondere mittels eines Alkalis, unter Bildung der Vinylgruppe eliminierbar ist;

die Gruppe $-SO_2-Y$ steht bevorzugt in para-Stellung zur Aminogruppe, wobei dann die Nitrogruppe in ortho-Stellung zur Aminogruppe gebunden ist, oder die Gruppe $-SO_2-Y$ steht bevorzugt in ortho-Stellung zur Aminogruppe, wobei dann die Nitrogruppe in para-Stellung zur Aminogruppe gebunden ist.

Von den erfindungsgemäß gefundenen Farbstoffen mit einer oder mehreren der Gruppierung der Formel (1) sind bevorzugt Farbstoffe, solche der allgemeinen Formel (3)

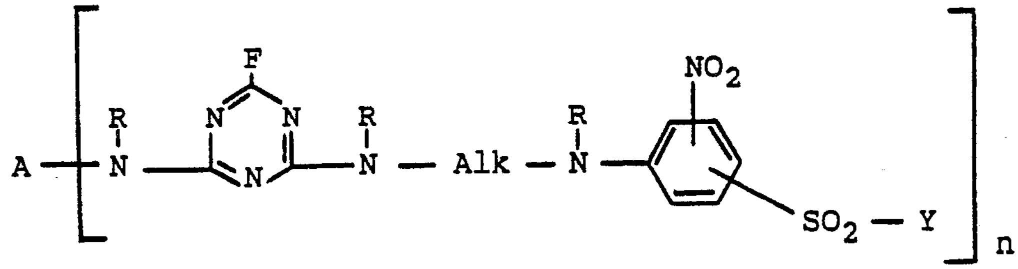

(3)

worin bedeuten:

A ist der Rest eines sulfo- und/oder carboxygruppenhaltigen Farbstoffes, der ein Schwermetallion, wie beispielsweise ein Kupfer-, Nickel-, Kobalt- oder Chromion, komplex gebunden enthalten kann, wie beispielsweise der Rest eines Farbstoffes aus der Phthalocyanin-, Anthrachinon-, Formazan- oder Azoreihe, bevorzugt jedoch eines sulfogruppenhaltigen Farbstoffes aus der Azoreihe, insbesondere der Rest eines sulfogruppenhaltigen Monoazo- oder Disazofarbstoffes;

n ist die Zahl 1 oder 2, bevorzugt 1;

R, Alk und Y haben eine der für Formel (1) angegebenen Bedeutungen.

Bevorzugt sind Farbstoffe der allgemeinen Formel (1), die insgesamt 1 bis 6 Sulfogruppen besitzen. Die Farbstoffreste A können ferner weitere übliche faserreaktive Gruppen enthalten.

Wasserlösliche Farbstoffe, wie solche mit dem Rest A, bzw. die den Farbstoffen mit der Gruppe der allgemeinen Formel (1) zugrunde liegenden Farbstoffe mit einer Aminogruppe -NHR sind in der Literatur zahlreich beschrieben, so beispielsweise in den anfangs genannten Offenlegungsschriften und Patentschriften, in den europäischen Patentanmeldungs-Veröffentlichungen Nrs. 0 076 782A und 0 144 766A und desweiteren in Venkataraman, The Chemistry of Synthetic Dyes, New York London, 1972, Band VI, Seiten 213-297. Besonders wertvolle Farbstoffe dieser Reihe sind wasserlösliche schwermetallfreie Azofarbstoffe, insbesondere solche, die Sulfo- und/oder Carboxygruppen, bevorzugt Sulfogruppen enthalten, insbesondere sulfogruppenhaltige Mono- und Disazofarbstoffe, und Metallkomplexfarbstoffe, wie sulfogruppenhaltige 1:1-Kupferkomplex-Monoazo- und -Disazofarbstoffe.

Alkylgruppen R sind beispielsweise die n-Butyl-, n-Propyl- und die Ethylgruppe, vorzugsweise die Methylgruppe. Bevorzugt ist R ein Wasserstoffatom.

Als Anion eliminierbare Substituenten X können beispielsweise folgende genannt werden: Chlor, Sulfato, Thiosulfato, Phosphato, Alkylsulfonyloxy von 1 bis 4 C-Atomen, wie Methylsulfonyloxy, Alkanoyloxy von 2 bis 5 C-Atomen, wie Acetyloxy, und Sulfobenzoyloxy; hiervon sind bevorzugt die Sulfato- und die Phosphatogruppe, insbesondere die Sulfatogruppe.

Wichtige Azofarbstoffe entsprechend der allgemeinen Formel (3) sind solche, in denen A einen Rest eines Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalin-azo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind.

Solche Azofarbstoffe der allgemeinen Formel (3) sind beispielsweise Farbstoffe der allgemeinen Formeln (4a), (4b) und (4c)

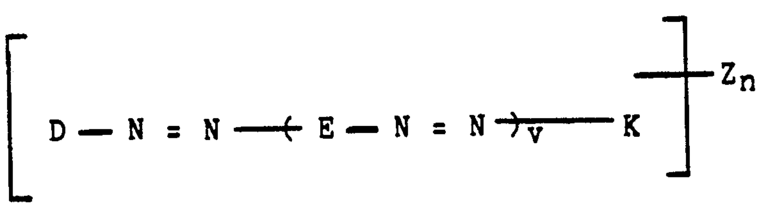

(4a)

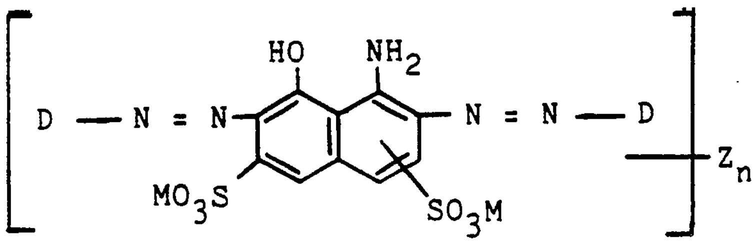

(4b)

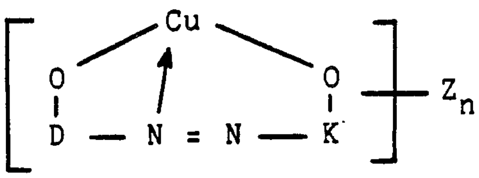

(4c)

in welchen M die obengenannte Bedeutung hat, D jeweils für den Rest einer Diazokomponente steht, die zueinander gleiche oder voneinander verschiedene Bedeutungen besitzen können, E den bivalenten Rest einer kupplungsfähigen und diazotierbaren Verbindung und K den Rest einer Kupplungskomponente bedeuten, v für die Zahl Null oder 1 steht, Z einen Rest der allgemeinen Formel (1) bedeutet, n die Zahl 1 oder 2, bevorzugt 1, ist und der Rest Z an den Rest D oder den Rest K oder im Falle von n = 2 jeweils an D und K bzw. an beide D gebunden ist, wobei in Formel (4c) die das Cu komplex bindenden Oxigruppen in ortho-Stellung zur Azogruppe an D und K gebunden sind.

Aromatische Reste D von Diazokomponenten $D-NH_2$ die keine faserreaktive Gruppe der allgemeinen Formel (1) tragen, sind beispielsweise die $NH_2$-freien Reste der Anilin- und Aminonaphthalin-Verbindungen der allgemeinen Formeln (5a) und (5b)

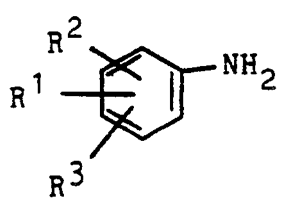

(5a)

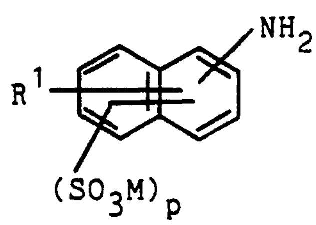

(5b)

in welchen

$R^1$ ein Wasserstoffatom, eine Sulfogruppe oder eine Gruppe der allgemeinen Formel $-SO_2-Y$ mit Y der obengenannten Bedeutung ist,

$R^2$ Wasserstoff, Methyl, Ethyl, Methoxy, Ethoxy, Alkanoyl von 2 bis 5 C-Atomen, wie Acetyl und Propionyl, Cyano, Carboxyl, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

p die Zahl Null, 1 oder 2 bedeutet (wobei diese Gruppe im Falle von p gleich Null ein Wasserstoffatom bedeutet),

M die obengenannte Bedeutung hat und

der Benzol- bzw. Naphthalinkern in ortho-Stellung zur Gruppe $-NH_2$ durch eine Hydroxygruppe substituiert sein kann.

Bevorzugt ist hiervon $R^2$ gleich Wasserstoff, Methyl, Methoxy, Brom, Chlor, Carboxy und Sulfo sowie $R^3$ gleich Wasserstoff, Methyl, Methoxy, Chlor, Carboxy, Sulfo und Acetylamino.

Die Substituenten "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel $-COOM$ , Phosphatogruppen Gruppen entsprechend der allgemeinen Formel $-OPO_3M_2$ , Thiosulfatogruppen Gruppen entsprechend der allgemeinen Formel $-S-SO_3M$ und Sulfatogruppen Gruppen entsprechend der allgemeinen Formel $-OSO_3M$ , jeweils mit M der obengenannten Bedeutung.

Aromatische Amine der allgemeinen Formel $D-NH_2$ entsprechend den Formeln (5a) und (5b) sind

beispielsweise:
Anilin, 2-Methoxy-anilin, 2-Ethoxy-anilin, 2-Methyl-anilin, 4-Nitro-2-amino-anisol, 4-Chlor-2-amino-anisol, 4-Methyl-anilin, 4-Methoxy-anilin, 2-Nitro-4-amino-anisol, 2-Methoxy-5-methyl-anilin, 4-Nitro-anilin, 2-Nitro-4-methyl-anilin, 2,5-Dimethoxyanilin, 2,5-Dimethyl-anilin, 2,4-Dimethyl-anilin, 4-Butyl-anilin, 2,5-Diethoxy-anilin, 4-Cyano-anilin, 2-Chloranilin, 3-Chloranilin, 4-Chloranilin, 4-Chlor-2-methyl-anilin, 3-Chlor-2-methyl-anilin, 4-Chlor-2-amino-toluol, 4-(p-Tolyl-sulfonyl)-anilin, 1-Naphthylamin, 2-Naphthylamin, 4-Benzoylamino-2-ethoxy-anilin, 3-Amino-4-methyl-benzonitril, 4-Methylsulfonyl-anilin, 2-Trifluor-methyl-anilin, 3-Trifluormethyl-4-chloranilin, 2-Amino- oder 4-Aminobenzoesäure, 3-Amino-benzoesäure, 3-Chloranilin-6-carbonsäure, Anilin-2- oder -3- oder -4-sulfonsäure, 2,5-Disulfo-anilin, 2,4-Disulfo-anilin, 3,5-Disulfoanilin, 2-Aminotoluol-4-sulfonsäure, 2-Amino-anisol-4-sulfonsäure, 2-Amino-anisol-5-sulfonsäure, 4-Amino-anisol-2-sulfonsäure, 2-Ethoxy-anilin-5-sulfonsäure, 2-Ethoxy-anilin-4-sulfonsäure, 4-Sulfo-2-aminobenzoesäure, 2,5-Dimethoxy-anilin-4-sulfonsäure, 2,4-Dimethoxyanilin-5-sulfonsäure, 2-Methoxy-5-methyl-anilin-4-sulfonsäure, 4-Amino-anisol-3-sulfonsäure, 4-Amino-toluol-3-sulfonsäure, 2-Amino-toluol-5-sulfonsäure, 2-Chlor-anilin-4-sulfonsäure, 2-Chlor-anilin-5-sulfonsäure, 2-Brom-anilin-4-sulfonsäure, 2,6-Dichloranilin-4-sulfonsäure, 2,6-Dimethylanilin-3-sulfonsäure oder -4-sulfonsäure, 3-Acetylamino-6-sulfoanilin, 4-Acetyl-amino-2-sulfo-anilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Naphthylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonaphthalin-3,6-disulfonsäure, 2-Aminonaphthalin-4,8-disulfonsäure, 4-(ß-Sulfatoethylsulfonyl)-anilin, 3-(ß-Sulfatoethylsulfonyl)-anilin, 2-Sulfo-5-(ß-sulfatoethylsulfonyl)-anilin, 2-Sulfo-4-(ß-sulfatoethylsulfonyl)-anilin, 2-Methoxy-4-(ß-sulfatoethylsulfonyl)-anilin, 2-Methoxy-5-methyl-4-(ß-sulfatoethylsulfonyl)-anilin, 2,5-Dimethoxy-4-(ß-sulfatoethylsulfonyl)-anilin, 2-Amino-5-(ß-sulfatoethylsulfonyl)-phenol, 2-Amino-4-(ß-sulfatoethylsulfonyl)-phenol, 2-Amino-6-(ß-sulfatoethylsulfonyl)-naphthalin-8-sulfonsäure, 2-Amino-8-(ß-sulfatoethylsulfonyl)-naphthalin-6-sulfonsäure, 2-Amino-5-(ß-sulfatoethylsulfonyl)-naphthalin-7-sulfonsäure, 2-Amino-7-(ß-sulfatoethylsulfonyl)-naphthalin-5-sulfonsäure und 2-Amino-6-(ß-sulfatoethylsulfonyl)-naphthalin-1-sulfonsäure.

Aromatische Amine der Diazokomponente Z-D-$NH_2$ der Anilinreihe mit dem faserreaktiven Rest Z gehen von aromatischen Aminen der allgemeinen Formeln (6a) und (6b)

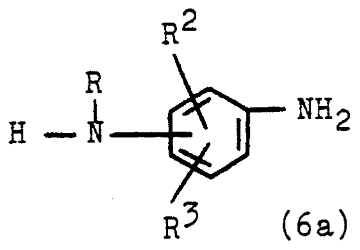
(6a)

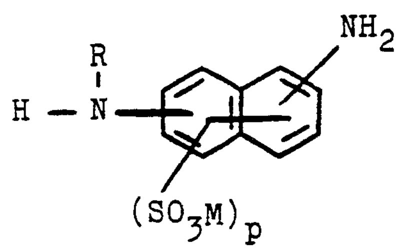
(6b)

aus, in welcher R, p, $R^2$ und $R^3$ die oben angegebenen, insbesondere bevorzugten Bedeutungen haben, wobei auch hier der Benzol- bzw. Naphthalinkern in ortho-Stellung zur Gruppe -$NH_2$ durch eine Hydroxygruppe substituiert sein kann.

Amine der allgemeinen Formeln (6) sind beispielsweise:
1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxybenzol, 1,3-Diamino-4-methyl-benzol, 1,5-Diamino-4-methylbenzol-2-sulfonsäure, 1,5-Diamino-4-methoxybenzol-2-sulfonsäure, 1,3-Diaminobenzol-5-sulfonsäure und 1,3-Diamino-5-methylbenzol, 1,5-Diamino-naphthalin, 8-Sulfo-1,3-diamino-naphthalin, 4,8-Disulfo-1,6-diamino-naphthalin.

Aromatische Reste E einer kupplungsfähigen und diazotierbaren Verbindung der Anilin- und Aminonaphthalinreihe leiten sich beispielsweise von Aminen der allgemeinen Formeln (7a) und (7b)

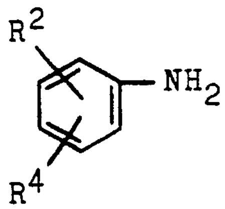 (7a) 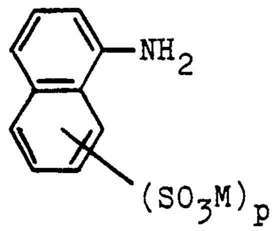 (7b)

ab, in welchen

$R^2$, M und p die oben angegebenen Bedeutungen haben und

$R^4$ ein Wasserstoffatom, eine Alkylgruppe von 1 bis 4 C-Atomen, wie die Methyl- oder Ethylgruppe, eine Alkoxygruppe von 1 bis 4 C-Atomen, wie die Methoxy- und Ethoxygruppe, ein Chloratom, eine Alkanoylaminogruppe von 2 bis 5 C-Atomen, wie die Acetylamino- und Propionylaminogruppe, die Benzoylaminogruppe, die Ureidogruppe, eine Phenylureidogruppe, eine Alkylureidogruppe mit 1 bis 4 C-Atomen im Alkylrest, eine Phenylsulfonylgruppe oder eine Alkylsulfonylgruppe von 1 bis 4 C-Atomen ist.

Solche Verbindungen sind beispielsweise:

Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetyl-aminobenzol-1-sulfonsäure, 1-Aminonaphthalin, 1-Aminonaphthalin-6- oder -7- oder -8-sulfonsäure, 3-Acetylaminoanilin, 2-Methylanilin, 2-Methoxyanilin, 3-Benzoylamino-anilin, 2,3-Dimethylanilin, 3,5-Dimethyl anilin, 1-Amino-2-methoxy-5-acetylamino-benzol, 2-Chlor-6-methyl-anilin, 5-Chlor-2-methyl-anilin, 2,6-Dichlor-3-methyl-anilin, 2-Methoxy-5-methyl-anilin.

Die Reste K der Kupplungskomponente entstammen vorzugsweise der Anilin-, Naphthalin-, Pyrazol- und Acylacetarylid-Reihe;

sie können faserreaktive Gruppen besitzen.

Kupplungskomponenten der Formel H-K der Anilin- und Naphthalinreihe sind beispielsweise die Aniline, N-mono-und N,N-disubstituierte Aniline, m-Phenylendiamine und deren Derivate, Naphtholsulfonsäuren, Aminonaphthaline, Naphthole, Hydroxynaphthoesäurederivate, Aminonaphthalinsulfonsäuren oder Aminonaphtholsulfonsäuren.

Kupplungskomponenten der Formel H-K , die keine faserreaktive Gruppe der allgemeinen Formel (1) tragen, sind beispielsweise Verbindungen der allgemeinen Formeln (8a), (8b), (8c), (8d) und (8e)

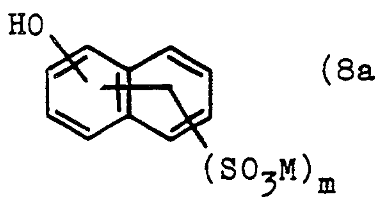 (8a) 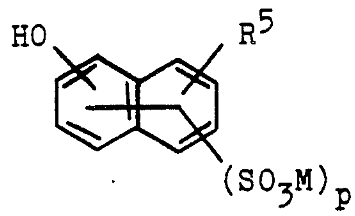 (8b)

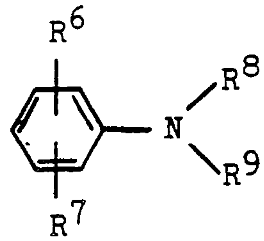 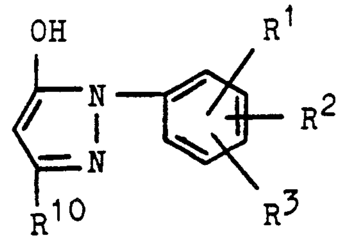 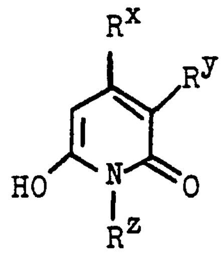

(8c) (8d) (8e)

in welchen

$R^1$, $R^2$, $R^3$, p und M die obengenannten Bedeutungen haben,

m für die Zahl Null, 1, 2 oder 3 steht (wobei diese Gruppe im Falle m gleich Null ein Wasserstoffatom bedeutet),

$R^5$ Alkylureido mit Alkylgruppen von 1 bis 6 C-Atomen, Phenylureido, im Phenylrest durch Chlor, Methyl,

Methoxy, Nitro, Sulfo und/oder Carboxy substituiertes Phenylureido, Alkanoylamino von 2 bis 7 C-Atomen, wie beispielsweise Acetylamino und Propionylamino, Cyclohexanoylamino, Benzoylamino oder im Benzolrest durch Chlor, Methyl, Methoxy, Nitro, Sulfo und/oder Carboxy substituiertes Benzoylamino bedeutet,
$R^6$ Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist,
$R^7$ Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, eine Ureido- oder Phenylureidogruppe ist,
$R^8$ Wasserstoff oder Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, ist,
$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist,
$R^{10}$ für Wasserstoff, Alkyl von 1 bis 4 C-Atomen, wie Methyl, Cyano, Carboxy, Carbalkoxy von 2 bis 5 C-Atomen, Carbonamido oder Phenyl steht,
$R^x$ ein Wasserstoffatom oder eine Alkylgruppe von 1 bis 4 C-Atomen, wie die Methylgruppe, oder eine durch Alkoxy von 1 bis 4 C-Atomen, wie Methoxy, oder Cyano substituierte Alkylgruppe von 1 bis 4 C-Atomen ist,
$R^y$ ein Wasserstoffatom, eine Sulfogruppe oder eine Sulfoalkylgruppe mit einem Alkylenrest von 1 bis 4 C-Atomen, wie die Sulfomethylengruppe, oder eine Cyano-oder Carbamoylgruppe ist und
$R^z$ ein Wasserstoffatom oder eine Alkylgruppe von 1 bis 6 C-Atomen, bevorzugt von 1 bis 4 C-Atomen, die durch Phenyl, Sulfo oder Sulfophenyl substituiert sein kann, ist.

Verbindungen der allgemeinen Formeln (8) sind beispielsweise:
1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 2-Acetylamino-5-hydroxy-naphthalin-7-sulfonsäure, 3-Acetylamino-5-hydroxy-naphthalin-7-sulfonsäure, 2-Methyl-amino-8-hydroxy-naphthalin-6-sulfonsäure oder 2-(3′- und 4′-Sulfophenyl)-amino-8-hydroxynaphthalin-6-sulfonsäure, 3-(3′- und 4′-Sulfophenyl)-amino-8-hydroxy-naphthalin-6-sulfonsäure, N,N-Di-(ß-sulfoethyl)-anilin und dessen im Benzolkern durch Methyl, Methoxy und/oder Ethoxy mono- oder disubstituierten Derivate, N-Ethyl-N-(ß-sulfoethyl)-anilin, N-(ß-Sulfoethyl)-anilin, N-(ß-Carboxyethyl)-anilin und deren im Benzolkern durch Methyl, Methoxy und/oder Ethoxy mono- oder disubstituierten Derivate, sowie 1-[4′-(ß-Sulfatoethylsulfonyl)-2′-sulfo]-phenyl-3-methyl-pyrazol-5-on, 1-[4′-(ß-Sulfatoethylsulfonyl)]-phenyl-3-carboxy-pyrazol-5-on und 1-(4′-Sulfophenyl)-3-carboxy-pyrazol-5-on.

Von besonderer Bedeutung sind sulfogruppenhaltige, gegebenenfalls Azogruppen, wie 1 oder 2 Azogruppen, tragende Kupplungskomponenten, die in o- oder p-Stellung zu einer Hydroxy- und/oder Aminogruppe kuppeln, wie beispielsweise 2-Acetylamino-5-hydroxy-naphthalin-7-sulfonsäure, 2-Acetyl-amino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure.

Als Kupplungskomponenten H-K sind weiterhin besonders zu nennen: 1-Amino-8-hydroxynaphthalin-3,6- und 4,6-disulfonsäure sowie deren durch saure Kupplung erhaltene Arylazokupplungsprodukte der Formel (9a)

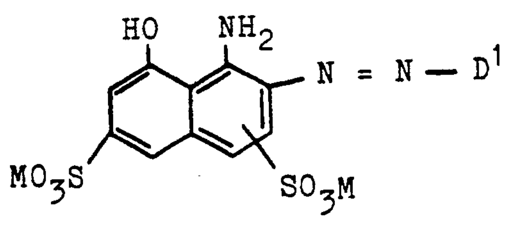

(9a)

in welcher
$D^1$ der Rest einer Diazokomponente, beispielsweise ein Rest der Formel (10a) oder (10b)

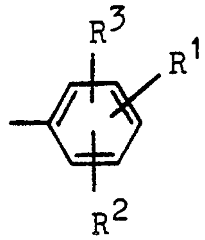

(10a)

oder

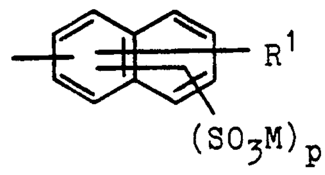

(10b)

sein kann, worin $R^1$, $R^2$, $R^3$, M und p die oben angegebenen Bedeutungen haben.

Einzelne Reste $D^1$ sind beispielsweise: Phenyl, 2-Sulfo-phenyl, 3-Sulfo-phenyl, 4-Sulfo-phenyl, 2,4-Disulfo-phenyl, 2,5-Disulfo-phenyl, 3,5-Disulfo-phenyl, 1,5-Disulfo-naphth-2-yl, 4,8-Disulfo-naphth-2-yl, 3,6,8-Trisulfo-naphth-2-yl, 4,6,8-Trisulfo-naphth-2-yl, 3,6,8-Trisulfo-naphth-1-yl, 4,6,8-Trisulfo-naphth-1-yl, 4-Sulfo-naphth-1-yl, 1-Sulfo-naphth-2-yl, 3-Acetylamino-phenyl, 4-Acetylamino-phenyl, 4-Acetylamino-2-sulfo-phenyl, 5-Acetylamino-2-sulfo-phenyl, 4-Nitro-phenyl, 4-Nitro-2-sulfo-phenyl, 6-Acetylamino-4,8-disulfo-naphth-2-yl, 4-(ß-Sulfatoethylsulfonyl)-phenyl und 3-(ß-Sulfatoethylsulfonyl)-phenyl.

Weitere Kupplungskomponenten H-K ohne die faserreaktive Gruppe der Formel (1) sind bspw. solche der allgemeinen Formeln (11a), (11b), (11c) und (11d)

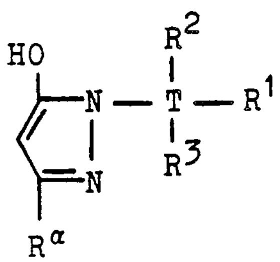

(11a)

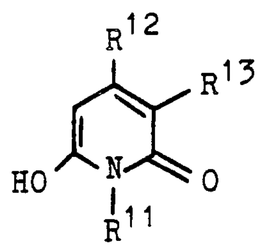

(11b)

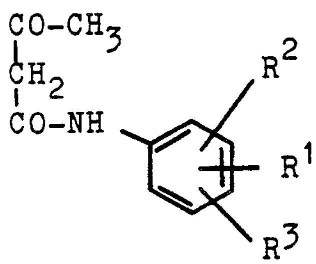

(11c)

oder

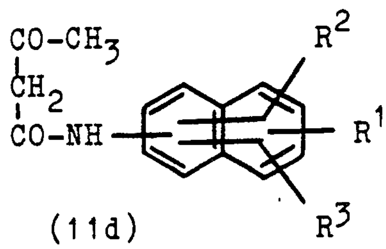

(11d)

in welchen

$R^1$, $R^2$ und $R^3$ die obengenannten Bedeutungen haben,

T für einen Benzol- oder Naphthalinring steht,

$R^{\alpha}$ Methyl, Carboxy, Methoxycarbonyl oder Ethoxycarbonyl oder Phenyl ist,

$R^{11}$ Wasserstoff, Alkyl von 1 bis 4 C-Atomen, das durch Phenyl oder Sulfophenyl oder durch Hydroxy, Amino, Methoxy, Ethoxy, Carboxy, Sulfo, Acetylamino, Benzoylamino oder Cyano substituiert sein kann, Cyclohexyl, Phenyl oder durch Carboxy, Sulfo, Benzoylamino, Acetylamino, Methyl, Methoxy, Cyano oder Chlor substituiertes Phenyl ist,

$R^{12}$ Alkyl von 1 bis 4 C-Atomen oder Phenyl ist und

$R^{13}$ Wasserstoff, Chlor, Brom, Sulfo, Carbamoyl, Methylsulfonyl, Phenylsulfonyl, Cyano oder Sulfomethylen bedeutet.

Pyrazolon-Kupplungskomponenten sind beispielsweise 3-Methyl-, 3-Carboxy und 3-($C_2$-$C_5$-Alkoxycarbonyl)-5-pyrazolone, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Sulfo, Benzoyl, Acetyl, Acetylamino, Nitro, Hydroxy, Carboxy, Carbamoyl und/oder Sulfamoyl substituiertes Phenyl oder sulfosubstituiertes 1- oder 2-Naphthyl tragen, beispielsweise:

1-Phenyl-, 1-(2′-Chlorphenyl)-, 1-(2′-Methoxyphenyl)-, 1-(2′-Methylphenyl)-, 1-(2′,5′-Dichlorphenyl)-, 1-(2′,6′-Dichlorphenyl)-, 1-(2′-Methyl-6′-chlorphenyl)-, 1-(2′-Methoxy-5′-methylphenyl)-, 1-(2′-Chlor-5′-sulfophenyl)-,

1-(2′-Methoxy-5′-sulfophenyl)-, 1-(2′-Methyl-4′-sulfophenyl)-, 1-(2′,5′-Dichlor-4′-sulfophenyl)-, 1-(2′,5′-Disulfophenyl)-, 1-(2′-Carboxyphenyl)-, 1-(3′-Sulfophenyl)-, 1-(4′-Sulfophenyl)-, 1-(3′-Sulfamoylphenyl)-3-carboxy-5-pyrazolon, 1-(3′- oder 4′-Sulfophenyl)-, 1-(2′-Chlor-4′- oder -5′-sulfophenyl)-, 1-(2′-Methyl-4′-sulfophenyl)-, 1-(4′,8′-Disulfo-8-naphthyl)-, 1-(6′-Sulfo-1-naphthyl)-3-methyl-5-pyrazolon, 1-Phenyl-5-pyrazolon-3-carbonsäureethylester, 5-Pyrazolon-3-carbonsäureethylester oder 5-Pyrazolon-3-carbonsäure.

Andere aus der Pyrazolreihe stammende Kupplungskomponenten sind beispielsweise 1-Methyl-, 1-Ethyl-, 1-Propyl-, 1-Butyl-, 1-Cyclohexyl-, 1-Benzyl- oder 1-Phenyl-5-aminopyrazol, 1-(4′-Chlorphenyl)-, 1-(4′-Methylphenyl)-5-aminopyrazol oder 1-Phenyl-3-methyl-5-aminopyrazol.

Pyridonkupplungskomponenten sind beispielsweise: 1-Ethyl-2-hydroxy-4-methyl-5-carbonamido-pyridon-6, 1-(2′-Hydroxyethyl)-2-hydroxy-4-methyl-5-carbonamido-pyridon-6, 1-Phenyl-2-hydroxy-4-methyl-5-carbonamido-pyridon-6, 1-Ethyl-2-hydroxy-4-methyl-5-cyano-pyridon-6, 1-Ethyl-2-hydroxy-4-sulfomethyl-5-carbonamido-pyridon-6, 1-Ethyl-2-hydroxy-4-methyl-5-sulfomethyl-pyridon-6, 1-Methyl-2-hydroxy-4-methyl-5-cyano-pyridon-6, 1-Methyl-2-hydroxy-5-acetyl-pyridon-6, 1,4-Dimethyl-2-hydroxy-5-cyano-pyridon-6, N-(ß-Sulfoethyl)-4-methyl-5-cyano- oder -5-sulfomethyl-oder -5-sulfo- oder -5-carbamoyl-6-hydroxy-2-pyridon, N-(ß-Sulfatoethyl)-4-methyl-5-cyano-oder -5-sulfomethyl-oder -5-sulfo- oder -5-carbamoyl-6-hydroxy-2-pyridon, N-(ß-Phosphatoethyl)-, N-(ß-Sulfoethyl)- und N-(ß-Sulfatoethyl)-4-methyl-6-hydroxy-2-pyridon, 1,4-Dimethyl-2-hydroxy-5-carbonamido-pyridon-6, 2,6-Dihydroxy-4-ethyl-5-cyano-pyridin, 2,6-Dihydroxy-4-ethyl-5-carbonamido-pyridin, 1-Ethyl-2-hydroxy-4-methyl-5-sulfomethyl-pyridon-6, 1-Methyl-2-hydroxy-4-methyl-5-methylsulfonyl-pyridon-6 oder 1-Carboxymethyl-2-hydroxy-4-ethyl-5-phenylsulfonyl-pyridon-6.

Faserreaktivgruppenhaltige Kupplungskomponenten der Anilin-und Naphthalinreihe mit dem Rest der Formel (1) leiten sich beispielsweise von Verbindungen der allgemeinen Formeln (11e) bis (11g)

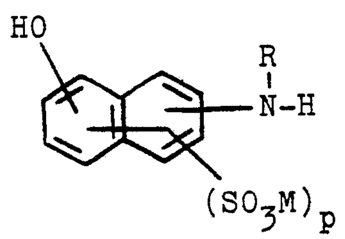

(11e)

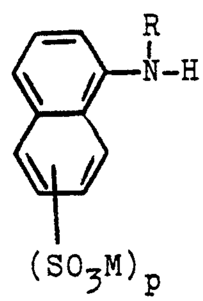

(11f)

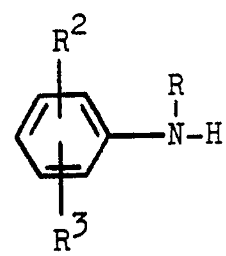

(11g)

ab, in welchen R, $R^2$, $R^3$, M und p die obengenannten Bedeutungen haben.

Durch Umsetzung mit einem faserreaktiven Acylierungsmittel vor der Kupplung mit dem Diazoniumsalz, die Verbindungen der allgemeinen Formel (11e) betreffend, oder nach der Kupplung mit dem Diazoniumsalz, die Verbindungen der allgemeinen Formeln (11e) bis (11g) betreffend, kann ein faserreaktiver Rest eingeführt werden. Prinzipiell kommen hierfür alle bekannten faserreaktiven Acylierungsmittel in Betracht, wie hier 2,4,6-Trifluor-1,3,5-triazin (Cyanurfluorid) und insbesondere eine Difluortriazinylamino-Verbindung der später angegebenen und definierten allgemeinen Formel (19).

Weitere Kupplungskomponenten H-K sind die durch saure Kupplung erhältlichen Arylazo-Kupplungsprodukte der 1-Amino-8-hydroxy-naphthalin-3,6- und -4,6-disulfonsäure der allgemeinen Formel (9b)

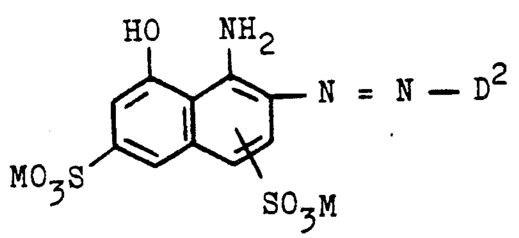

(9b)

in welcher $D^2$ der Rest einer Diazokomponente mit einer faserreaktiven Gruppe, insbesondere der Formel (1), ist. Der Formelrest $D^2$ ist beispielsweise ein Rest der obengenannten Formel (10a) mit $R^1$ gleich einer Gruppe der Formel $-SO_2-Y$ oder ein Rest der Formel (12)

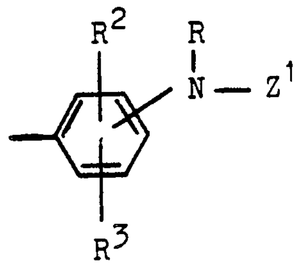

(12)

in welcher R, $R^2$, $R^3$ und M die oben angegebenen Bedeutungen haben und
$Z^1$ ein Rest der allgemeinen Formel (1a)

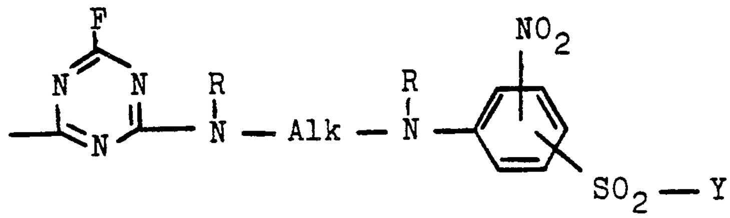

(1a)

mit R und Y der oben angegebenen Bedeutung ist.

Aromatische Diamine aus dem Rest der Formel (12) sind beispielsweise: 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxy-benzol, 1,3-Diamino-4-methyl-benzol, 1,4-Diaminobenzol-2,6-disulfonsäure, 1,5-Diamino-4-methylbenzol-2-sulfonsäure, 1,5-Diamino-4-methoxybenzol-2-sulfonsäure, wobei in allen diesen Diaminoverbindungen die eine primäre oder sekundäre Aminogruppe durch den faserreaktiven Rest $Z^1$ substituiert ist.

Bevorzugte Reste $D^2$ der Formel (12) sind beispielsweise die Reste der Formeln (12a), (12b), (12c), (12d) und (12e) mit M der oben angegebenen Bedeutung:

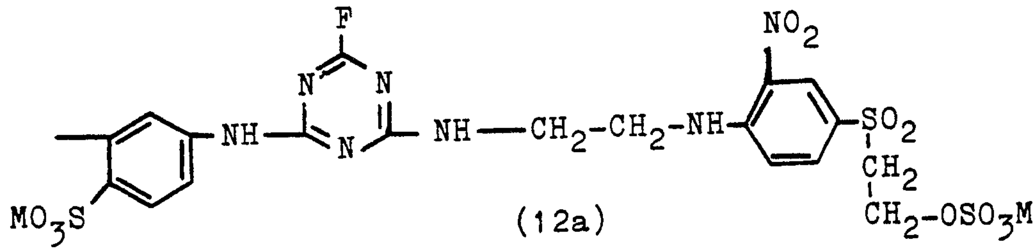

(12a)

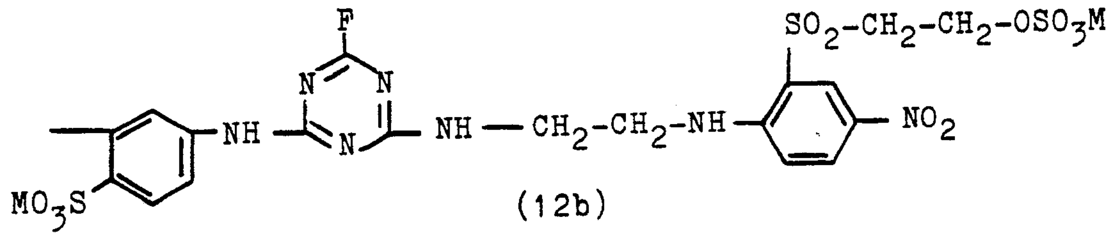

(12b)

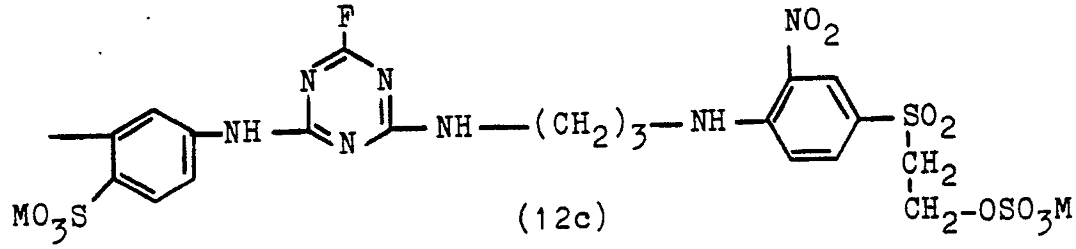

(12c)

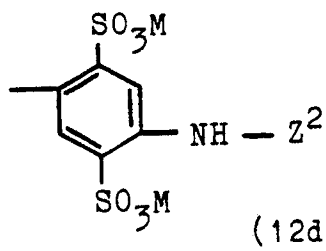

(12d)

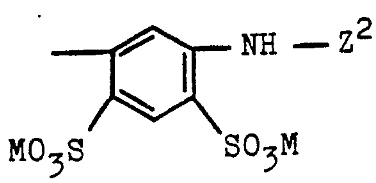

(12e)

in welchen $Z^2$ ein Rest der Formel (1b)

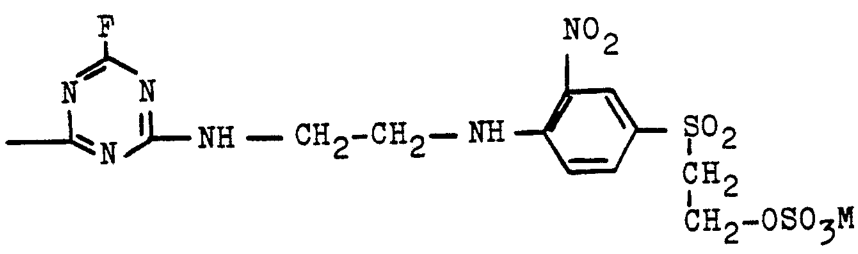

(1b)

mit M der obigen Bedeutung und der obengenannten bevorzugten Stellung der Nitro- und ß-Sulfatoethylsulfonyl-Gruppe.

Faserreaktive Diazokomponentenreste $D^2$ sind auch solche, die eine andere faserreaktive Gruppe als die Gruppe Z enthalten. Solche Reste $D^2$ sind beispielsweise 4-(2-m-Sulfophenylamino-4-fluor-s-triazin-6-yl)-amino-2-sulfo-phenyl, 4-ß-Sulfatoethylsulfonyl-phenyl, 3-ß-Sulfatoethylsulfonylphenyl und 4-Vinylsulfonylphenyl.

Kupplungskomponenten, die erfindungsgemäß die faserreaktive Gruppe der Formel (1a) enthalten, sind beispielsweise Verbindungen der allgemeinen Formel (13a), (13b) und (13c) bzw. deren $Z^1$-freien Vorpro-

dukte:

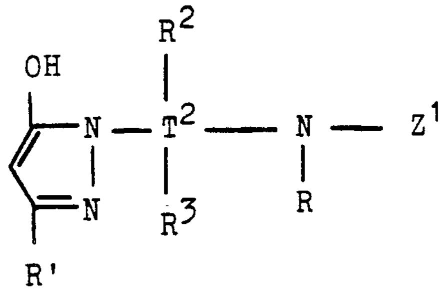

(13a)

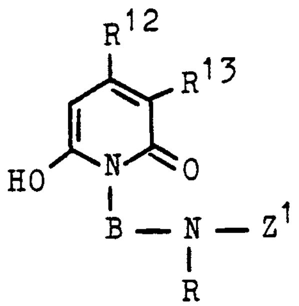

(13b)

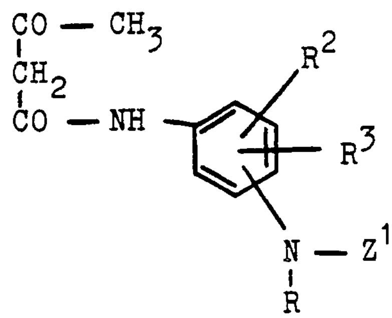

(13c)

in welchen
R, $R^2$, $R^3$, $R^{12}$, $R^{13}$ und $Z^1$ die oben angegebenen Bedeutungen haben und
$T^2$ einen Benzol- oder Naphthalinring bedeutet,
R′ eine Methyl- oder Carboxygruppe ist und
B Alkyl von 1 bis 4 C-Atomen, Benzyl oder Phenethyl oder Phenyl oder im Benzolrest durch Fluor, Chlor, Brom, Methyl, Methoxy, Cyano, Sulfo, Carboxy, Acetyl, Nitro, Carbamoyl und/oder Sulfamoyl substituiertes Benzyl, Phenethyl oder Phenyl ist.

Kupplungskomponenten, die den Verbindungen der allgemeinen Formeln (13a) bis (13c) entsprechen und die anstelle des Restes $Z^1$ ein Wasserstoffatom besitzen, in deren freie Aminogruppe jedoch nach beendeter Kupplung der Rest $Z^1$ eingeführt werden kann, sind beispielsweise:
1-(3′- oder 4′-Aminophenyl)-, 1-(2′-Sulfo-5′-aminophenyl)-und 1-(2′-Methoxy-5′-aminophenyl)-3-carboxy-5-pyrazolon, 1-(3′- oder 4′-Aminophenyl)- und 1-(3′- oder 4′-Nitrophenyl)-3-methyl-5-pyrazolon, 1-(3′- oder 4′-Nitrophenyl)-, 1-(6′-Nitro-4′,8′-disulfonaphthyl-2′)- und 1-(6′-Amino-4′,8′-disulfonaphthyl-2′)-3-carboxy-5-pyrazolon.

Bevorzugte faserreaktive Kupplungskomponenten entsprechend den Formeln (13a) und (13b) sind beispielsweise Verbindungen der Formeln (14a) bis (14h):

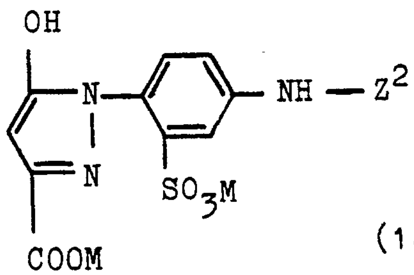

(14a)

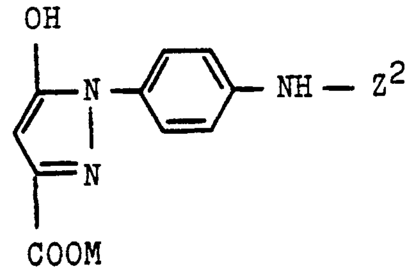

(14b)

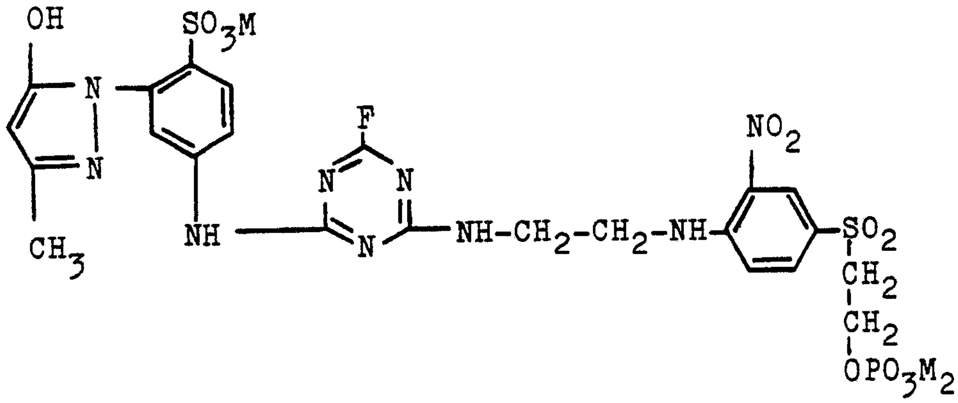

(14c)

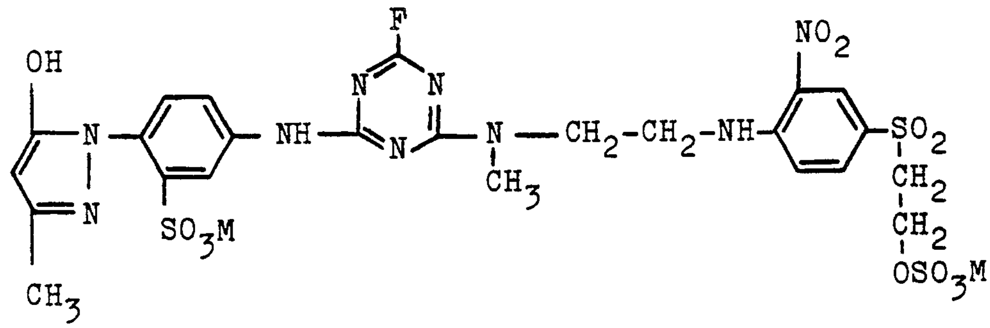

(14d)

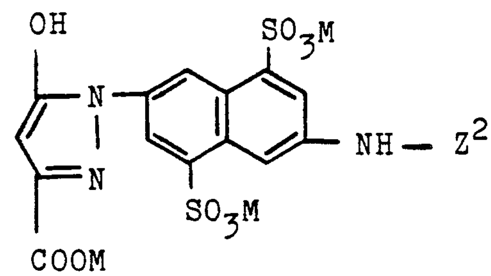

(14e)

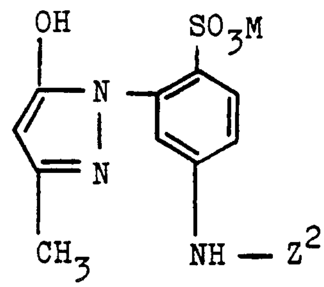

(14f)

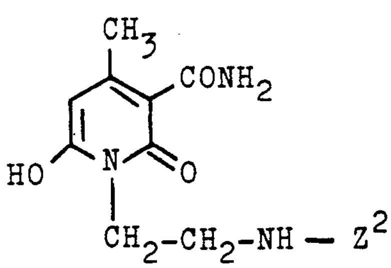

(14g)

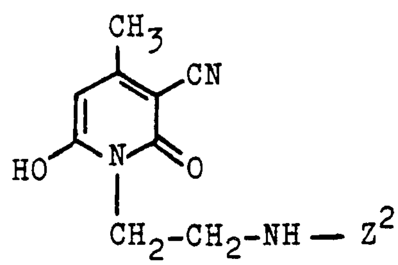

(14h)

in welchen M und $Z^2$ die obengenannten Bedeutungen haben.

Von den erfindungsgemäßen Azofarbstoffen der allgemeinen Formel (1) können insbesondere die Mono- und Disazoverbindungen der allgemeinen Formeln (15), (16a), (16b), (16c), (16d), (16e), (16f) und (17):

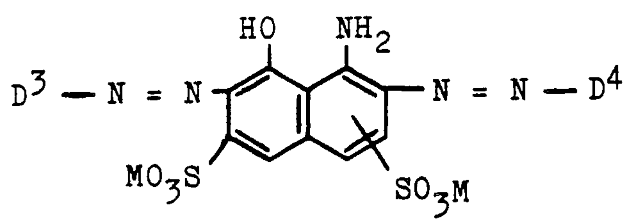

(15)

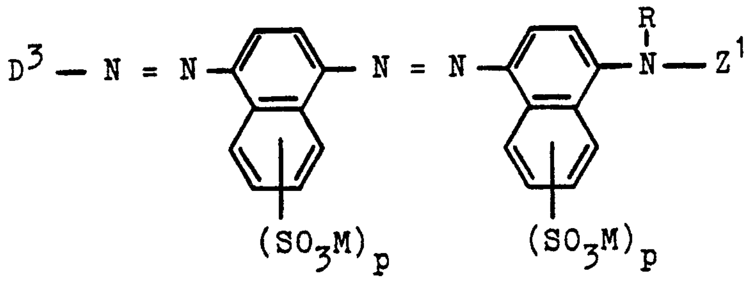

(16a)

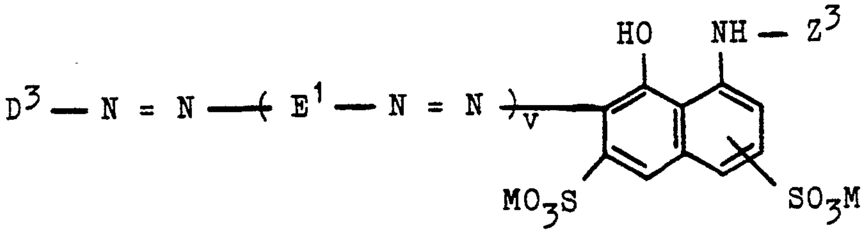

(16b)

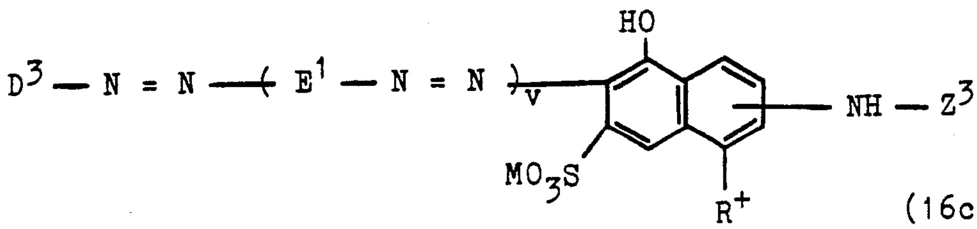

(16c)

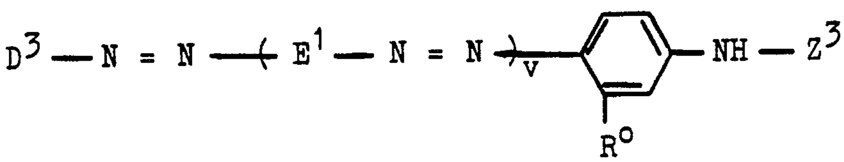

(16d)

$D^2 - N = N - K^2$ (16e)

$D^1 - N = N - K^3$ (16f)

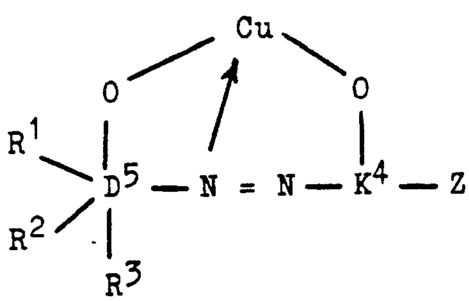

(17)

hervorgehoben werden. In diesen Formeln bedeuten:
In Formel (15) haben $D^3$ und $D^4$ zueinander gleiche oder voneinander verschiedene Bedeutungen und jedes ist ein Rest einer Diazokomponente, von denen mindestens eine eine faserreaktive Gruppe der allgemeinen Formel (1) gebunden enthält, in welcher die R für ein Wasserstoffatom stehen, oder bevorzugt eine faserreaktive Gruppe -NH-$Z^3$ mit $Z^3$ der nachstehend definierten Formel (1c) gebunden enthält, und M hat die obengenannte Bedeutung; bevorzugt sind $D^3$ und $D^4$, zueinander gleich oder voneinander verschieden, jedes ein Rest $D^1$ oder $D^2$ entsprechend den obengenannten und definierten allgemeinen Formeln (10a) und (10b) bzw. (12), insbesondere bevorzugt ein Mono- oder Disulfophenyl-oder Mono-, Di- oder Trisulfonaphthyl-Rest bzw. ein Rest der Formel (12A)

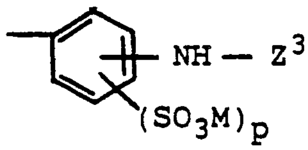
(12A)

mit p und M der obengenannten Bedeutung und $Z^3$ der nachstehend genannten Bedeutung;
in Formel (16a) haben $D^3$, p, R und $Z^1$ die obengenannten Bedeutungen, wobei R bevorzugt ein Wasserstoffatom ist und $D^3$ bevorzugt ein Rest $D^1$ der Formel (10a) oder (10b) ist, insbesondere bevorzugt ein Monosulfo- oder Disulfophenyl- oder ein Monosulfo-, Disulfo- oder Trisulfonaphthylrest ist;
in den Formeln (16b), (16c) und (16d) haben $D^3$, M und v die obengenannten Bedeutungen, wobei $D^3$ bevorzugt ein Rest $D^1$ der Formel (10a) oder (10b) ist, insbesondere bevorzugt ein Monosulfo- oder Disulfophenyl- oder ein Monosulfo-, Disulfo- oder Trisulfonaphthylrest ist,
$E^1$ ist ein Rest der Formel (7A)

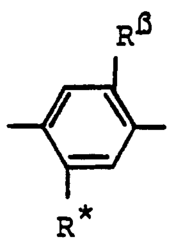
(7A)

in welcher $R^{\beta}$ und $R^*$, zueinander gleich oder voneinander verschieden, jedes ein Wasserstoffatom, die Methyl-, Methoxy- oder Ethoxygruppe bedeutet,
$Z^3$ ist ein Rest der allgemeinen Formel (1c)

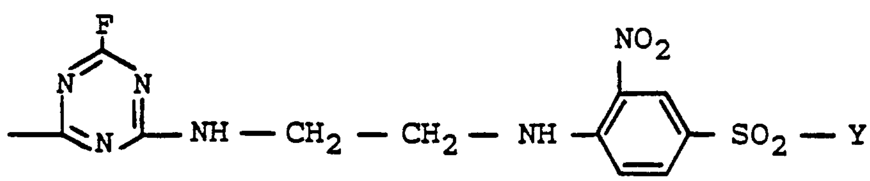
(1c)

mit Y der obengenannten, insbesondere bevorzugten Bedeutung,
$R^{\circ}$ die Acetylamino- oder Ureidogruppe und
$R^*$ ist ein Wasserstoffatom oder eine Sulfogruppe;
in Formel (16e) ist $D^2$ ein Rest der obenangegebenen und definierten allgemeinen Formel (12), wobei im Rest $Z^1$ die Reste R bevorzugt Wasserstoff sind und $Z^1$ insbesondere bevorzugt ein Rest der allgemeinen Formel (1c) ist, und $K^2$ einen Rest der obengenannten und definierten allgemeinen Formel (8a), (8b), (8d) oder (8e) ist;
in Formel (16f) bedeutet $D^1$ einen Rest der allgemeinen Formel (10a) oder (10b) und $K^3$ einen Rest der allgemeinen Formel (14a) bis (14f);
in Formel (17) bedeutet $D^5$ einen Benzol- oder Naphthalinkern, $R^1$, $R^2$ und $R^3$ haben die obengenannten, insbesondere bevorzugten Bedeutungen, wobei im Falle, daß $D^5$ für einen Naphthalinkern steht, $R^2$ ein Wasserstoffatom und $R^3$ ein Wasserstoffatom oder eine Sulfogruppe bedeutet, die Oxygruppen an $D^5$ und $K^4$ stehen in ortho-Stellung zur Azogruppe, $K^4$ ist ein Naphthalinkern, der durch 1 oder 2 Sulfogruppen

substituiert sein kann, bevorzugt substituiert ist, und Z die obengenannte faserreaktive Gruppe der allgemeinen Formel (1a) ist oder bevorzugt eine Gruppe der Formel -NH-$Z^3$ mit $Z^3$ der Bedeutung der allgemeinen Formel (1c) ist.

Von den Farbstoffen der allgemeinen Formel (15) können die in den Beispielen 267, 275, 283 und 288 beschriebenen Farbstoffe hervorgehoben werden, von den Farbstoffen der allgemeinen Formel (16a) diejenigen der Beispiele 185, 218 und 219, von den Farbstoffen der allgemeinen Formel (16b) diejenigen der Beispiele 181, 182, 183, 184 und 200, von den Farbstoffen der Formel (16c) diejenigen der Beispiele 206 und 207, von den Farbstoffen der allgemeinen Formel (16d) diejenigen der Beispiele 1, 2, 11, 17 und 18a und von den Farbstoffen der allgemeinen Formel (16e) diejenigen der Beispiele 20, 21, 22, 23, 38, 43, 50 und 51. Ebenso sind die Farbstoffe der Beispiele 277 und 279 als von besonderem technischen Interesse erwähnenswert.

Die erfindungsgemäßen Farbstoffe lassen sich in üblicher Weise der Synthese von Farbstoffen herstellen, beispielsweise durch Umsetzung von für die entsprechende Farbstoffklasse dem Fachmann geläufigen Farbstoffvorprodukten mit den für diese Farbstoffklasse üblichen Synthesemethoden, wobei mindestens eine dieser Farbstoffvorprodukte eine faserreaktive Gruppe der allgemeinen Formel (1) enthält. So können beispielsweise Mono- und Disazofarbstoffe entsprechend der allgemeinen Formel (3) durch Umsetzung von deren Diazo- und Kupplungskomponenten in der hierfür üblichen Verfahrensweise der Diazotierung und Kupplung synthetisiert werden, wobei die Diazo- oder Kupplungskomponente oder beide (jeweils) eine faserreaktive Gruppe der allgemeinen Formel (1) enthalten. Im Falle der Synthese von Disazofarbstoffen kann bereits die Diazo- oder Kupplungskomponente die zweite Azogruppierung gebunden enthalten. Erfindungsgemäß einsetzbare Diazokomponenten sind die für faserreaktive Azofarbstoffe üblichen aromatischen carbocyclischen und heterocyclischen Aminoverbindungen, die gegebenenfalls die faserreaktive Gruppe der allgemeinen Formel (1) enthalten, und die zur Synthese von faserreaktiven Azofarbstoffen üblichen Kupplungskomponenten, beispielsweise der Naphthol-, Anilin-, Naphthylamin-, Aminonaphthol-, Pyrazolon- und Pyridonreihe, wobei gegebenenfalls die Kupplungskomponente die faserreaktive Gruppe der allgemeinen Formel (1) enthält. Solche Diazo- und Kupplungskomponenten sind beispielsweise die anfangs beschriebenen Verbindungen entsprechend den allgemeinen Formeln (5), (6), (7), (8), (9), (10), (11) und (13) sowie (14).

Die Diazotierungs- und Kupplungsreaktionen erfolgen in üblicher Weise, so die Diazotierung in der Regel bei einer Temperatur zwischen -5° C und +15° C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle der aminogruppenhaltigen Kupplungskomponente und bei einem pH-Wert zwischen 3 und 7,5 im Falle der hydroxygruppenhaltigen Kupplungskomponente und bei einer Temperatur zwischen 0 und 25° C, ebenso bevorzugt in wäßrigem Medium.

Die erfindungsgemäßen Farbstoffe, wie die der allgemeinen Formel (3), können ebenfalls erfindungsgemäß in der Weise hergestellt werden, daß man Cyanurfluorid mit einem eine Aminogruppe der Formel -NHR mit R der obengenannten Bedeutung ein oder mehrmals enthaltenden wasserlöslichen Farbstoff, wie einer Verbindung der allgemeinen Formel (18)

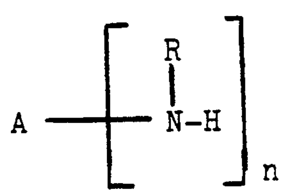

(18)

in welcher A, R und n die obengenannten Bedeutungen haben, und einer Aminoverbindung der allgemeinen Formel (19)

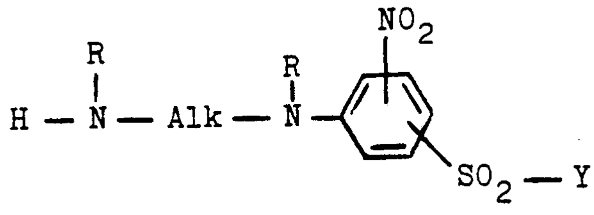

(19)

in welcher Alk, R und Y die obengenannten Bedeutungen haben, in beliebiger Folge umsetzt. So kann man

zunächst eine Aminoverbindung der allgemeinen Formel (18) mit Cyanurfluorid zur Difluortriazinylaminoverbindung der allgemeinen Formel (18a)

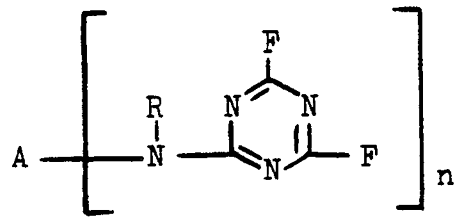

(18a)

mit A, R und n der obengenannten Bedeutung umsetzen, und diese wird durch Reaktion mit einer Aminoverbindung der allgemeinen Formel (19) in äquivalenter Menge in den Endfarbstoff (3) übergeführt, oder man reagiert zunächst eine Aminoverbindung der allgemeinen Formel (19) mit Cyanurfluorid zur Difluortriazinylaminoverbindung der allgemeinen Formel (20)

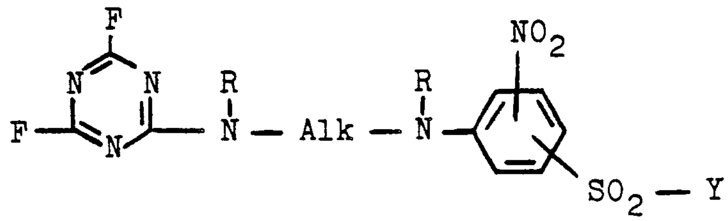

(20)

mit Alk, R und Y der obengenannten Bedeutung und setzt diese in äquivalenter Menge mit der Verbindung der allgemeinen Formel (18) zum Endfarbstoff (3) um. Die Kondensationsreaktionen zwischen Cyanurfluorid bzw. den Difluortriazinylaminoverbindungen (18a) und (20) mit den Aminoverbindungen (18) und/oder (19) können in der üblichen Weise der Umsetzung von Cyanurfluorid bzw. Difluortriazinylaminoverbindungen mit Aminoverbindungen erfolgen, so in organischem oder bevorzugt wäßrig-organischem Medium, insbesondere bevorzugt in wäßrigem Medium unter Zusatz säurebindender Mittel, wie Alkali- oder Erdalkalicarbonaten, Alkali- oder Erdalkalihydrogencarbonaten oder -hydroxiden oder Alkaliacetaten, wobei die Alkali- und Erdalkalimetalle vorzugsweise Natrium, Kalium oder Calcium sind.
Säurebindende Mittel sind ebenso tertiäre Amine, wie beispielsweise Pyridin, Triethylamin oder Chinolin. Sofern diese Kondensationsreaktionen in organischem oder wäßrig-organischem Medium erfolgen, ist das (anteilige) organische Lösemittel Aceton, Dioxan und Dimethylformamid.

Die Kondensationsreaktionen zwischen Cyanurfluorid und den Aminoverbindungen erfolgen in der Regel bei einer Temperatur zwischen -10° C und +40° C, vorzugsweise zwischen -5° C und +30° C, sowie bei einem pH-Wert zwischen 4,5 und 8,0, bevorzugt zwischen 5 und 7. Die Umsetzung der Difluortriazinylaminoverbindungen der allgemeinen Formel (18a) oder (20) mit einer Aminoverbindung der allgemeinen Formel (18) bzw. (19) erfolgt beispielsweise bei einer Temperatur zwischen -10° C und 60° C, bevorzugt zwischen 0 und 5° C, und bei einem pH-Wert zwischen 3 und 10,5, bevorzugt zwischen 4 und 8, wobei darauf zu achten ist, daß die faserreaktive Gruppierung im schwach alkalischen Bereich nicht geschädigt wird.

Bei der erfindungsgemäßen Synthese von Schwermetallkomplex-Azofarbstoffen, beispielsweise solchen entsprechend der allgemeinen Formeln (4c) und (17), geht man in der Regel von solchen schwermetallfreien Azoverbindungen aus, die in der Kupplungskomponente eine phenolische oder naphtholische Hydroxygruppe in ortho-Stellung bzw. vicinaler Stellung zur Azogruppe gebunden enthalten und deren Diazokomponentenrest in ortho-Stellung zur Azogruppe ein Wasserstoffatom oder eine Hydroxygruppe oder eine niedere Alkoxygruppe, wie Methoxygruppe, gebunden enthält und die zudem einen Acylaminorest gebunden enthalten, wie einen Acetylaminorest entsprechend der allgemeinen Formel -N(R)-Acyl , in welcher Acyl für den Acylrest einer organischen Säure, wie einer niederen Alkancarbonsäure, steht und R die obengenannte Bedeutung besitzt. So geht man beispielsweise von einer Ausgangsverbindung entsprechend der allgemeinen Formel (21)

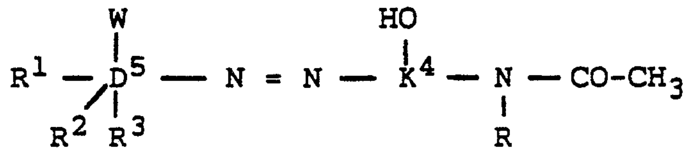 (21)

aus, in welcher $R^1$, $R^2$, $R^3$, $D^5$, $K^4$ und R die obengenannten Bedeutungen haben und W ein Wasserstoffatom oder eine in ortho-Stellung zur Azogruppe an $D^5$ gebundene Hydroxy- oder Methoxygruppe ist, und setzt diese acylaminogruppenhaltige Ausgangs-Azoverbindung analog bekannten und üblichen Verfahrensweisen mit einem Schwermetall-abgebenden Mittel, wie einem Schwermetallsalz, um oder unterwirft sie im Falle der Bildung eines Kupferkomplex-Azofarbstoffes auch einer auf üblichem Wege durchzuführenden oxidativen oder entalkylierenden Kupferungsreaktion. Die nun erhaltenen Schwermetallkomplex-Azoverbindungen mit der Acylaminogruppe können sodann analog bekannten Verfahrensweisen unter Verseifung (Hydrolyse) der Acylaminogruppe zur Aminogruppe mit Cyanurfluorid und der faserreaktiven Aminoverbindung entsprechend der allgemeinen Formel (19) zu den erfindungsgemäßen Farbstoffen der allgemeinen Formel (3) umgesetzt werden.

Die Ausgangs-Aminoverbindungen entsprechend der allgemeinen Formel (19) sind aus Beispiel 5 der US-PS 3 268 548 bekannt bzw. können analog der dort angegebenen Verfahrensweise hergestellt werden. Die ß-Hydroxyethylsulfonyl-Verbindung wird anschließend verestert, so in die entsprechende ß-Sulfatoethylsulfonyl- oder ß-Phosphatoethyl-sulfonyl-Verbindung mittels üblicher Sulfatierungs- und Phosphatierungsmittel; solche Methoden sind an sich bekannt und können analog angewendet werden.

Die erfindungsgemäßen Farbstoffe, wie insbesondere die entsprechend der allgemeinen Formel (3), eignen sich als faserreaktive Farbstoffe zum Färben und Bedrucken von hydroxygruppenhaltigen Fasern, insbesondere von Baumwolle, ebenso auch für synthetische oder natürliche Polyamidfasern wie Wolle. Als Färbeverfahren eignen sich die bekannten Färbe- und Druckverfahren für faserreaktive Farbstoffe, insbesondere solche für faserreaktive Farbstoffe, die eine Kombination aus den faserreaktiven Gruppen der Fluortriazin- und Vinylsulfonreihe besitzen. Solche Verfahrensweisen sind zahlreich in der Allgemein- und Patentliteratur beschrieben, so beispielsweise in der europäischen Patentanmeldungs-Veröffentlichung Nr. 0 196 536A1. Insbesondere sind die erfindungsgemäßen Farbstoffe im Ausziehverfahren bei 40 bis 80 °C und im Kaltverweilverfahren mit Vorteil anwendbar. Die Applikation ist in einem weiten Temperaturbereich möglich, und die Farbstoffe zeichnen sich durch eine hohe Farbtiefe und einen hohen Fixiergrad aus; deren Färbungen und Drucke besitzen hohe Echtheiten.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalisalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel1**

Eine auf üblichem Wege aus 38,3 Teilen 3,6,8-Trisulfo-2-aminonaphthalin als Diazokomponente und 15,1 Teilen 3-Ureido-anilin als Kupplungskomponente hergestellte Azoverbindung wird in wäßriger Lösung bei 0 °C und einem pH-Wert zwischen 5 und 7 langsam mit 14,2 Teilen Cyanurfluorid versetzt. Danach gibt man 37 Teile 4-(ß-Sulfatoethylsulfonyl)-2-nitro-1-(ß-aminoethylamino)-benzol hinzu und führt die zweite Kondensationsreaktion bei einem pH-Wert zwischen 6,5 und 7,5 und einer Temperatur zwischen 0 und 10 °C durch.

Die gebildete erfindungsgemäße Monoazoverbindung wird aus der Syntheselösung mittels Natriumchlorid ausgesalzen, isoliert und getrocknet. Man erhält ein rotstichig gelbes, elektrolytsalzhaltiges (vorwiegend Natriumchlorid-haltiges) Pulver des Natriumsalzes der Verbindung der Formel

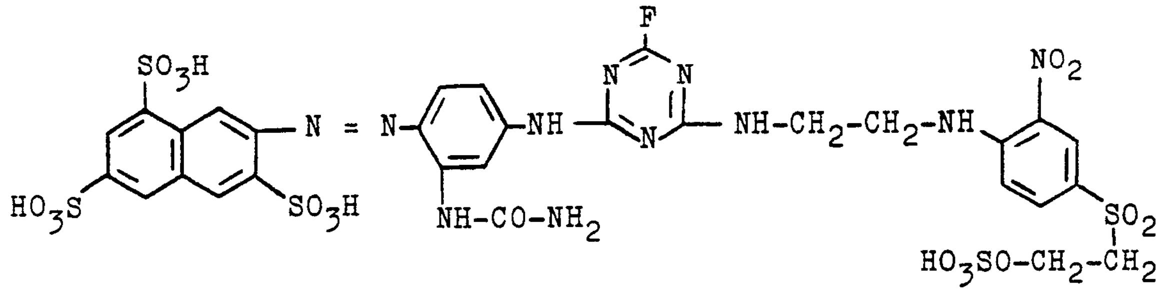

($\lambda_{max}$ = 421 nm)

das sehr gute faserreaktive Farbstoffeigenschaften besitzt und beispielsweise Cellulosefasermaterialien nach den für faserreaktive Farbstoffe üblichen Applikations- und Fixiermethoden in kräftigen, klaren, rotstichig gelben Tönen mit hohen Auszieh- und Fixierwerten färbt. Die mit dieser erfindungsgemäßen Verbindung erhältlichen Färbungen und Drucke zeigen sehr gute Lichtechtheiten und Naßechtheitseigenschaften, wie insbesondere sehr gute Waschechtheiten und gute Naßlichtechtheiten, von denen insbesondere die gute alkalische Schweißlichtechtheit hervorgehoben werden kann.

**Beispiele 2 bis 18**

Weitere erfindungsgemäße Farbstoffe entsprechend einer allgemeinen Formel (A)

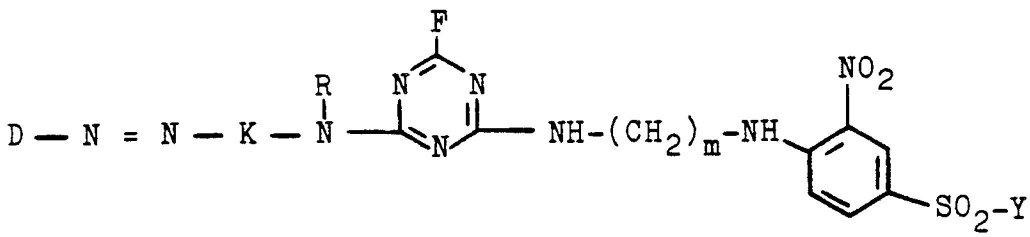

(A)

sind in den nachfolgenden Tabellenbeispielen mit Hilfe der dort angegebenen Komponenten beschrieben. Sie lassen sich in erfindungsgemäßer Weise, beispielsweise analog dem Ausführungsbeispiel 1, unter Anwendung der von einer faserreaktiven Gruppe freien Diazokomponente $D\text{-}NH_2$ , der Kupplungskomponente H-K-NHR , Cyanurfluorid und einem Amin entsprechend der in der Beschreibung angegebenen allgemeinen Formel (19) herstellen.
Diese erfindungsgemäßen Monoazoverbindungen (Farbstoffe) besitzen ebenfalls sehr gute faserreaktive Farbstoffeigenschaften und färben insbesondere Cellulosefasermaterialien in den für das jeweilige Tabellenbeispiel angegebenen kräftigen, klaren, echten Farbtönen.

| Bsp. | Diazokomponente $D-NH_2$ | Kupplungskomponente H-K-NHR | m | Rest Y | Farbton |
|---|---|---|---|---|---|
| 2 | 2-Amino-3,6,8-trisulfo-naphthalin | N-(3-Aminophenyl)-harnstoff | 3 | ß-Sulfato-ethyl | goldgelb |
| 3 | dito | dito | 2 | ß-Phosphato-ethyl | goldgelb |
| 4 | dito | N-Phenyl-N'-(3-aminophenyl)-harnstoff | 2 | ß-Phosphato-ethyl | goldgelb |
| 5 | dito | N-(3-Aminophenyl)-N'-methyl-harnstoff | 2 | ß-Sulfato-ethyl | goldgelb |
| 6 | dito | 3-Acetylamino-anilin | 2 | ß-Sulfato-ethyl | goldgelb |
| 7 | dito | 3-Propionylamino-anilin | 3 | ß-Phosphato-ethyl | goldgelb |
| 8 | 2-Amino-6,8-disulfo-naphthalin | dito | 2 | ß-Sulfato-ethyl | goldgelb |
| 9 | dito | 3-Acetylamino-anilin | 2 | dito | goldgelb |
| 10 | dito | N-(3-Aminophenyl)-harnstoff | 2 | dito | goldgelb |
| 11 | 2-Amino-4,8-disulfo-naphthalin | dito | 2 | ß-Sulfato-ethyl | goldgelb |
| 12 | dito | N-Cyclohexyl-N'-(3-amino-phenyl)-harnstoff | 3 | ß-Phosphato-ethyl | goldgelb |
| 13 | dito | 3-(Methylsulfonylamino)-anilin | 2 | ß-Sulfato-ethyl | goldgelb |
| 14 | 2-Amino-1,6-disulfo-naphthalin | N-(3-Aminophenyl)-harnstoff | 2 | ß-Sulfato-ethyl | goldgelb |

| Bsp. | Diazokomponente $D-NH_2$ | Kupplungskomponente H-K-NHR | m | Rest Y | Farbton |
|---|---|---|---|---|---|
| 15 | 2-Amino-1,6-disulfo-naphthalin | N-(3-Aminophenyl)-N'-methyl-harnstoff | 2 | ß-Sulfato-ethyl | goldgelb |
| 15a | 2-Amino-4,8-disulfo-naphthalin | 3-Acetylamino-anilin | 2 | dito | goldgelb |
| 16 | 2-Amino-3,6,8-trisulfo-naphthalin | N-(3-Aminophenyl)-harnstoff | 3 | Vinyl | goldgelb |
| 17 | dito | dito | 2 | Vinyl | goldgelb |
| 18 | dito | 3-Acetylamino-anilin | 2 | Vinyl | goldgelb |

**Beispiel 19**

Zur Herstellung einer erfindungsgemäßen Monoazoverbindung verfährt man gemäß der Verfahrensweise des Beispieles 1, setzt jedoch anstelle von 4-(ß-Sulfatoethylsulfonyl)-2-nitro-1-(ß-aminoethylamino)-benzol die äquivalente Menge an 2-(ß-Sulfatoethylsulfonyl)-4-nitro-1-(γ-aminopropylamino)-benzol ein; man erhält die erfindungsgemäße Azoverbindung der Formel

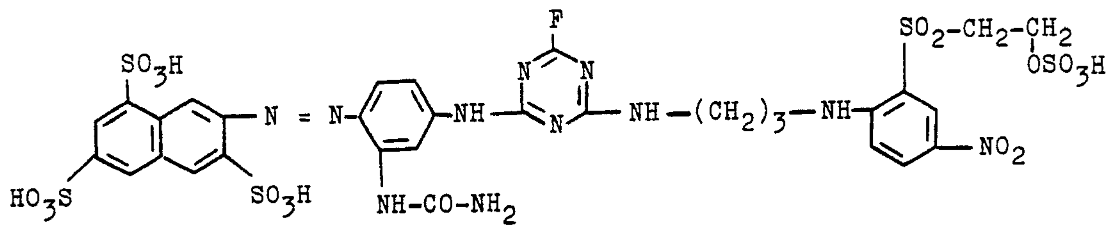

($\lambda_{max}$ = 421 nm)

in Form ihres Alkalimetallsalzes mit den für die erfindungsgemäße Azoverbindung des Beispieles 1 angegebenen guten Farbstoffeigenschaften.

**Beispiele 19a bis 19t**

Weitere erfindungsgemäße Farbstoffe entsprechend einer allgemeinen Formel (A-i)

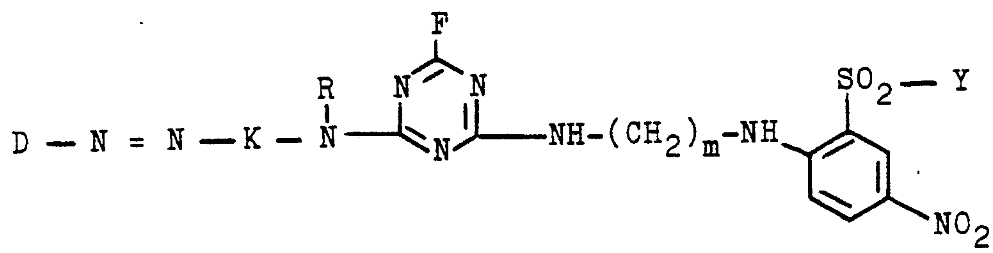

(A-i)

sind in den nachfolgenden Tabellenbeispielen mit Hilfe der dort angegebenen Komponenten beschrieben. Sie lassen sich in erfindungsgemäßer Weise, beispielsweise analog dem Ausführungsbeispiel 1, unter Anwendung der von einer faserreaktiven Gruppe freien Diazokomponente D-$NH_2$ , der Kupplungskomponente H-K-NHR , Cyanurfluorid und einem Amin entsprechend der in der Beschreibung angegebenen allgemeinen Formel (19), herstellen.

Diese erfindungsgemäßen Monoazoverbindungen (Farbstoffe) besitzen ebenfalls sehr gute faserreaktive Farbstoffeigenschaften-und färben insbesondere Cellulosefasermaterialien in den für das jeweilige Tabellenbeispiel angegebenen kräftigen, klaren, echten Farbtönen.

| Bsp. | Diazokomponente $D-NH_2$ | Kupplungskomponente H-K-NHR | m | Rest Y | Farbton |
|---|---|---|---|---|---|
| 19a | 2-Amino-3,6,8-trisulfo-naphthalin | N-(3-Aminophenyl)-harnstoff | 2 | ß-Sulfato-ethyl | goldgelb |
| 19b | dito | dito | 2 | ß-Phosphato-ethyl | goldgelb |
| 19c | dito | N-Phenyl-N'-(3-aminophenyl)-harnstoff | 2 | ß-Phosphato-ethyl | goldgelb |
| 19d | dito | N-(3-Aminophenyl)-N'-methyl-harnstoff | 2 | ß-Sulfato-ethyl | goldgelb |
| 19e | dito | 3-Acetylamino-anilin | 2 | ß-Sulfato-ethyl | goldgelb |
| 19f | dito | 3-Propionylamino-anilin | 3 | ß-Phosphato-ethyl | goldgelb |
| 19g | 2-Amino-6,8-disulfo-naphthalin | dito | 2 | ß-Sulfato-ethyl | goldgelb |
| 19h | dito | 3-Acetylamino-anilin | 2 | dito | goldgelb |
| 19j | dito | N-(3-Aminophenyl)-harnstoff | 2 | dito | goldgelb |
| 19k | 2-Amino-4,8-disulfo-naphthalin | dito | 2 | ß-Sulfato-ethyl | goldgelb |
| 19m | dito | N-Cyclohexyl-N'-(3-amino-phenyl)-harnstoff | 3 | ß-Phosphato-ethyl | goldgelb |
| 19n | dito | 3-(Methylsulfonylamino)-anilin | 2 | ß-Sulfato-ethyl | goldgelb |
| 19p | 2-Amino-1,6-disulfo-naphthalin | N-(3-Aminophenyl)-harnstoff | 2 | ß-Sulfato-ethyl | goldgelb |

| Bsp. | Diazokomponente $D-NH_2$ | Kupplungskomponente H-K-NHR | m | Rest Y | Farbton |
|---|---|---|---|---|---|
| 19q | dito | N-(3-Aminophenyl)-N'-methyl-harnstoff | 2 | dito | goldgelb |
| 19r | 2-Amino-3,6,8-trisulfo-naphthalin | N-(3-Aminophenyl)-harnstoff | 3 | Vinyl | goldgelb |
| 19s | dito | dito | 2 | Vinyl | goldgelb |
| 19t | dito | 3-Acetylamino-anilin | 2 | Vinyl | goldgelb |

**Beispiel 20**

23 Teile 3-Amino-4-sulfo-acetanilid werden wie üblich diazotiert und auf 23,3 Teile N-(ß-Sulfoethyl)-4-methyl-6-hydroxy-2-pyridon gekuppelt. Die erhaltene Azoverbindung wird mittels wäßriger Schwefelsäure in der Wärme entacetyliert und anschließend auf einen pH-Wert von etwa 2 gestellt. Die gebildete Azoverbindung wird mittels Natriumchlorid ausgesalzen, abfiltriert, in 500 Teilen Wasser angerührt und bei einem pH-Wert von 7 mittels Natriumcarbonat gelöst. Die Lösung der Azoverbindung wird sodann bei einer Temperatur von 0° C und unter Einhaltung eines pH-Wertes zwischen 5 und 7 langsam mit 14,2 Teilen Cyanurfluorid versetzt. Anschließend gibt man rasch 37 Teile 2(ß-Sulfatoethylsulfonyl)-4-nitro-1-(ß-aminoethylamino)-benzol hinzu und führt die Umsetzung bei einem pH-Wert zwischen 6,5 und 7,5 und einer Temperatur zwischen 0 und 10° C durch.

Die erhaltene erfindungsgemäße Azoverbindung wird in Form ihres Alkalimetallsalzes, wie Natriumsalzes, auf üblichem Wege aus der wäßrigen Syntheselösung isoliert, beispielsweise durch Sprühtrocknung oder durch Aussalzen mit Natriumchlorid. Die erfindungsgemäße Verbindung besitzt, in Form der freien Säure geschrieben, die Formel

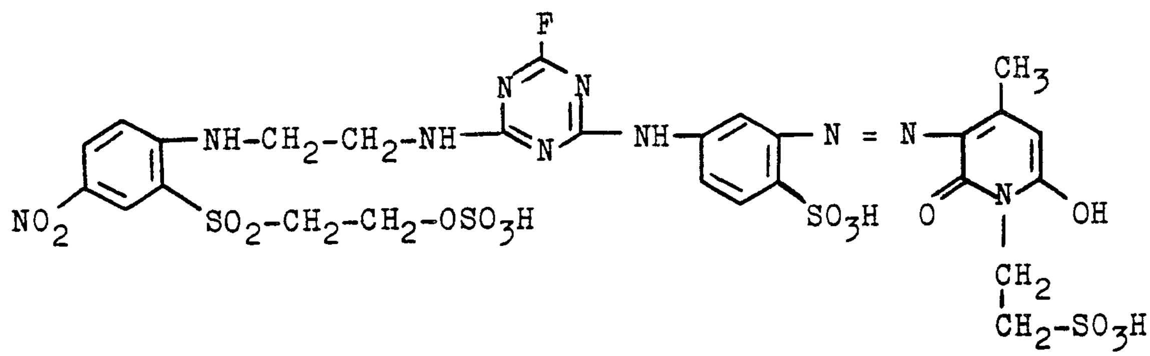

($\lambda_{max}$ = 416 nm)

das sehr gute Farbstoffeigenschaften besitzt und beispielsweise auf Cellulosefasermaterialien kräftige klare Färbungen und Drucke von grünstichig gelbem Farbton mit sehr guten Licht- und Naßechtheitseigenschaften liefert.

**Beispiel 21**

Man verfährt zur Herstellung einer erfindungsgemäßen Azoverbindung gemäß der Verfahrensweise des Beispieles 20, ersetzt jedoch die 37 Teile 2-(ß-Sulfatoethylsulfonyl)-4-nitro-1-(ß-aminoethylamino)-benzol durch die gleiche Menge an 4-(ß-Sulfatoethylsulfonyl)-2-nitro-1-(ß-aminoethylamino)-benzol, und erhält das Alkalimetallsalz der Verbindung der Formel

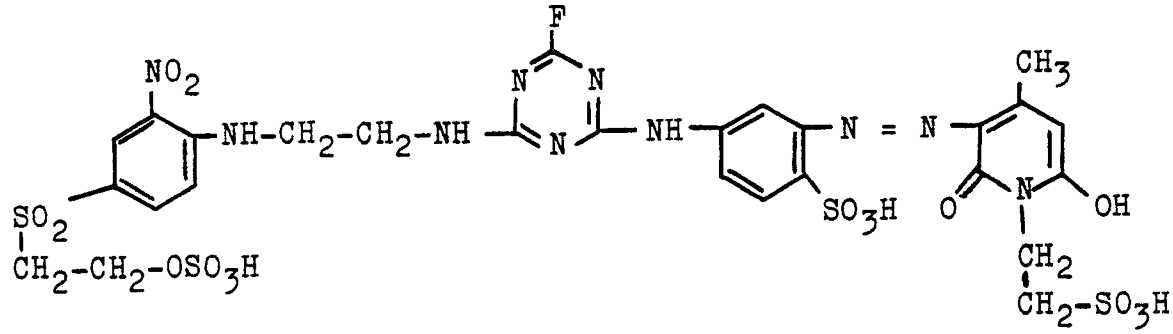

($\lambda_{max}$ = 416 nm)

das sehr gute Farbstoffeigenschaften besitzt und beispielsweise auf Cellulosefasermaterialien kräftige klare Färbungen und Drucke von grünstichig gelbem Farbton mit sehr guten Licht- und Naßechtheitseigenschaften liefert.

**Beispiele 21a bis 21d**

Zur Herstellung von erfindungsgemäßen Monoazoverbindungen verfährt man gemäß der Verfahrensweise des Beispieles 19, ersetzt jedoch das 2-(ß-sulfatoethylsulfonyl)-4-nitro-1-(ß-aminoethylamino)-benzol durch die äquivalente Menge an einer der nachfolgend in den Tabellenbeispielen angegebenen Ausgangsaminoverbindungen entsprechend der Formel (19). Man erhält die entsprechenden erfindungsgemäßen Monoazoverbindungen, die auf den in der Beschreibung genannten Materialien, insbesondere Cellulosefasermaterialien, farbstarke echte Färbungen mit den in dem jeweiligen Tabellenbeispiel angegebenen Farbton liefern:

| Bsp. | Ausgangs-Aminoverbindung (18) | Farbton der Azoverbdg.(1) |
|---|---|---|
| 21a | 4-(β-Sulfatoethylsulfonyl)-2-nitro-1-(γ-aminopropylamino)-benzol | grünstichig gelb |
| 21b | 2-(β-Sulfatoethylsulfonyl)-4-nitro-1-(γ-aminopropylamino)-benzol | dito |
| 21c | 2-(β-Sulfatoethylsulfonyl)-4-nitro-1-[γ-(N-cyclohexylamino)-propylamino]-benzol | dito |
| 21d | 4-(β-Sulfatoethylsulfonyl)-2-nitro-1-[γ-(N-cyclohexylamino)-propylamino]-benzol | dito |

**Beispiel 22**

Zu einer gemäß den Angaben von Beispiel 20 hergestellten wäßrigen Lösung von 43,3 Teilen N-(ß-Sulfoethyl)-4-methyl-5-(2′-sulfo-5′-amino-phenylazo)-6-hydroxy-2-pyridon gibt man bei 0 °C und einem pH-Wert von 7 langsam 14,2 Teile Cyanurfluorid; die Kondensationsreaktion ist in wenigen Minuten beendet. Man gibt sodann 37 Teile 4-(ß-Sulfatoethylsulfonyl)-2-nitro-1-(ß-aminoethylamino)-benzol hinzu und führt die zweite Kondensationsreaktion bei einem pH-Wert zwischen 6,5 und 7,5 und einer Temperatur zwischen 0 und 10 °C durch.

Die gebildete erfindungsgemäße Azoverbindung wird mit Kaliumchlorid ausgesalzen und isoliert. Sie besitzt, in Form der freien Säure geschrieben, die Formel

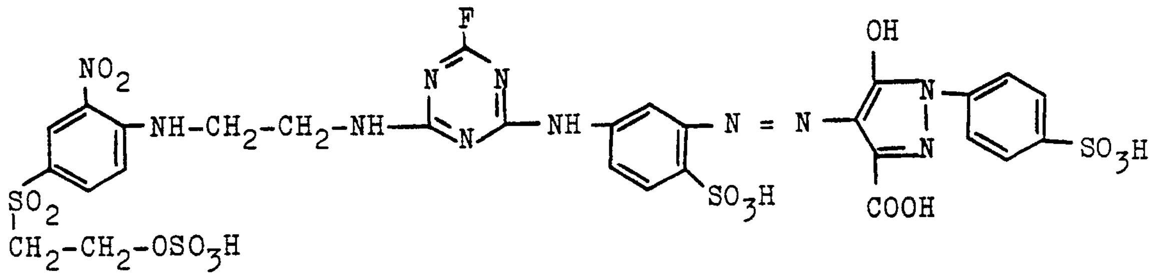

$(\lambda_{max} = 403\ nm)$

und zeigt sehr gute Farbstoffeigenschaften. Die Verbindung färbt beispielsweise Cellulosefasermaterialien nach den in der Technik üblichen Applikations- und Fixierverfahren für faserreaktive Farbstoffe in echten, gelben Tönen.

## Beispiel 23

Man setzt in wäßrig-neutrale Lösung 37 Teile 4-(ß-Sulfatoethylsulfonyl)-2-nitro-1-(ß-aminoethylamino)-benzol bei 0°C mit 14,2 Teilen Cyanurfluorid, die langsam hinzugegeben werden, um; nach wenigen Minuten ist die Reaktion beendet, und man gibt zu dem Ansatz eine neutrale wäßrige Lösung von 18,8 Teilen 1,3-Diaminobenzol-4-sulfonsäure und führt die zweite Kondensationsreaktion bei 0 bis 10 °C und einem pH-Wert von 6,5 durch. Die erhaltene Verbindung wird nach Zugabe einer äquimolaren Menge Natriumnitrit durch langsame Zugabe in schwefelsaures Eiswasser diazotiert und mit 37 Teilen 1-Acetylamino-3,6-disulfo-8-naphthol bei einem pH-Wert zwischen 5,5 und 6,5 und einer Temperatur von etwa 20°C gekuppelt.

Die erfindungsgemäße Monoazoverbindung wird in üblicher Weise als Alkalimetallsalz isoliert; sie besitzt, in Form der freien Säure geschrieben, die Formel

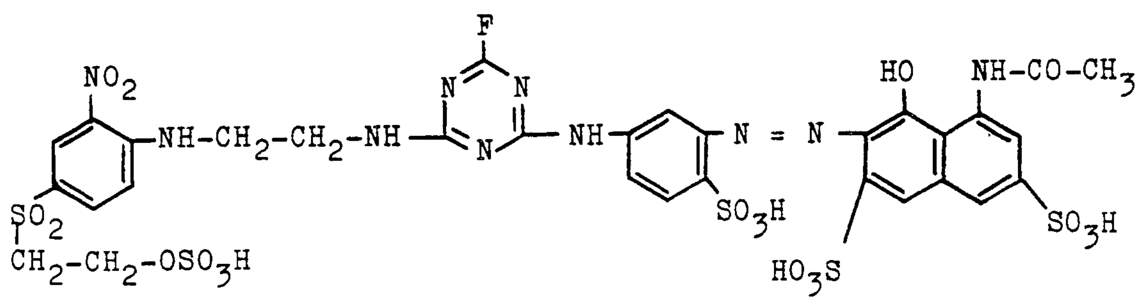

$(\lambda_{max} = 504\ nm)$

und färbt beispielsweise Baumwolle nach den für faserreaktive Farbstoffe üblichen Applikations- und Fixierverfahren in brillanten, echten, roten Farbtönen.

## Beispiele 24 bis 65

In den nachfolgenden Tabellenbeispielen sind weitere erfindungsgemäße Verbindungen entsprechend einer allgemeinen Formel (B)

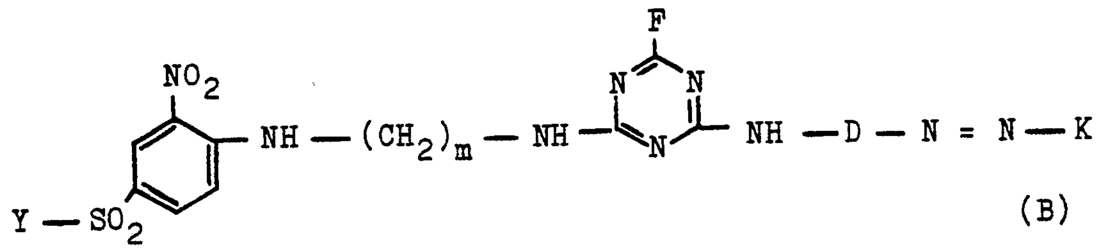

(B)

mit Hilfe der dort angegebenen Formelreste bzw. Komponenten beschrieben. Sie lassen sich in erfindungsgemäßer Weise, beispielsweise analog einem der obigen Ausführungsbeispiele, aus diesen Komponenten (Cyanurfluorid, einer Diaminobenzolverbindung entsprechend der allgemeinen Formel $H_2N$-D-$NH_2$ , einer Aminoverbindung entsprechend der in der Beschreibung angegebenen allgemeinen Formel (19) und der Kupplungskomponente H-K) herstellen. Diese neuen Verbindungen entsprechend der allgemeinen Formel (1) besitzen ebenfalls sehr gute faserreaktive Farbstoffeigenschaften und färben die in der Beschreibung angegebenen Fasermaterialien, insbesondere Cellulosefasermaterialien, in kräftigen echten Tönen (die Farbtöne in den Tabellenbeispielen beziehen sich auf Färbungen auf Cellulosefasermaterialien).

| Bsp. | Rest D des Diamins $H_2N-D-NH_2$ | Kupplungskomponente H-K | m | Rest Y | Farbton |
|---|---|---|---|---|---|
| 24 | 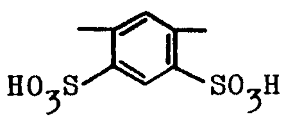 | N-(ß-Sulfatoethyl)-4-methyl-5-carbamoyl-6-hydroxy-2-pyridon | 3 | ß-Sulfato-ethyl | grünstichig gelb |
| 25 | dito | N-(γ-Methoxypropyl)-4-methyl-6-hydroxy-2-pyridon | 2 | dito | dito |
| 26 | 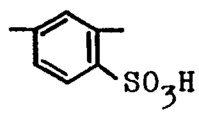 | 4-Methyl-5-sulfomethyl-6-hydroxy-2-pyridon | 2 | dito | dito |
| 27 | dito | N-(γ-Methoxypropyl)-4-methyl-5-sulfomethyl-6-hydroxy-2-pyridon | 2 | dito | dito |
| 28 | dito | N-(ß-Sulfatoethyl)-4-methyl-6-hydroxy-2-pyridon | 2 | dito | dito |
| 29 | 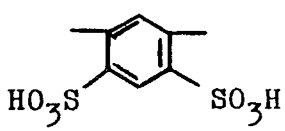 | N-(ß-Phosphatoethyl)-4-methyl-6-hydroxy-2-pyridon | 2 | ß-Phosphato-ethyl | dito |
| 30 | dito | N-(ß-Sulfoethyl)-4-methyl-6-hydroxy-2-pyridon | 3 | dito | dito |
| 31 | dito | 1-(2'-Methyl-4'-sulfo-phenyl)-3-carboxy-5-pyrazolon | 2 | ß-Sulfato-ethyl | gelb |
| 32 | dito | dito | 3 | dito | gelb |

| Bsp. | Rest D des Diamins $H_2N-D-NH_2$ | Kupplungskomponente H-K | m | Rest Y | Farbton |
|---|---|---|---|---|---|
| 33 | dito | 1-(2'-Methyl-4'-sulfo-phenyl)-3-carboxy-5-pyrazolon | 2 | ß-Phosphato-ethyl | gelb |
| 34 | dito | 3,6-Disulfo-1-naphthol | 2 | ß-Sulfato-ethyl | orange |
| 35 | dito | 3,8-Disulfo-1-naphthol | 2 | ß-Phosphato-ethyl | scharlach |
| 36 | dito | 4,8-Disulfo-1-naphthol | 3 | ß-Sulfato-ethyl | gelbstichig rot |
| 37 | dito | 3,3'-Disulfo-7-(phenylamino)-1-naphthol | 2 | dito | braun |
| 38 | dito | 1-(4'-Sulfophenyl)-3-carboxy-5-pyrazolon | 3 | ß-Phosphato-ethyl | gelb |
| 39 | 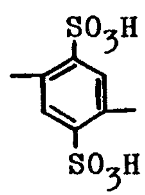 | dito | 2 | dito | gelb |
| 40 | 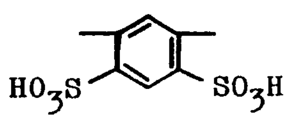 | 1-Phenyl-3-carboxy-5-pyrazolon | 2 | ß-Sulfato-ethyl | gelb |
| 41 | dito | dito | 3 | dito | gelb |
| 42 | 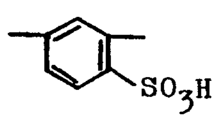 | 3,6-Disulfo-1-naphthol | 2 | Vinyl | gelb |

| Bsp. | Rest D des Diamins $H_2N-D-NH_2$ | Kupplungskomponente H-K | m | Rest Y | Farbton |
|---|---|---|---|---|---|
| 43 | dito | 1-(4'-Sulfophenyl)-3-carboxy-5-pyrazolon | 2 | Vinyl | gelb |
| 44 | dito | N-(ß-Sulfoethyl)-4-methyl-5-cyano-6-hydroxy-2-pyridon | 2 | Vinyl | grünstichig gelb |
| 45 | dito | N-(ß-Sulfoethyl)-4-methyl-5-sulfomethyl-6-hydroxy-2-pyridon | 2 | ß-Sulfato-ethyl | dito |
| 46 | dito | N-(ß-Sulfoethyl)-4-methyl-5-sulfo-6-hydroxy-2-pyridon | 2 | dito | dito |
| 47 | 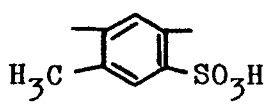 | dito | 2 | ß-Phosphato-ethyl | dito |
| 48 | 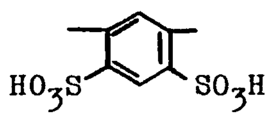 | N-(ß-Sulfoethyl)-4-methyl-5-cyano-6-hydroxy-2-pyridon | 2 | ß-Sulfato-ethyl | dito |
| 49 | 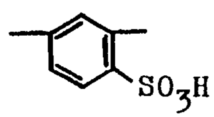 | 1-Acetylamino-3,6-disulfo-8-naphthol | 3 | dito | rot |
| 50 | dito | 1-Benzoylamino-3,6-disulfo-8-naphthol | 2 | dito | rot |
| 51 | dito | 1-[(N'-Cyclohexyl)-ureido]-3,6-disulfo-8-naphthol | 2 | dito | rot |
| 52 | dito | 4,8-Disulfo-1-naphthol | 2 | dito | rot |
| 53 | dito | 4-Sulfo-1-naphthol | 2 | dito | rot |
| 54 | dito | dito | 2 | ß-(Methyl-sulfonyloxy)-ethyl | rot |

| Bsp. | Rest D des Diamins $H_2N-D-NH_2$ | Kupplungskomponente H-K | m | Rest Y | Farbton |
|---|---|---|---|---|---|
| 55 | 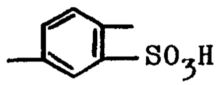 | 1-Acetylamino-3,6-disulfo-8-naphthol | 2 | ß-Sulfato-ethyl | rot |
| 56 | dito | dito | 2 | ß-Phosphato-ethyl | rot |
| 57 | dito | dito | 3 | ß-Sulfato-ethyl | rot |
| 58 | 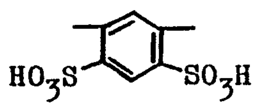 | 1-Benzoylamino-3,6-disulfo-8-naphthol | 2 | dito | rot |
| 59 | dito | 1-Benzoylamino-4,6-disulfo-8-naphthol | 2 | dito | rot |
| 60 | dito | dito | 2 | ß-Phosphato-ethyl | rot |
| 61 | 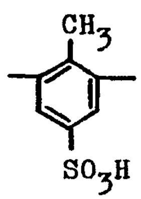 | dito | 2 | dito | rot |
| 62 | dito | dito | 2 | ß-Sulfato-ethyl | rot |
| 63 | 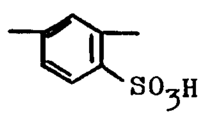 | 1-Acetylamino-3,6-disulfo-8-naphthol | 2 | Vinyl | rot |
| 64 | dito | 1-Benzoylamino-3,6-disulfo-8-naphthol | 2 | Vinyl | rot |
| 65 | dito | 1-Benzoylamino-4,6-disulfo-8-naphthol | 2 | Vinyl | rot |

**Beispiele 66 bis 180**

In den nachfolgenden Tabellenbeispielen sind weitere erfindungsgemäße Verbindungen entsprechend den allgemeinen Formeln (C) und (D)

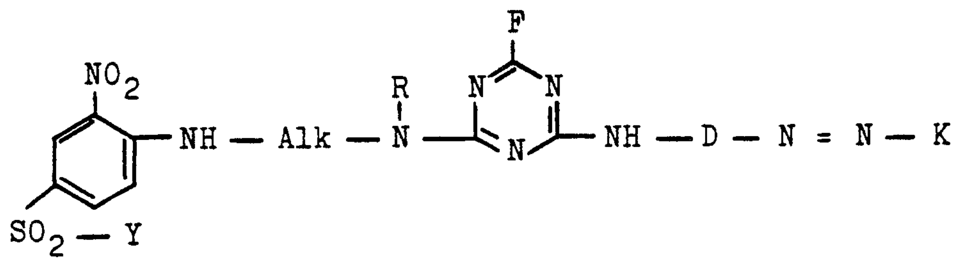

(C)

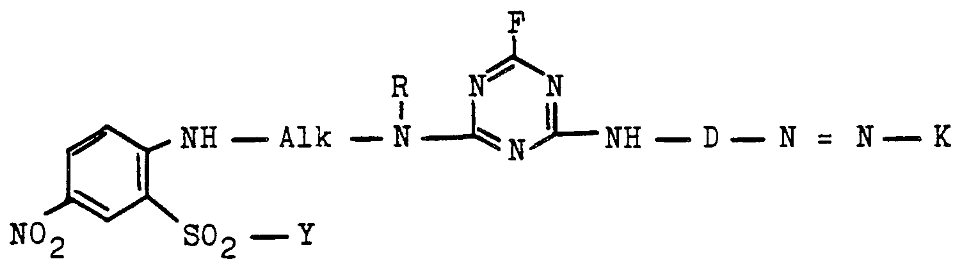

(D)

mit Hilfe der dort angegebenen Formelreste bzw. Komponenten beschrieben, wobei die unter dem Rest Alk angegebenen Buchstabenbezeichnungen den nachfolgenden Formelresten entsprechen:

(a): 1,3-Propylen

(b): 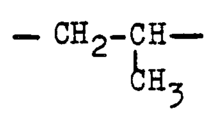

(c): 2,2-Dimethyl-1,3-propylen
(d): n-Hexylen
(e): - $(CH_2)_2$-O-$(CH_2)_2$ -
(f): - $(CH_2)_3$-O-$(CH_2)_4$-O-$(CH_2)_3$ -
(g): - $(CH_2)_2$-NH-$(CH_2)_2$ -
(h): - $(CH_2)_3$-NH-$(CH_2)_2$ -
(j): - $(CH_2)_2$-NH-$(CH_2)_3$ -
(k): - $(CH_2)_3$-NH-$(CH_2)_3$ -
(m): - $(CH_2)_3$-NH-$(CH_2)_2$-NH-$(CH_2)_3$ -
(n): Bis-(1,4-cyclohexylen)-methan
(p): Bis-[3-methyl-1,4-cyclohexyl(1)-en]-methan .

Die erfindungsgemäßen Farbstoffe der Formeln (C) und (D) lassen sich in erfindungsgemäßer Weise, beispielsweise analog einem der obigen Ausführungsbeispiele 22 und 23, aus den entsprechenden Komponenten (Cyanurfluorid, der Diaminobenzolverbindung entsprechend der allgemeinen Formel $H_2N$-D-$NH_2$ , der Aminoverbindung entsprechend der in der Beschreibung angegebenen allgemeinen Formel (19) und der Kupplungskomponente H-K) herstellen. Sie besitzen ebenfalls sehr gute faserreaktive Farbstoffeigenschaften und färben die in der Beschreibung angegebenen Fasermaterialien, insbesondere Cellulosefasermaterialien, in kräftigen echten Tönen (die Farbtöne in den Tabellenbeispielen beziehen sich auf Färbungen auf Cellulosefasermaterialien).

| Bsp. | Formel (..) | Rest D von $H_2N-D-NH_2$ | Kupplungskomp. H-K | Alk | Rest R | Rest Y | Farbton |
|---|---|---|---|---|---|---|---|
| 66 | (C) | 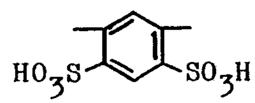 | N-(ß-Sulfatoethyl)-4-methyl-5-carbamoyl-6-hydroxy-2-pyridon | (a) | H | ß-Phosphatoethyl | grünstichig gelb |
| 67 | (C) | dito | dito | (a) | H | Vinyl | dito |
| 68 | (D) | dito | dito | (a) | H | Vinyl | dito |
| 69 | (D) | dito | dito | (a) | H | ß-Phosphatoethyl | dito |
| 70 | (C) | dito | N-(γ-Methoxypropyl)-4-methyl-6-hydroxy-2-pyridon | (b) | H | ß-Sulfatoethyl | dito |
| 71 | (C) | 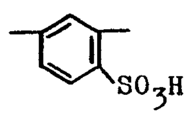 | 4-Methyl-5-sulfomethyl-6-hydroxy-2-pyridon | (b) | H | dito | dito |
| 72 | (C) | dito | N-(γ-Methoxypropyl)-4-methyl-5-sulfomethyl-6-hydroxy-2-pyridon | (c) | H | dito | dito |
| 73 | (C) | dito | N-(ß-Sulfatoethyl)-4-methyl-6-hydroxy-2-pyridon | (d) | H | dito | dito |
| 74 | (C) | 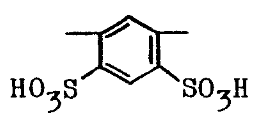 | N-(ß-Phosphatoethyl)-4-methyl-6-hydroxy-2-pyridon | (g) | H | ß-Phosphatoethyl | dito |
| 75 | (C) | dito | N-(ß-Sulfoethyl)-4-methyl-6-hydroxy-2-pyridon | (e) | H | dito | dito |

| Bsp. | Formel (..) | Rest D von $H_2N-D-NH_2$ | Kupplungskomp. H-K | Alk | Rest R | Rest Y | Farbton |
|---|---|---|---|---|---|---|---|
| 76 | (C) | dito | 1-(2'-Methyl-4'-sulfo-phenyl)-3-carboxy-5-pyrazolon | (m) | H | ß-Sulfato-ethyl | gelb |
| 77 | (C) | dito | dito | (p) | H | dito | gelb |
| 78 | (C) | 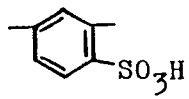 | 1-Acetylamino-3,6-disulfo-8-naphthol | (b) | H | ß-Sulfato-ethyl | rot |
| 79 | (C) | dito | dito | (a) | Methyl | dito | dito |
| 80 | (C) | dito | dito | (a) | Cyclo-hexyl | dito | dito |
| 81 | (C) | dito | dito | (c) | H | dito | dito |
| 82 | (C) | dito | dito | (d) | H | dito | dito |
| 83 | (C) | dito | dito | (e) | H | dito | dito |
| 84 | (C) | dito | dito | (f) | H | dito | dito |
| 85 | (C) | dito | dito | (g) | H | dito | dito |
| 86 | (C) | dito | dito | (h) | H | dito | dito |
| 87 | (C) | dito | dito | (j) | H | dito | dito |
| 88 | (C) | dito | dito | (k) | H | dito | dito |
| 89 | (C) | dito | dito | (m) | H | dito | dito |
| 90 | (C) | dito | dito | (n) | H | dito | dito |
| 91 | (C) | dito | dito | (p) | H | dito | dito |

| Bsp. | Formel (..) | Rest D von $H_2N-D-NH_2$ | Kupplungskomp. H-K | Alk | Rest R | Rest Y | Farbton |
|---|---|---|---|---|---|---|---|
| 92 | (C) | 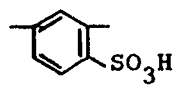 | 1-(4'-Sulfophenyl)-3-carboxy-5-pyrazolon | (b) | H | ß-Sulfatoethyl | gelb |
| 93 | (C) | dito | dito | (a) | Methyl | dito | gelb |
| 94 | (C) | dito | dito | (a) | Cyclohexyl | dito | gelb |
| 95 | (C) | dito | dito | (c) | H | dito | gelb |
| 96 | (C) | dito | dito | (d) | H | dito | gelb |
| 97 | (C) | dito | dito | (e) | H | dito | gelb |
| 98 | (C) | dito | dito | (f) | H | dito | gelb |
| 99 | (C) | dito | dito | (g) | H | dito | gelb |
| 100 | (C) | dito | dito | (h) | H | dito | gelb |
| 101 | (C) | dito | dito | (j) | H | dito | gelb |
| 102 | (C) | dito | dito | (k) | H | dito | gelb |
| 103 | (C) | dito | dito | (m) | H | dito | gelb |
| 104 | (C) | dito | dito | (n) | H | dito | gelb |
| 105 | (C) | dito | dito | (p) | H | dito | gelb |
| 106 | (D) | 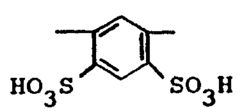 | N-(ß-Sulfatoethyl)-4-methyl-5-carbamoyl-6-hydroxy-2-pyridon | (b) | H | ß-Acetyloxyethyl | grünstichig gelb |
| 107 | (D) | dito | N-(γ-Methoxypropyl)-4-methyl-6-hydroxy-2-pyridon | (a) | Methyl | Vinyl | dito |

| Bsp. | Formel (..) | Rest D von $H_2N-D-NH_2$ | Kupplungskomp. H-K | Alk | Rest R | Rest Y | Farbton |
|---|---|---|---|---|---|---|---|
| 108 | (D) | 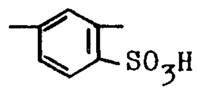 | 4-Methyl-5-sulfomethyl-6-hydroxy-2-pyridon | (e) | H | dito | dito |
| 109 | (D) | dito | N-(γ-Methoxypropyl)-4-methyl-5-sulfomethyl-6-hydroxy-2-pyridon | (g) | H | dito | dito |
| 110 | (D) | dito | N-(ß-Sulfatoethyl)-4-methyl-6-hydroxy-2-pyridon | (a) | Methyl | dito | dito |
| 111 | (D) | 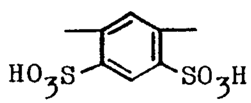 | N-(ß-Phosphatoethyl)-4-methyl-6-hydroxy-2-pyridon | (e) | H | ß-Phosphato-ethyl | dito |
| 112 | (D) | dito | N-(ß-Sulfoethyl)-4-methyl-6-hydroxy-2-pyridon | (h) | H | dito | dito |
| 113 | (D) | dito | 1-(2'-Methyl-4'-sulfo-phenyl)-3-carboxy-5-pyrazolon | (m) | H | ß-Sulfato-ethyl | gelb |
| 114 | (C) | dito | dito | (n) | H | dito | gelh |
| 115 | (C) | dito | 1-(2'-Methyl-4'-sulfo-phenyl)-3-carboxy-5-pyrazolon | (g) | H | ß-Phosphato-ethyl | gelt |
| 116 | (C) | dito | 3,6-Disulfo-1-naphthol | (a) | H | ß-Sulfato-ethyl | orange |
| 117 | (C) | dito | 3,8-Disulfo-1-naphthol | (e) | H | ß-Phosphato-ethyl | scharlach |

| Bsp. | Formel (..) | Rest D von $H_2N$-D-$NH_2$ | Kupplungskomp. H-K | Alk | Rest R | Rest Y | Farbton |
|---|---|---|---|---|---|---|---|
| 118 | (C) | dito | 4,8-Disulfo-1-naphthol | (a) | H | ß-Sulfato-ethyl | gelbst. rot |
| 119 | (C) | dito | 3,3'-Disulfo-7-(phenyl-amino)-1-naphthol | (e) | H | dito | braun |
| 120 | (C) | dito | 1-(4'-Sulfophenyl)-3-carboxy-5-pyrazolon | (a) | H | ß-Phosphato-ethyl | gelb |
| 121 | (C) | 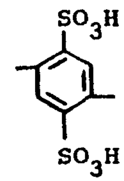 | dito | (g) | H | dito | gelb |
| 122 | (C) | 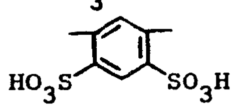 | 1-Phenyl-3-carboxy-5-pyrazolon | (e) | H | ß-Sulfato-ethyl | gelb |
| 123 | (C) | dito | dito | (e) | H | dito | gelb |
| 124 | (C) | 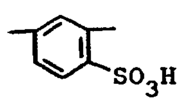 | 3,6-Disulfo-1-naphthol | (e) | H | Vinyl | gelb |
| 125 | (D) | 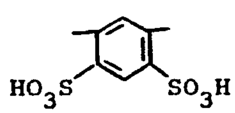 | 1-(2'-Methyl-4'-sulfo-phenyl)-3-carboxy-5-pyrazolon | (g) | H | ß-Phosphato-ethyl | gelb |
| 126 | (D) | dito | 3,6-Disulfo-1-naphthol | (g) | H | ß-Sulfato-ethyl | orange |
| 127 | (D) | dito | 3,8-Disulfo-1-naphthol | (a) | H | ß-Phosphato-ethyl | scharlach |
| 128 | (D) | dito | 4,8-Disulfo-1-naphthol | (e) | H | ß-Sulfato-ethyl | gelbst. rot |

| Bsp. | Formel (..) | Rest D von $H_2N-D-NH_2$ | Kupplungskomp. H-K | Alk | Rest R | Rest Y | Farbton |
|---|---|---|---|---|---|---|---|
| 129 | (D) | dito | 3,3'-Disulfo-7-(phenylamino)-1-naphthol | (a) | H | dito | braun |
| 130 | (D) | dito | 1-(4'-Sulfophenyl)-3-carboxy-5-pyrazolon | (e) | H | ß-Phosphatoethyl | gelb |
| 131 | (D) | 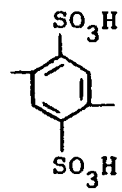 | dito | (a) | H | dito | gelb |
| 132 | (D) | 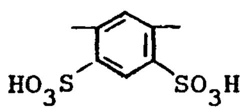 | 1-Phenyl-3-carboxy-5-pyrazolon | (g) | H | ß-Sulfatoethyl | gelb |
| 133 | (D) | dito | dito | (g) | H | dito | gelb |
| 134 | (D) | 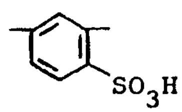 | 3,6-Disulfo-1-naphthol | (e) | H | Vinyl | gelb |
| 135 | (C) | dito | 1-(4'-Sulfophenyl)-3-carboxy-5-pyrazolon | (e) | H | Vinyl | gelb |
| 136 | (C) | dito | N-(ß-Sulfoethyl)-4-methyl-5-cyano-6-hydroxy-2-pyridon | (a) | H | Vinyl | grünst. gelb |
| 137 | (C) | dito | N-(ß-Sulfoethyl)-4-methyl-5-sulfomethyl-6-hydroxy-2-pyridon | (a) | H | ß-Sulfatoethyl | dito |
| 138 | (C) | dito | N-(ß-Sulfoethyl)-4-methyl-5-sulfo-6-hydroxy-2-pyridon | (a) | H | dito | dito |

| Bsp. | Formel (..) | Rest D von $H_2N-D-NH_2$ | Kupplungskomp. H-K | Alk | Rest R | Rest Y | Farbton |
|---|---|---|---|---|---|---|---|
| 139 | (C) | 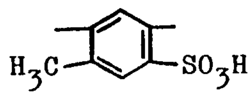 | dito | (c) | H | ß-Phosphato-ethyl | dito |
| 140 | (C) | 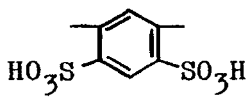 | N-(ß-Sulfoethyl)-4-methyl-5-cyano-6-hydroxy-2-pyridon | (b) | H | ß-Sulfato-ethyl | dito |
| 141 | (C) | 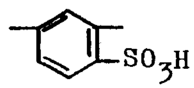 | 1-Acetylamino-3,6-disulfo-8-naphthol | (b) | H | dito | rot |
| 142 | (C) | dito | 1-Benzoylamino-3,6-disulfo-8-naphthol | (a) | H | dito | rot |
| 143 | (C) | dito | 1-[(N'-Cyclohexyl)-ureido]-3,6-disulfo-8-naphthol | (c) | H | dito | rot |
| 144 | (C) | dito | 4,8-Disulfo-1-naphthol | (g) | H | dito | rot |
| 145 | (C) | dito | 4-Sulfo-1-naphthol | (g) | H | dito | rot |
| 146 | (C) | dito | dito | (a) | H | ß-(Methyl-sulfonyloxy)-ethyl | rot |
| 147 | (D) | dito | 1-(4'-Sulfophenyl)-3-carboxy-5-pyrazolon | (c) | H | Vinyl | gelb |
| 148 | (D) | dito | N-(ß-Sulfoethyl)-4-methyl-5-cyano-6-hydroxy-2-pyridon | (c) | H | Vinyl | grünst. gelb |

| Bsp. | Formel (..) | Rest D von $H_2N-D-NH_2$ | Kupplungskomp. H-K | Alk | Rest R | Rest Y | Farbton |
|---|---|---|---|---|---|---|---|
| 149 | (D) | dito | N-(ß-Sulfoethyl)-4-methyl-5-sulfomethyl-6-hydroxy-2-pyridon | (g) | H | ß-Sulfato-ethyl | dito |
| 150 | (D) | dito | N-(ß-Sulfoethyl)-4-methyl-5-sulfo-6-hydroxy-2-pyridon | (c) | H | dito | dito |
| 151 | (D) | 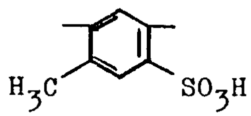 | dito | (d) | H | ß-Phosphato-ethyl | dito |
| 152 | (D) | 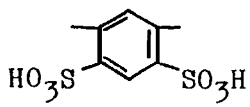 | N-(ß-Sulfoethyl)-4-methyl-5-cyano-6-hydroxy-2-pyridon | (a) | H | ß-Sulfato-ethyl | dito |
| 153 | (D) | 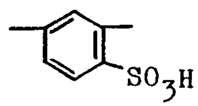 | 1-Acetylamino-3,6-disulfo-8-naphthol | (e) | H | dito | rot |
| 154 | (D) | dito | 1-Benzoylamino-3,6-disulfo-8-naphthol | (c) | H | dito | rot |
| 155 | (D) | dito | 1-[(N'-Cyclohexyl)-ureido]-3,6-disulfo-8-naphthol | (e) | H | dito | rot |
| 156 | (D) | dito | 4,8-Disulfo-1-naphthol | (a) | H | dito | rot |
| 157 | (D) | dito | 4-Sulfo-1-naphthol | (a) | H | dito | rot |
| 158 | (D) | dito | dito | (a) | H | ß-(Methyl-sulfonyloxy)-ethyl | rot |

| Bsp. | Formel (..) | Rest D von $H_2N$-D-$NH_2$ | Kupplungskomp. H-K | Alk | Rest R | Rest Y | Farbton |
|---|---|---|---|---|---|---|---|
| 159 | (C) | 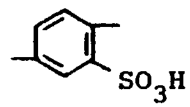 | 1-Acetylamino-3,6-disulfo-8-naphthol | (a) | H | ß-Sulfato-ethyl | rot |
| 160 | (C) | dito | dito | (e) | H | ß-Phosphato-ethyl | rot |
| 161 | (C) | dito | dito | (e) | H | ß-Sulfato-ethyl | rot |
| 162 | (C) | 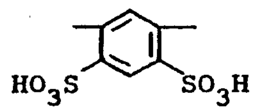 | 1-Benzoylamino-3,6-disulfo-8-naphthol | (a) | H | dito | rot |
| 163 | (C) | dito | 1-Benzoylamino-4,6-disulfo-8-naphthol | (g) | H | dito | rot |
| 164 | (C) | dito | dito | (c) | H | ß-Phosphato-ethyl | rot |
| 165 | (C) | 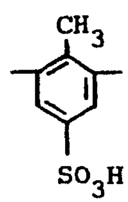 | dito | (p) | H | dito | rot |
| 166 | (C) | dito | dito | (p) | H | ß-Sulfato-ethyl | rot |
| 167 | (C) | 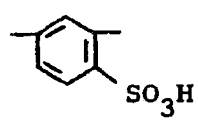 | 1-Acetylamino-3,6-disulfo-8-naphthol | (a) | H | Vinyl | rot |
| 168 | (C) | dito | 1-Benzoylamino-3,6-disulfo-8-naphthol | (e) | H | Vinyl | rot |
| 169 | (C) | dito | 1-Benzoylamino-4,6-disulfo-8-naphthol | (a) | H | Vinyl | rot |

| Bsp. | Formel (..) | Rest D von $H_2N-D-NH_2$ | Kupplungskomp. H-K | Alk | Rest R | Rest Y | Farbton |
|---|---|---|---|---|---|---|---|
| 170 | (D) | 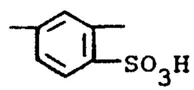 | 1-Acetylamino-3,6-disulfo-8-naphthol | (e) | H | ß-Sulfato-ethyl | rot |
| 171 | (D) | dito | dito | (p) | H | ß-Phosphato-ethyl | rot |
| 172 | (D) | dito | dito | (e) | H | ß-Sulfato-ethyl | rot |
| 173 | (D) | 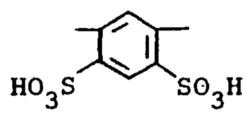 | 1-Benzoylamino-3,6-disulfo-8-naphthol | (a) | H | dito | rot |
| 174 | (D) | dito | 1-Benzoylamino-4,6-disulfo-8-naphthol | (b) | H | dito | rot |
| 175 | (D) | dito | dito | (e) | H | ß-Phosphato-ethyl | rot |
| 176 | (D) | 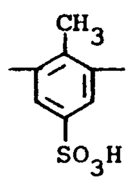 | dito | (g) | H | dito | rot |
| 177 | (D) | dito | dito | (g) | H | ß-Sulfato-ethyl | rot |
| 178 | (D) | 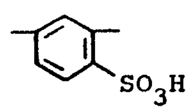 | 1-Acetylamino-3,6-disulfo-8-naphthol | (a) | H | Vinyl | rot |
| 179 | (D) | dito | 1-Benzoylamino-3,6-disulfo-8-naphthol | (e) | H | Vinyl | rot |
| 180 | (D) | dito | 1-Benzoylamino-4,6-disulfo-8-naphthol | (a) | H | Vinyl | rot |

**Beispiel 181**

31,9 Teile 1-Amino-3,6-disulfo-8-naphthol werden in wäßriger Lösung bei einem pH-Wert von 7 und einer Temperatur von 0°C mit 14,2 Teilen Cyanurfluorid (durch langsame Zugabe) umgesetzt. Man rührt den Ansatz noch einige Minuten nach und gibt sodann 37 Teile 4-(ß-Sulfatoethyl-sulfonyl)-2-nitro-1-(ß-aminoethylamino)-benzol hinzu und führt die zweite Kondensationsreaktion bei einem pH-Wert von 6,5 bis 7,5 und einer Temperatur von 0 bis 10°C durch. Sodann vereinigt man diesen Ansatz mit einer auf üblichem Wege hergestellten schwefelsauren wäßrigen Diazoniumsalzlösung von 17 Teilen 2-Aminobenzolsulfonsäure in etwa 120 Teilen Wasser und führt die Kupplungsreaktion bei einem pH-Wert von 5,5 und bei etwa 15°C durch.

Die gebildete erfindungsgemäße Verbindung wird mit Kaliumchlorid ausgefällt und isoliert. Sie besitzt, in Form der freien Säure geschrieben, die Formel

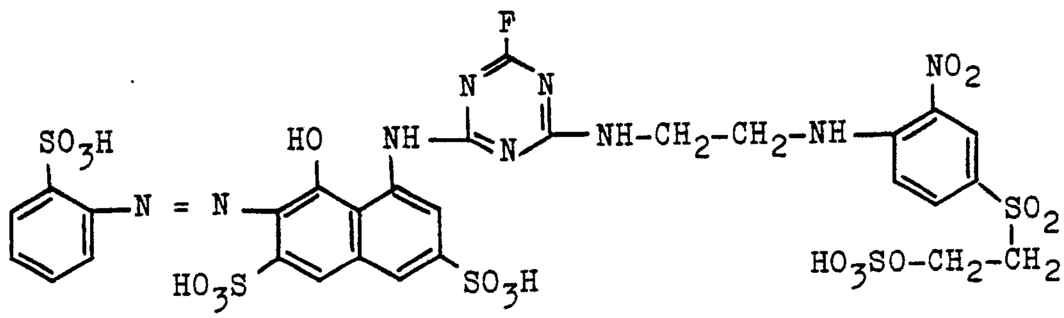

($\lambda_{max}$ = 532 nm)

und zeigt sehr gute Farbstoffeigenschaften. Sie färbt die in der Beschreibung genannten Fasermaterialien in roten echten Tönen und liefert insbesondere auf Cellulosefasermaterialien nach den für faserreaktive Farbstoffe üblichen Anwendungsmethoden Färbungen in leuchtend roten Nuancen mit sehr guten Naßechtheitseigenschaften, wie einer sehr guten Chlorwasserechtheit und sehr guten Naßlichtechtheiten, wie hiervon insbesondere einer guten alkalischen Schweißlichtechtheit.

**Beispiel 182**

Zur Herstellung einer erfindungsgemäßen Azoverbindung verfährt man gemäß der Verfahrensweise des Beispieles 181, verwendet jedoch als Diazokomponente die äquivalente Menge des Diazoniumsalzes von 1,5-Disulfo-2-aminonaphthalin. Die in Form ihres Alkalimetallsalzes erhaltene erfindungsgemäße Verbindung der Formel

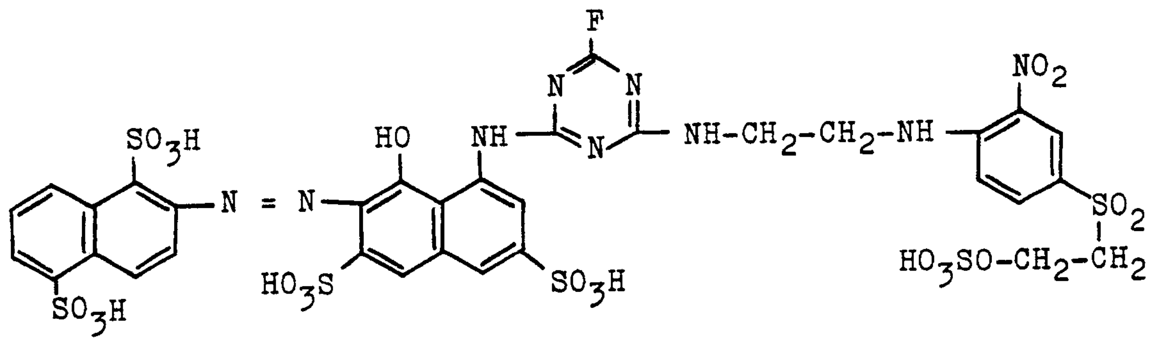

färbt beispielsweise Baumwolle nach den üblichen Färbeverfahren in sehr echten, roten Tönen.

**Beispiel 183**

Zur Herstellung einer erfindungsgemäßen Disazoverbindung verfährt man gemäß der Verfahrensweise des Beispieles 181, verwendet jedoch anstelle des dortigen Diazoniumsalzes das 4-(4'-Sulfophenyl-azo)-anilin als Diazokomponente in äquivalenter Menge.
Man erhält das erfindungsgemäße Alkalimetallsalz der Verbindung der Formel

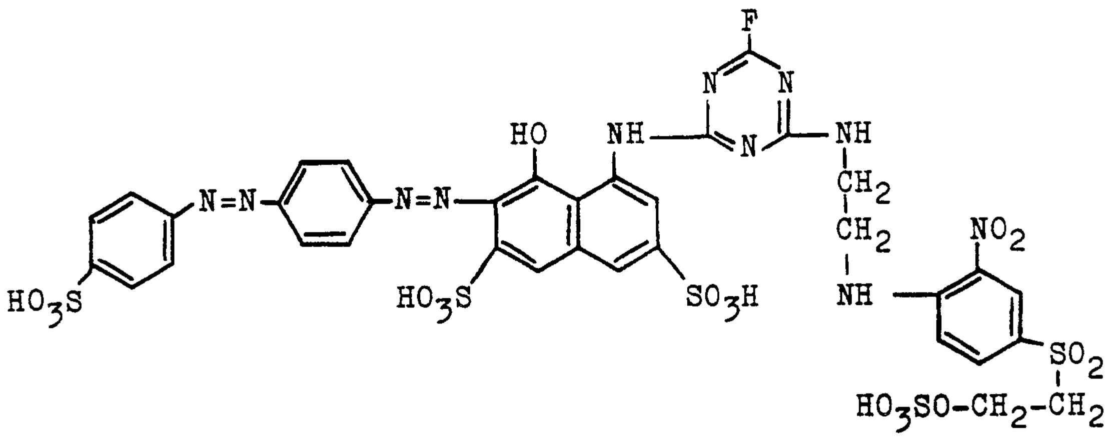

die sehr gute faserreaktive Farbstoffeigenschaften besitzt und nach den üblichen Färbeverfahren beispielsweise auf Baumwolle Färbungen in sehr echten rotvioletten Tönen liefert.

**Beispiel 184**

38,3 Teile 2-Amino-naphthalin-3,6,8-trisulfonsäure werden in üblicher Weise diazotiert und bei einem pH-Wert von 3 auf 13,7 Teile 3-Amino-4-methoxy-toluol gekuppelt. Die Amino-Azoverbindung wird in ihrer wäßrigen Syntheselösung diazotiert und bei einem pH-Wert von 6 bis 6,5 und bei einer Temperatur zwischen 20 und 25° C mit 78 Teilen des Kondensationsproduktes aus 1-Amino-8-naphthol-3,6-disulfonsäure, Cyanurfluorid und 4-(ß-Sulfatoethylsulfonyl)-3-nitro-1-(ß-aminoethyl-amino)-benzol, das aus diesen Komponenten in bekannter Verfahrensweise hergestellt wurde, gekuppelt.
Die erfindungsgemäße Disazoverbindung wird sodann mit Kaliumchlorid ausgefällt und isoliert. Man erhält ein schwarzes, elektrolythaltiges Pulver des Alkalimetallsalzes der Verbindung der Formel

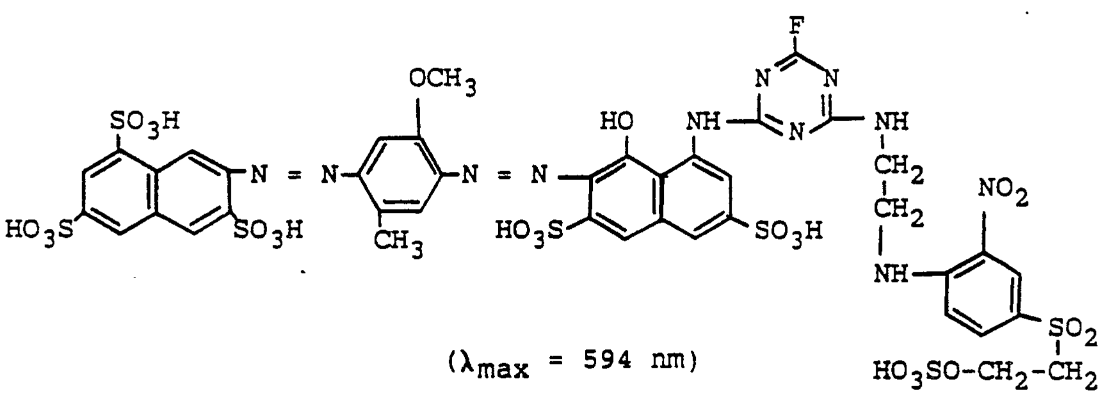

($\lambda_{max}$ = 594 nm)

das Baumwolle in echten marineblauen Tönen färbt.

**Beispiel 185**

77 Teile der bekannten Amino-Disazoverbindung der Formel

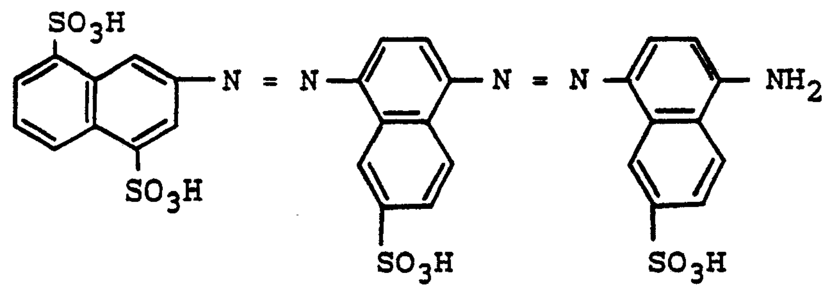

werden in wäßriger Lösung bei 0 °C und einem pH-Wert von 7 mit 14,2 Teilen Cyanurfluorid umgesetzt. Sodann werden 37 Teile 4-(ß-Sulfatoethylsulfonyl)-2-nitro-1-(ß-aminoethylamino)-benzol hinzugegeben; die Umsetzung erfolgt bei einem pH-Wert von 6,5 bis 7,5 und einer Temperatur zwischen 0 und 10 °C. Die erfindungsgemäße Disazoverbindung kann durch Aussalzen oder Sprühtrocknen in üblicher Weise isoliert werden.

Man erhält ein elektrolythaltiges Pulver des Alkalisalzes der Verbindung der Formel

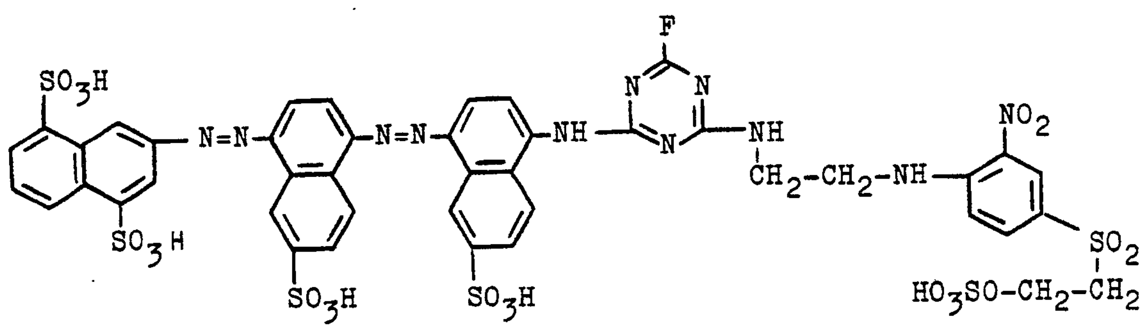

($\lambda_{max}$ = 445 nm)

welche sehr gute faserreaktive Farbstoffeigenschaften aufweist und mit den hierfür üblichen Färbe- und Druckverfahren insbesondere auf Baumwolle farbstarke Färbungen und Drucke in echten, rötlich braunen Nuancen liefert.

**Beispiele 186 bis 271**

In den nachfolgenden Tabellenbeispielen sind weitere erfindungsgemäße Verbindungen entsprechend den allgemeinen Formeln (E) und (F)

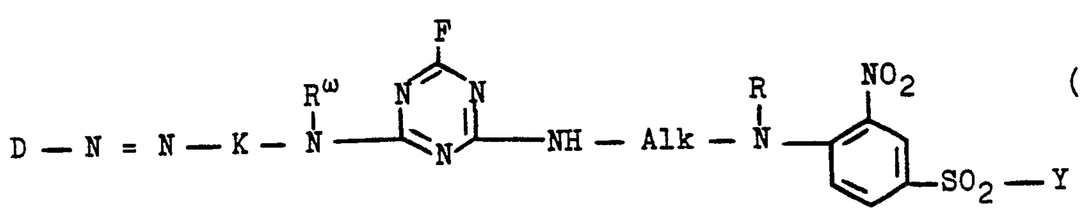 (E)

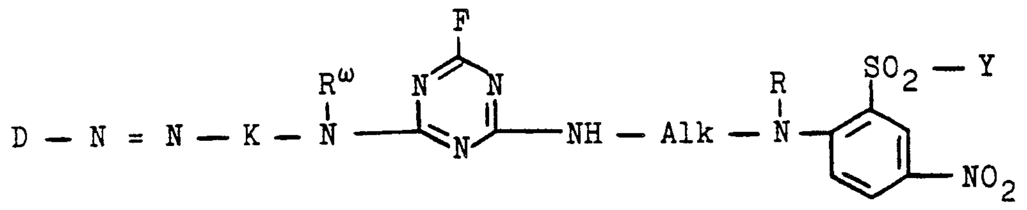

(F)

mit Hilfe der dort angegebenen Formelreste bzw. Komponenten beschrieben, wobei die für Alk angegebenen, durch Buchstaben gekennzeichnete Reste die in den Beispielen 66 ff. angegebenen Gruppen bzw. die Bezeichnung (r) den 1,2-Ethylenrest bedeuten. Sie lassen sich in erfindungsgemäßer Weise, beispielsweise analog einem der obigen Ausführungsbeispiele, mit Hilfe dieser Komponenten (der von einer faserreaktiven Gruppe freien Diazokomponente $D\text{-}NH_2$ , der Kupplungskomponente $H\text{-}K\text{-}NHR^{\omega}$ , deren Aminogruppe gegebenenfalls bereits die faserreaktive Fluortriazinylamino-Gruppierung besitzt, Cyanurfluorid und dem Amin entsprechend der in der Beschreibung angegebenen allgemeinen Formel (19)) herstellen. Diese erfindungsgemäßen Azoverbindungen besitzen ebenfalls sehr gute faserreaktive Farbstoffeigenschaften; insbesondere auf Cellulosefasermaterialien erhält man mit ihnen farbstarke, klare echte Färbungen und Drucke in dem für das jeweilige Tabellenbeispiel angegebenen Farbton.

| Bsp. | Formel (..) | Rest D | Komponente H-K-NHR$^{\omega}$ | Alk | Rest R | Rest Y | Farbton |
|---|---|---|---|---|---|---|---|
| 186 | (E) | 4-Phenoxy-2-sulfo-phenyl | 1-Amino-3,6-disulfo-8-naphthol | (e) | H | ß-Sulfato-ethyl | blaust. rot |
| 187 | (E) | 4-Ethoxy-phenyl | dito | (e) | H | dito | dito |
| 188 | (F) | 4-Methoxy-phenyl | dito | (a) | H | dito | dito |
| 189 | (F) | 4-Methyl-2-sulfo-phenyl | dito | (p) | H | dito | dito |
| 190 | (F) | 4-Sulfo-phenyl | dito | (g) | H | dito | rot |
| 191 | (E) | 3-Sulfo-phenyl | dito | (g) | H | dito | rot |
| 192 | (F) | 1,5-Disulfo-naphth-2-yl | dito | (g) | H | dito | rot |
| 193 | (F) | 4,8-Disulfo-naphth-yl | dito | (a) | H | dito | rot |
| 194 | (F) | 4-Sulfo-naphth-1-yl | dito | (n) | H | dito | rot |
| 195 | (E) | 6-Sulfo-naphth-1-yl | dito | (a) | H | dito | rot |
| 196 | (F) | 1-Sulfo-naphth-2-yl | dito | (a) | H | dito | rot |
| 197 | (F) | 5-Sulfo-naphth-2-yl | dito | (a) | H | ß-(Methyl-sulfonyloxy)-ethyl | rot |
| 198 | (E) | 6-Sulfo-naphth-2-yl | dito | (g) | H | ß-Phosphato-ethyl | rot |
| 199 | (E) | Phenyl | 1-Amino-4,6-disulfo-8-naphthol | (p) | H | ß-Sulfato-ethyl | scharlach |
| 200 | (F) | 2-Sulfo-phenyl | dito | (a) | H | dito | scharlach |

| Bsp. | Formel (..) | Rest D | Komponente H-K-NHR$^{\omega}$ | Alk | Rest R | Rest Y | Farbton |
|---|---|---|---|---|---|---|---|
| 201 | (F) | dito | 1-Amino-4-sulfo-8-naphthol | (e) | H | dito | scharlach |
| 202 | (F) | dito | dito | (e) | H | ß-(Methyl-sulfonyloxy)-ethyl | scharlach |
| 203 | (E) | dito | 2-Amino-6-sulfo-8-naphthol | (g) | H | ß-Sulfato-ethyl | rot |
| 204 | (F) | Phenyl | 1-Amino-2,4-disulfo-8-naphthol | (g) | H | dito | rot |
| 205 | (F) | 4-Sulfo-phenyl | 2-Amino-7-sulfo-5-naphthol | (g) | H | dito | orange |
| 206 | (F) | 1,5-Disulfo-naphth-2-yl | 2-Methylamino-7-sulfo-5-naphthol | (g) | H | dito | orange |
| 207 | (E) | dito | 2-Methylamino-7-sulfo-5-naphthol | (a) | H | dito | orange |
| 208 | (F) | dito | dito | (e) | H | ß-(Methyl-sulfonyloxy)-ethyl | orange |
| 209 | (E) | Phenyl | 1-Amino-3,6-disulfo-8-naphthol | (e) | H | ß-Sulfato-ethyl | rot |
| 210 | (E) | dito | dito | (e) | H | dito | rot |
| 211 | (E) | dito | dito | (e) | H | ß-(Methyl-sulfonyloxy)-ethyl | rot |

| Bsp. | Formel (..) | Rest D | Komponente H-K-NHR$^{\omega}$ | Alk | Rest R | Rest Y | Farbton |
|---|---|---|---|---|---|---|---|
| 212 | (F) | dito | dito | (a) | H | ß-Phosphato-ethyl | rot |
| 213 | (F) | 2-Chlor-phenyl | dito | (p) | H | ß-Sulfato-ethyl | rot |
| 214 | (F) | 3-Methyl-phenyl | dito | (e) | H | dito | rot |
| 215 | (E) | 4-Methoxy-2-sulfo-phenyl | dito | (e) | H | dito | blaust. rot |
| 216 | (E) | dito | dito | (e) | H | Vinyl | blaust. rot |
| 217 | (E) | 1,5-Disulfo-naphth-2-yl | dito | (a) | H | Vinyl | rot |
| 218 | (E) | 4-(4',8'-Disulfo-naphth-2'-yl-azo)-7-sulfo-naphth-1-yl | 3-Methyl-anilin | (g) | H | ß-Sulfato-ethyl | rotst. braun |
| 219 | (E) | 4-(4',8'-Disulfo-naphth-2'-yl-azo)-(6,7)-monosulfo-naphth-1-yl | 2-Methoxy-5-methyl-anilin | (g) | H | dito | dito (443) |
| 220 | (E) | dito | 2,5-Dimethyl-anilin | (p) | H | dito | dito (441) |
| 221 | (E) | 4-(4',6',8'-Trisulfo-naphth-2'-yl-azo)-6-sulfo-naphth-1-yl | 3-Methyl-anilin | (a) | H | dito | dito (444) |
| 222 | (E) | 4-(2',5',7'-Trisulfo-naphth-1'-yl-azo)-naphth-1-yl | 7-Sulfo-1-amino-naphthalin | (g) | H | dito | rotbraun |

| Bsp. | Formel (..) | Rest D | Komponente H-K-NHR$^{\omega}$ | Alk | Rest R | Rest Y | Farbton |
|---|---|---|---|---|---|---|---|
| 223 | (F) | 4-(2',5'-Disulfo-phenylazo)-2,5-dimethyl-phenyl | 8-Sulfo-1-amino-naphthalin | (b) | H | dito | orange-braun |
| 224 | (F) | 4-(4',6',8'-Trisulfo-naphth-2'-yl-azo)-phenyl | Anilin | (b) | H | dito | orange braun |
| 225 | (F) | 4-(4',8'-Disulfo-naphth-2'-yl-azo)-7-sulfo-naphth-1-yl | 8-Sulfo-1-amino-naphthalin | (b) | H | dito | rotst. braun |
| 226 | (F) | 4-(3',6',8'-Trisulfo-naphth-2'-yl-azo)-2,5-dimethyl-phenyl | 1-Amino-3,6-disulfo-8-naphthol | (b) | H | dito | marine-blau |
| 227 | (E) | 4-(3',6',8'-Trisulfo-naphth-2'-yl-azo)-3-methyl-phenyl | dito | (b) | H | ß-Phosphato-ethyl | dito |
| 228 | (E) | 4-(3',6',8'-Trisulfo-naphth-2'-yl-azo)-2-methyl-5-methoxy-phenyl | dito | (b) | H | ß-Sulfato-ethyl | dito |
| 229 | (F) | 4-(3',6',8'-Trisulfo-naphth-2'-yl-azo)-5-chlor-2-methyl-phenyl | dito | (a) | H | dito | dito |
| 230 | (F) | 4-(4',6',8'-Trisulfo-naphth-2'-yl-azo)-2,5-dimethyl-phenyl | dito | (a) | H | ß-Sulfato-ethyl | dito |
| 231 | (F) | 4-(1',5',7'-Trisulfo-naphth-2'-yl-azo)-2,5-dimethyl-phenyl | dito | (a) | H | ß-Sulfato-ethyl | dito |

| Bsp. | Formel (..) | Rest D | Komponente H-K-NHR$^{\omega}$ | Alk | Rest R | Rest Y | Farbton |
|---|---|---|---|---|---|---|---|
| 232 | (F) | 4-(6',8'-Disulfo-naphth-2'-yl-azo)-2-methyl-5-methoxy-phenyl | dito | (g) | H | ß-Sulfato-ethyl | dito |
| 233 | (F) | 4-(5',7'-Disulfo-naphth-2'-yl-azo)-3-methyl-phenyl | dito | (g) | H | ß-Phosphato-ethyl | dito |
| 234 | (F) | dito | dito | (a) | H | ß-Sulfato-ethyl | dito |
| 235 | (E) | 4-(4',8'-Disulfo-6'-nitro-naphth-2'-yl-azo)-2-methyl-5-methoxy-phenyl | dito | (b) | H | ß-Sulfato-ethyl | dito |
| 236 | (F) | 4-(4',8'-Disulfo-naphth-2'-yl-azo)-2-methyl-5-methoxy-phenyl | dito | (b) | H | ß-Sulfato-ethyl | dito |
| 237 | (F) | 4-(4',6',8'-Trisulfo-naphth-2'-yl-azo)-6-sulfo-naphth-1-yl | 3-Methyl-anilin | (b) | H | Vinyl | rot-stichig braun |
| 238 | (E) | dito | 2-Methoxy-5-methyl-anilin | (b) | H | Vinyl | dito |
| 239 | (F) | 2-Sulfo-phenyl | 1-Amino-3,6-disulfo-8-naphthol | (a) | H | ß-Sulfato-ethyl | rot |
| 240 | (E) | dito | dito | (a) | Methyl | dito | rot |
| 241 | (E) | dito | dito | (e) | H | dito | rot |
| 242 | (E) | dito | dito | (f) | H | dito | rot |

| Bsp. | Formel (..) | Rest D | Komponente H-K-NHR$^{\omega}$ | Alk | Rest R | Rest Y | Farbton |
|---|---|---|---|---|---|---|---|
| 243 | (F) | 2-Sulfo-phenyl | 1-Amino-3,6-disulfo-8-naphthol | (g) | H | ß-Sulfato-ethyl | rot |
| 244 | (E) | dito | dito | (b) | H | dito | rot |
| 245 | (E) | dito | dito | (h) | H | dito | rot |
| 246 | (E) | dito | dito | (k) | H | dito | rot |
| 247 | (E) | dito | dito | (m) | H | dito | rot |
| 248 | (E) | dito | dito | (n) | H | dito | rot |
| 249 | (F) | 1,5-Disulfo-naphth-2-yl | dito | (a) | H | ß-Sulfato-ethyl | rot |
| 250 | (E) | dito | dito | (a) | Methyl | dito | rot |
| 251 | (E) | dito | dito | (e) | H | dito | rot |
| 252 | (E) | dito | dito | (f) | H | dito | rot |
| 253 | (E) | dito | dito | (g) | H | dito | rot |
| 254 | (E) | dito | dito | (h) | H | dito | rot |
| 255 | (E) | dito | dito | (k) | H | dito | rot |
| 256 | (E) | dito | dito | (m) | H | dito | rot |
| 257 | (E) | dito | dito | (n) | H | dito | rot |
| 258 | (F) | 4-(4'-Sulfophenyl-azo)-phenyl | dito | (a) | H | ß-Sulfato-ethyl | rot |
| 259 | (E) | dito | dito | (a) | Methyl | dito | rot |

| Bsp. | Formel (..) | Rest D | Komponente H-K-NHR$^{\omega}$ | Alk | Rest R | Rest Y | Farbton |
|---|---|---|---|---|---|---|---|
| 260 | (E) | dito | dito | (e) | H | dito | rot |
| 261 | (E) | dito | dito | (f) | H | dito | rot |
| 262 | (E) | dito | dito | (g) | H | dito | rot |
| 263 | (E) | dito | dito | (h) | H | dito | rot |
| 264 | (E) | dito | dito | (k) | H | dito | rot |
| 265 | (E) | dito | dito | (m) | H | dito | rot |
| 266 | (E) | dito | dito | (n) | H | dito | rot |
| 267 | (E) | 2-Sulfo-phenyl | 1-Amino-4,6-disulfo-8-naphthol | (r) | H | dito | scharlach |
| 268 | (E) | 1,5-Disulfo-naphth-2-yl | 2-Methylamino-7-sulfo-5-naphthol | (r) | H | dito | orange |
| 269 | (E) | dito | 2-Amino-7-sulfo-5-naphthol | (r) | H | dito | orange |
| 270 | (E) | 4-(4',8'-Disulfo-naphth-2'-yl-azo)-7-sulfo-naphth-1-yl | 3-Methyl-anilin | (r) | H | dito | rotstichig braun |
| 271 | (E) | 4-(4',8'-Disulfo-naphth-2'-yl-azo)-(6,7)-monosulfo-naphth-1-yl | 2-Methoxy-5-methyl-anilin | (r) | H | dito | rotstichig braun (443) |

**Beispiel 272**

Zu einer wäßrigen, salzsauren Lösung des Diazoniumsalzes aus 17,3 Teilen Anilin-4-sulfonsäure rührt man bei 5 °C eine wäßrige Suspension von 31,6 Teilen 1-Amino-3,6-disulfo-8-naphthol ein und führt die Kupplung bei einem pH-Wert zwischen 1 und 2 durch. Sodann gibt man die wäßrige, salzsaure Suspension des Diazoniumsalzes aus 65,3 Teilen eines auf üblichem Wege hergestellten Kondensationsproduktes aus Cyanurfluorid, 1,3-Diamino-4-sulfonsäure und 4-(ß-Sulfatoethylsulfonyl)-2-nitro-1-(ß-aminoethylamino)-benzol hinzu und führt die Kupplungsreaktion bei einem pH-Wert von 5 bis 6 durch. Die erfindungsgemäße Disazoverbindung wird mit Kaliumchlorid aus der neutralen Syntheselösung ausgefällt, isoliert und getrocknet. Man erhält ein schwarzes, elektrolythaltiges Pulver des Alkalimetallsalzes der Verbindung der Formel

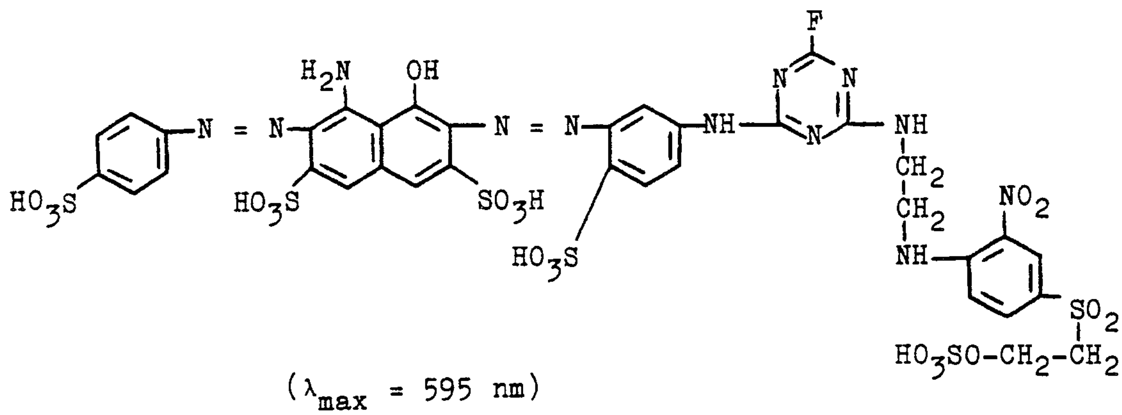

($\lambda_{max}$ = 595 nm)

die sehr gute faserreaktive Farbstoffeigenschaften besitzt und beispielsweise Baumwolle nach den für faserreaktive Farbstoffe üblichen Färbe- und Druckverfahren in echten marineblauen Tönen färbt.

**Beispiele 273 bis 287**

In den nachfolgenden Tabellenbeispielen sind weitere erfindungsgemäße Disazoverbindungen entsprechend einer allgemeinen Formel (G)

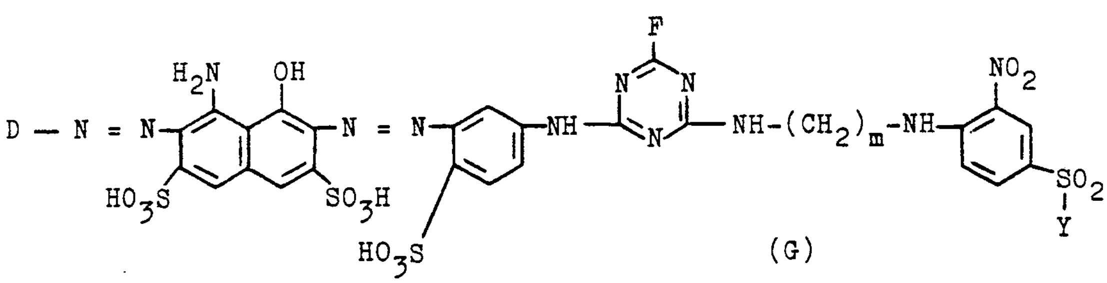

(G)

mit Hilfe der dort angegebenen Formelreste beschrieben. Sie lassen sich in erfindungsgemäßer Weise, beispielsweise analog den Angaben der Beispiele 20 und 272, mit Hilfe der daraus ersichtlichen Komponenten (1-Amino-3,6-disulfo-8-naphthol als bivalenter Kupplungskomponente, der sauer angekuppelten Diazokomponente D-$NH_2$ , 1,3-Diaminobenzol-4-sulfonsäure, Cyanurfluorid und einem Amin entsprechend der in der Beschreibung angegebenen allgemeinen Formel (19)) herstellen. Diese erfindungsgemäßen Disazoverbindungen besitzen ebenfalls sehr gute faserreaktive Farbstoffeigenschaften und liefern insbesondere auf Cellulosefasermaterialien farbstarke echte Färbungen und Drucke in dem für das jeweilige Tabellenbeispiel angegebenen Farbton.

| Bsp. | Diazokomp. D-$NH_2$ | m | Gruppe Y | Farbton |
|---|---|---|---|---|
| 273 | 2-Chlor-2-sulfo-anilin | 2 | β-Sulfatoethyl | marineblau |
| 274 | 2-Chlor-4,6-disulfoanilin | 2 | β-(Methylsulfonyloxy)-ethyl | rotstichig marineblau |
| 275 | 4-Chlor-2-sulfoanilin | 2 | β-Phosphatoethyl | dito |
| 276 | 1,5-Disulfo-2-amino-naphthalin | 2 | β-Sulfatoethyl | grünstichig marineblau |
| 277 | 4-Ethylsulfonyl-anilin | 3 | dito | rotstichig marineblau |
| 278 | 2-Methyl-4,6-disulfo-anilin | 3 | β-(Methylsulfonyloxy)-ethyl | dito |
| 279 | 3,6,8-Trisulfo-2-amino-naphthalin | 2 | β-Sulfatoethyl | grünstichig marineblau |
| 280 | 4-(β-Sulfatoethylsulfonyl)-anilin | 2 | dito | rotstichig marineblau |

| Bsp. | Diazokomp. D-$NH_2$ | m | Gruppe Y | Farbton |
|---|---|---|---|---|
| 281 | 2-Sulfo-anilin | 2 | dito | dito |
| 282 | 3-[2′-Chlor-4′-(3″-sulfophenyl-amino)-s-triazin-6′-yl]-amino-6-sulfo-anilin | 2 | dito | dito |
| 283 | dito | 3 | dito | dito |
| 284 | 3-[2′-Chlor-4′-(4″-β-sulfatoethylsulfonyl-phenylamino)-s-triazin-6′-yl]-amino-6-sulfo-anilin | 2 | dito | dito |
| 285 | Anilin | 2 | dito | dito |
| 286 | 3,6,8-Trisulfo-2-amino-naphthalin | 2 | Vinyl | grünstichig marineblau |
| 287 | 4-Sulfo-anilin | 2 | Vinyl | marineblau |

**Beispiel 288**

65,3 Teile des sekundären Kondensationsproduktes aus 1,3-Diaminobenzol-4-sulfonsäure, Cyanurfluorid und 4-(ß-Sulfatoethylsulfonyl)-2-nitro-1-(ß-aminoethyl-amino)-benzol werden in üblicher Weise in salzsaurer Lösung diazotiert und sodann mit 30,8 Teilen 1-Amino-3,6-disulfo-8-naphthol sauer gekuppelt. Die erhaltene Monoazoverbindung wird in deren Syntheselösung anschließend mit der wäßrigen, salzsauren Lösung des Diazoniumsalzes aus 17,3 Teilen Anilin-4-sulfonsäure versetzt, der Reaktionsansatz auf einen pH-Wert von 7 gestellt und die Kupplungsreaktion zur Disazoverbindung im neutralen Bereich zu Ende geführt.

Die erfindungsgemäße Disazoverbindung wird mit Kaliumchlorid aus ihrer Syntheselösung ausgefällt, isoliert und getrocknet. Man erhält ein schwarzes, elektrolythaltiges Pulver mit dem Alkalimetallsalz der Verbindung der Formel

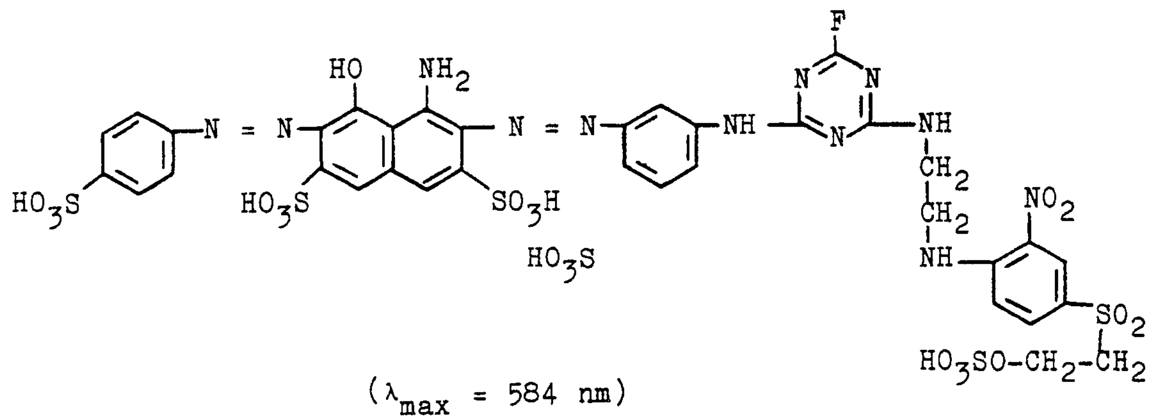

($\lambda_{max}$ = 584 nm)

die sehr gute faserreaktive Farbstoffeigenschaften besitzt beispielsweise Baumwolle nach den für faserreaktive Farbstoffe üblichen Färbe- und Druckverfahren in echten rotstichig marineblauen Tönen färbt.

**Beispiele 289 bis 300**

In den nachfolgenden Tabellenbeispielen sind weitere erfindungsgemäße Disazoverbindungen entsprechend einer allgemeinen Formel (H)

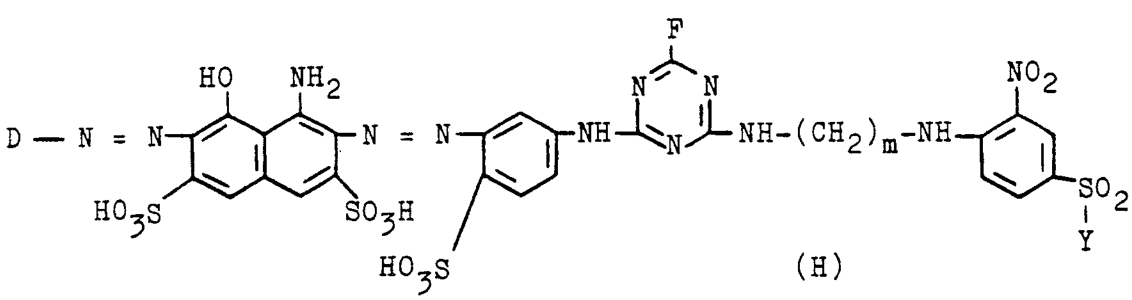

(H)

mit Hilfe der dort angegebenen Formelreste beschrieben. Sie lassen sich in erfindungsgemäßer Weise, beispielsweise analog den Angaben des Beispieles 288, mit Hilfe der daraus ersichtlichen Komponenten (1-Amino-3,6-disulfo-8-naphthol als bivalenter Kupplungskomponente, der schwach sauer bis neutral angekuppelten Diazokomponente D-$NH_2$ , 1,3-Diaminobenzol-4-sulfonsäure als sauer ankuppelbarer Diazokomponententeil, Cyanurfluorid und einem Amin entsprechend der in der Beschreibung angegebenen allgemeinen Formel (19)) herstellen. Diese erfindungsgemäßen Disazoverbindungen besitzen ebenfalls sehr gute faserreaktive Farbstoffeigenschaften und liefern insbesondere auf Cellulosefasermaterialien farbstarke echte Färbungen und Drucke in dem für das jeweilige Tabellenbeispiel angegebenen Farbton.

| Bsp. | Diazokomp. D-NH2 | m | Gruppe Y | Farbton |
|---|---|---|---|---|
| 289 | 1,5-Disulfo-2-amino-naphthalin | 2 | β-Phosphatoethyl | rotstichig marineblau |
| 290 | 2-Chlor-4,6-disulfo-anilin | 3 | β-Sulfatoethyl | dito |
| 291 | 2-Chlor-4-sulfo-anilin | 2 | β-(Methylsulfonyloxy)-ethyl | dito |
| 292 | 2-Methyl-4,6-disulfo-anilin | 2 | β-Sulfatoethyl | dito |
| 293 | 4-(β-Sulfatoethyl-sulfonyl)-anilin | 2 | dito | dito |
| 294 | 2-Sulfo-anilin | 2 | dito | dito |
| 295 | 3,6,8-Trisulfo-2-amino-naphthalin | 2 | dito | dito |
| 296 | Anilin | 2 | dito | dito |
| 297 | Anilin | 3 | β-Phosphatoethyl | dito |
| 298 | 4-Sulfamoyl-anilin | 2 | β-Sulfatoethyl | dito |
| 299 | 4-Sulfo-anilin | 2 | Vinyl | dito |
| 300 | 3,6,8-Trisulfo-2-amino-naphthalin | 2 | Vinyl | dito |

**Beispiele 301 bis 327**

In den nachfolgenden Tabellenbeispielen sind weitere erfindungsgemäße Verbindungen entsprechend den allgemeinen Formeln (J) und (K)

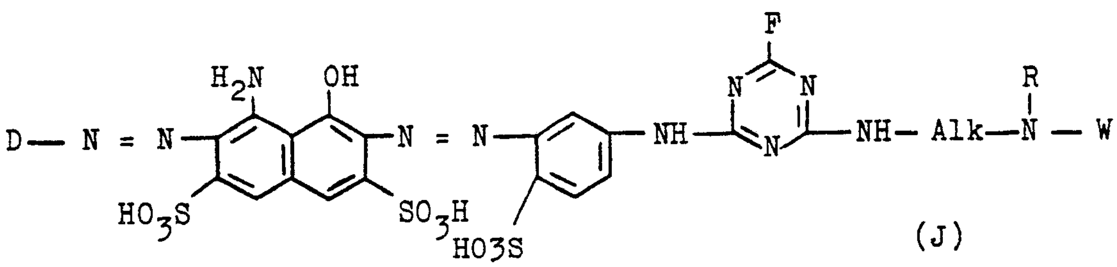

(J)

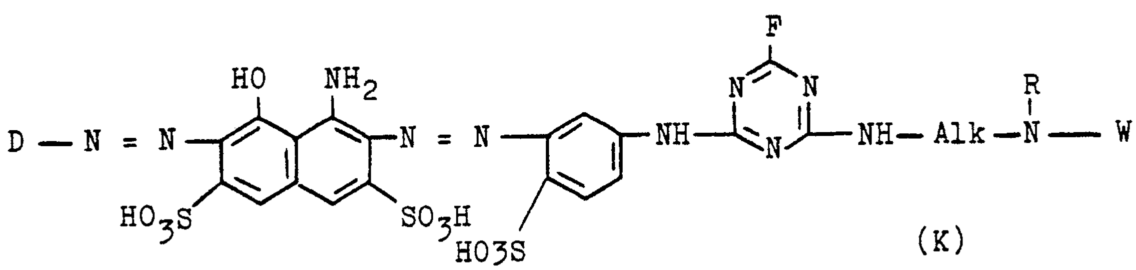

(K)

die analog den obigen Ausführungsbeispielen hergestellt werden können, mit Hilfe der dort angegebenen Formelreste bzw. Komponenten beschrieben, wobei die Formelreste W einen Rest der allgemeinen Formel (W-1) oder (W-2)

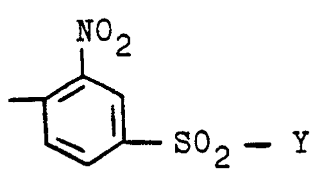

(W-1)

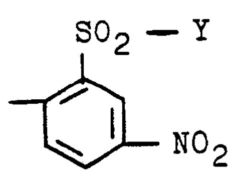

(W-2)

darstellen und die für Alk angegebenen, durch Buchstaben gekennzeichneten Reste die in den Beispielen

66 ff. angegebenen Gruppen bedeuten. Diese erfindungsgemäßen Azoverbindungen besitzen ebenfalls sehr gute faserreaktive Farbstoffeigenschaften; insbesondere auf Cellulosefasermaterialien erhält man mit ihnen farbstarke, klare echte Färbungen und Drucke in dem für das jeweilige Tabellenbeispiel angegebenen Farbton.

| Bsp. | Formel (..) | Diazokomp. D-$NH_2$ | Alk | Rest R | Gruppe Y | Farbton |
|---|---|---|---|---|---|---|
| 301 | (J:W-1) | 2-Chlor-4-sulfo-anilin | $-(CH_2)_2-$ | H | ß-Sulfatoethyl | marineblau |
| 302 | (J:W-1) | 2-Chlor-4,6-disulfo-anilin | (a) | H | ß-(Methylsulfonyloxy)-ethyl | rotstichig marineblau |
| 303 | (J:W-2) | 4-Chlor-2-sulfo-anilin | (e) | H | ß-Phosphatoethyl | dito |
| 304 | (K:W-2) | 1,5-Disulfo-2-amino-naphthalin | (e) | H | ß-Sulfatoethyl | grünstichig marineblau |
| 305 | (J:W-2) | 4-Ethylsulfonyl-anilin | (e) | $CH_3$ | dito | rotstichig marineblau |
| 306 | (J:W-1) | 2-Methyl-4,6-di-sulfo-anilin | (a) | H | ß-(Methylsulfonyloxy)-ethyl | dito |
| 307 | (K:W-2) | 3,6,8-Trisulfo-2-amino-naphthalin | (a) | H | ß-Sulfatoethyl | grünstichig marineblau |
| 308 | (J:W-2) | 4-(ß-Sulfatoethyl-sulfonyl)-anilin | (b) | H | dito | rotstichig marineblau |
| 309 | (J:W-2) | 2-Sulfo-anilin | (a) | H | dito | dito |
| 310 | (J:W-1) | 3-[2'-Chlor-4'-(3"-sulfophenyl-amino)-s-triazin-6'-yl]-amino-6-sulfo-anilin | (a) | Cyclo-hexyl | dito | dito |
| 311 | (J:W-2) | dito | (b) | H | dito | dito |

| Bsp. | Formel (..) | Diazokomp. D-$NH_2$ | Alk | Rest R | Gruppe Y | Farbton |
|---|---|---|---|---|---|---|
| 312 | (J:W-1) | 3-[2'-Chlor-4'-(4"-ß-sulfatoethylsulfonyl-phenylamino)-s-triazin-6'-yl]-amino-6-sulfo-anilin | (a) | $CH_3$ | dito | dito |
| 313 | (J:W-1) | Anilin | (a) | H | dito | dito |
| 314 | (K:W-2) | 3,6,8-Trisulfo-2-amino-naphthalin | (b) | H | Vinyl | grünstichig marineblau |
| 315 | (J:W-2) | 4-Sulfo-anilin | (b) | H | Vinyl | marineblau |
| 316 | (K:W-2) | 1,5-Disulfo-2-amino-naphthalin | (b) | H | ß-Phosphatoethyl | rotstichig marineblau |
| 317 | (J:W-2) | 2-Chlor-4,6-disulfo-anilin | (p) | H | ß-Sulfatoethyl | dito |
| 318 | (J:W-2) | 2-Chlor-4-sulfo-anilin | (b) | $C_2H_5$ | ß-(Methylsulfonyloxy)-ethyl | dito |
| 319 | (J:W-2) | 2-Methyl-4,6-disulfo-anilin | (b) | H | ß-Sulfatoethyl | dito |
| 320 | (J:W-2) | 4-(ß-Sulfatoethyl-sulfonyl)-anilin | (b) | H | dito | dito |
| 321 | (K:W-2) | 2-Sulfo-anilin | (b) | H | dito | dito |
| 322 | (K:W-2) | 3,6,8-Trisulfo-2-amino-naphthalin | (b) | H | dito | dito |
| 323 | (J:W-2) | Anilin | (b) | $CH_3$ | dito | dito |

| Bsp. | Formel (..) | Diazokomp. D-$NH_2$ | Alk | Rest R | Gruppe Y | Farbton |
|---|---|---|---|---|---|---|
| 324 | (J:W-2) | Anilin | (a) | H | ß-Phosphatoethyl | dito |
| 325 | (J:W-1) | 4-Sulfamoyl-anilin | (a) | H | ß-Sulfatoethyl | dito |
| 326 | (J:W-2) | 4-Sulfo-anilin | (b) | H | Vinyl | dito |
| 327 | (J:W-2) | 3,6,8-Trisulfo-2-amino-naphthalin | (a) | H | Vinyl | dito |

**Ansprüche**

1. Wasserlöslicher Farbstoff, dadurch gekennzeichnet, daß er eine Gruppe entsprechend der nachstehend genannten und definierten allgemeinen Formel (1) ein- oder mehrmals enthält:

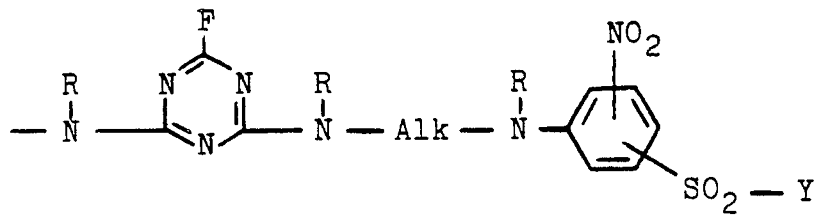

(1)

in welcher

R ein Wasserstoffatom oder eine Alkylgruppe von 1 bis 4 C-Atomen ist, die durch eine Carboxy-, Cyano-, Hydroxy-, Sulfo-, Sulfato- oder Phosphato-Gruppe substituiert sein kann, oder ein Cycloalkylrest mit 5 bis 8 C-Atomen ist, der durch 1 bis 3 Methylgruppen substituiert sein kann, wobei die R zueinander gleiche oder voneinander verschiedene Bedeutungen haben können,

Alk ein geradkettiger oder verzweigter Alkylenrest von 2 bis 6 C-Atomen ist oder einen geradkettigen oder verzweigten Alkylenrest von 3 bis 10 C-Atomen bedeutet, der durch 1 2, 3 oder 4 Heterogruppen oder durch 1 oder 2 gegebenenfalls durch 1, 2 oder 3 Methylgruppen substituierte Cyclohexylengruppen oder durch solche Heterogruppen und Cyclohexylengruppen unterbrochen ist,

Y die Vinylgruppe oder eine Gruppe der allgemeinen Formel (2)

$-CH_2-CH_2-X$ (2)

ist, in welcher X für einen Substituenten steht, der als Anion unter Bildung der Vinylgruppe eliminierbar ist.

2. Eine Verbindung nach Anspruch 1, die der allgemeinen Formel (3)

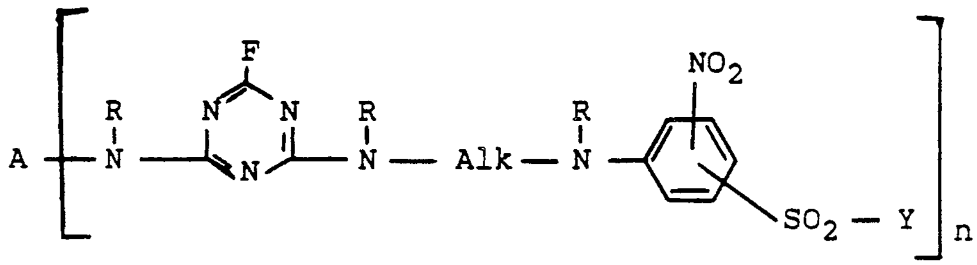

(3)

entspricht, in welcher

A der Rest eines sulfo- und/oder carboxygruppenhaltigen Farbstoffes ist, der ein Schwermetallion komplex gebunden enthalten kann,

n die Zahl 1 oder 2, bevorzugt 1, ist und

R, Alk und Y eine der in Anspruch 1 angegebenen Bedeutungen haben.

3. Verbindung nach Anspruch 2, dadurch gekennzeichnet, daß A der Rest eines sulfogruppenhaltigen Mono- oder Disazofarbstoffes ist.

4. Verbindung nach Anspruch 1 entsprechend der allgemeinen Formel (4a)

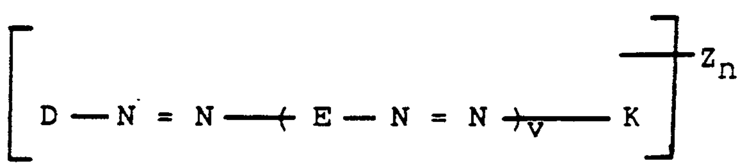

(4a)

in welcher D für den Rest einer Diazokomponente steht, E den bivalenten Rest einer kupplungsfähigen und

diazotierbaren Verbindung und K den Rest einer Kupplungskomponente bedeutet, v für die Zahl Null oder 1 steht, n die Zahl 1 oder 2 ist und Z einen Rest der allgemeinen Formel (1) bedeutet, wobei der Rest Z an den Rest D oder den Rest K oder im Falle von n = 2 jeweils an D und K gebunden ist.

5. Verbindung nach Anspruch 1 entsprechend der allgemeinen Formel (4b)

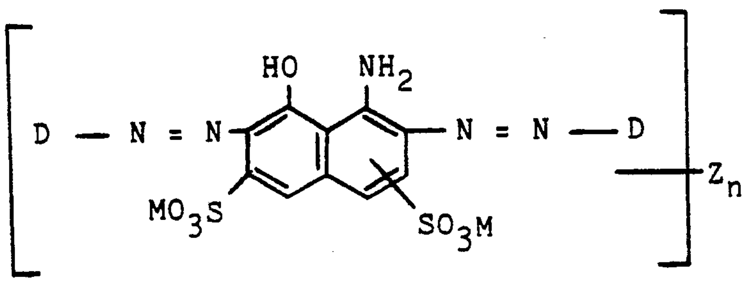

(4b)

in welcher beide D, zueinander gleich oder voneinander verschieden, für den Rest einer Diazokomponente stehen, n die Zahl 1 oder 2 ist und Z einen Rest der allgemeinen Formel (1) bedeutet, der an einen der Reste D oder im Falle von n = 2 an beide Reste D gebunden ist, sowie M ein Wasserstoffatom oder ein Alkalimetall ist.

6. Verbindung nach Anspruch 1 entsprechend der allgemeinen Formel (4c)

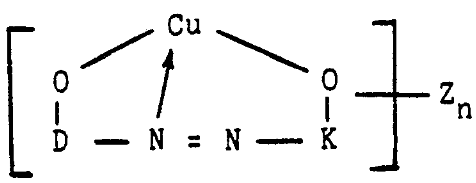

(4c)

in welcher D für den Rest einer Diazokomponente steht, K den Rest einer Kupplungskomponente bedeutet, n die Zahl 1 oder 2 ist und Z einen Rest der allgemeinen Formel (1) darstellt, wobei der Rest Z an den Rest D oder den Rest K oder im Falle von n = 2 an D und an K gebunden ist und die das Cu komplex bindenden Oxygruppen in ortho-Stellung zur Azogruppe an D und K gebunden sind.

7. Verbindung nach mindestens einem der Ansprüche 1 bis 6, dadurch gekennzeichnet, daß die Reste R Wasserstoff bedeuten.

8. Verbindung nach mindestens einem der Ansprüche 1 bis 7, dadurch gekennzeichnet, daß Y die ß-Sulfatoethyl-Gruppe bedeutet.

9. Verbindung nach Anspruch 4, dadurch gekennzeichnet, daß n für die Zahl 1 steht und Z an K gebunden ist und D einen Rest der allgemeinen Formel

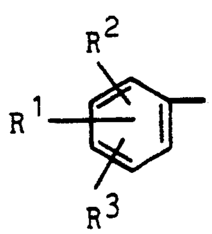

oder

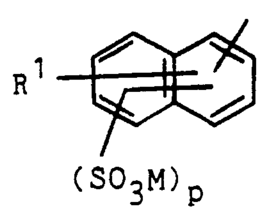

bedeutet, in welchen

$R^1$ ein Wasserstoffatom, eine Sulfogruppe oder eine Gruppe der allgemeinen Formel $-SO_2-Y$ mit Y der in Anspruch 1 genannten Bedeutung ist,

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet,
M ein Wasserstoffatom oder ein Alkalimetall ist und der Benzol- bzw. Naphthalinkern in ortho-Stellung zur freien Bindung durch eine Hydroxygruppe substituiert sein kann.

10. Verbindung nach Anspruch 4, dadurch gekennzeichnet, daß n für die Zahl 1 steht und Z an D gebunden ist und D einen Rest der allgemeinen Formel

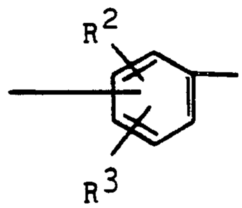

oder

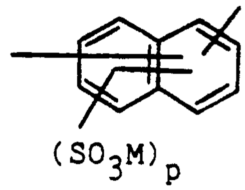

bedeutet, in welchen
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl-)sulfamoyl, Alkylsulfonyl von 1 bis 4 C-Atomen, Phenylsulfonyl oder Phenoxy ist,
p die Zahl Null, 1 oder 2 bedeutet und
M ein Wasserstoffatom oder ein Alkalimetall bedeutet.

11. Verbindung nach Anspruch 5, dadurch gekennzeichnet, daß n für die Zahl 1 steht und der eine Rest D einen Rest der allgemeinen Formel

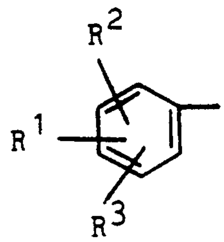

oder

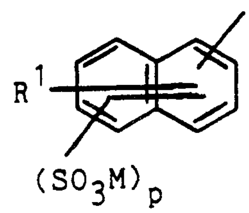

bedeutet, in welchen
$R^1$ ein Wasserstoffatom, eine Sulfogruppe oder eine Gruppe der allgemeinen Formel $-SO_2-Y$ mit Y der in Anspruch 1 genannten Bedeutung ist,
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet und
M ein Wasserstoffatom oder ein Alkalimetall bedeutet,
und der andere Rest D, an den Z gebunden ist, einen Phenylenrest der allgemeinen Formel

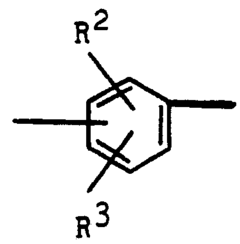

bedeutet, in welcher $R^2$ und $R^3$ eine der obengenannten Bedeutungen besitzen, wobei die Benzol- und Naphthalinkerne in ortho-Stellung zur freien Bindung durch eine Hydroxygruppe substituiert sein können.

12. Verbindung nach Anspruch 6, dadurch gekennzeichnet, daß n für die Zahl 1 steht und der Rest D einen Rest der allgemeinen Formel

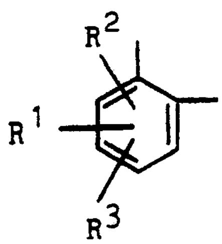

oder

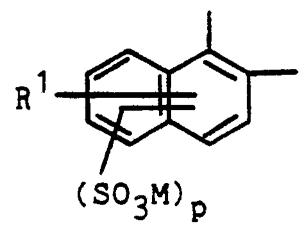

bedeutet, in welchen
$R^1$ ein Wasserstoffatom, eine Sulfogruppe oder eine Gruppe der allgemeinen Formel $-SO_2-Y$ mit Y der in Anspruch 1 genannten Bedeutung ist,
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet und
M ein Wasserstoffatom oder ein Alkalimetall bedeutet,
oder daß der Rest D einen Rest der allgemeinen Formel

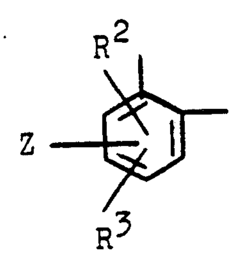

mit $R^2$ und $R^3$ sowie Z der obengenannten bzw. in Anspruch 6 genannten Bedeutungen darstellt.

13. Verbindung nach mindestens einem der Ansprüche 4, 7, 8 und 10, dadurch gekennzeichnet, daß n für die Zahl 1 steht, Z an D gebunden ist und K einen Rest der allgemeinen Formel

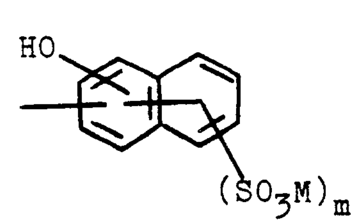

oder

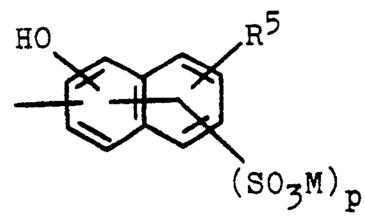

oder

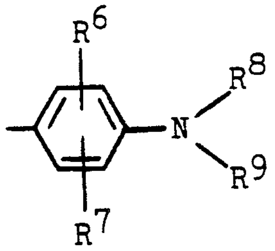

oder

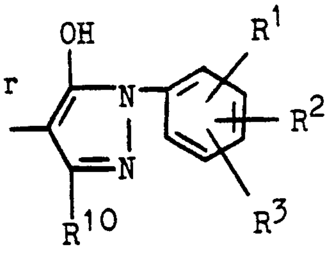

oder

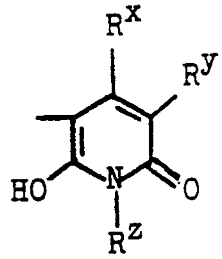

bedeutet, in welchen
$R^2$, $R^3$, p und M eine der in Anspruch 10 genannten Bedeutungen haben,
$R^1$ ein Wasserstoffatom, eine Sulfogruppe oder eine Gruppe der allgemeinen Formel $-SO_2-Y$ mit Y der in Anspruch 1 genannten Bedeutung ist,
$R^5$ Alkylureido mit Alkylgruppen von 1 bis 6 C-Atomen, Phenylureido, im Phenylrest durch Chlor, Methyl, Methoxy, Nitro, Sulfo und/oder Carboxy substituiertes Phenylureido, Alkanoylamino von 2 bis 7 C-Atomen, Cyclohexanoylamino, Benzoylamino oder im Benzolrest durch Chlor, Methyl, Methoxy, Nitro, Sulfo und/oder Carboxy substituiertes Benzoylamino bedeutet,
$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,
$R^7$ Wasserstoff, Alkyl von 1 bis 4 C-Atomen, Alkoxy von 1 bis 4 C-Atomen, Chlor oder Alkanoylamino von 2 bis 7 C-Atomen oder eine Ureido- oder Phenylureidogruppe ist,
$R^8$ Wasserstoff oder Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann,
$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist,
$R^{10}$ für Wasserstoff, Alkyl von 1 bis 4 C-Atomen, Cyano, Carboxy, Carbalkoxy von 2 bis 5 C-Atomen, Carbonamido oder Phenyl steht,
$R^x$ Wasserstoff, Alkyl von 1 bis 4 C-Atomen oder durch Alkoxy von 1 bis 4 C-Atomen oder Cyano substituiertes Alkyl von 1 bis 4 C-Atomen ist,
$R^y$ Wasserstoff, Sulfo, Sulfoalkyl mit einem Alkylrest von 1 bis 4 C-Atomen, Cyano oder Carbamoyl ist,
$R^z$ Wasserstoff oder Alkyl von 1 bis 6 C-Atomen, bevorzugt von 1 bis 4 C-Atomen, ist, das durch Phenyl, Sulfo oder Sulfophenyl substituiert sein kann und
m für die Zahl Null, 1, 2 oder 3 steht.

14. Verbindung nach mindestens einem der Ansprüche 4, 7, 8 und 9, dadurch gekennzeichnet, daß n für die Zahl 1 steht, der Rest Z an K gebunden ist und die Gruppe -K-Z einen Rest der Formel

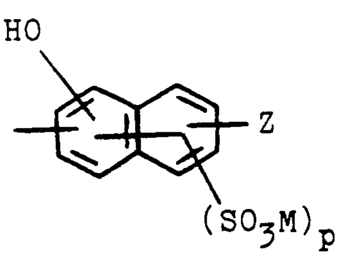

oder

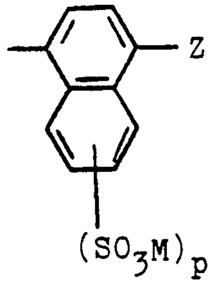

oder

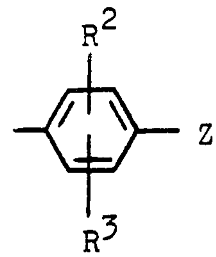

bedeutet, in welchen $R^2$ gleich Wasserstoff, Methyl, Methoxy, Chlor, Carboxy oder Sulfo, $R^3$ gleich Wasserstoff, Methyl, Methoxy, Chlor, Carboxy, Sulfo oder Acetylamino, p die Zahl Null, 1 oder 2 und M gleich Wasserstoff oder ein Alkalimetall ist sowie Z einen in Anspruch 1 genannten und definierten Rest der Formel (1) bedeutet.

15. Verbindung nach mindestens einem der Ansprüche 4, 7 bis 10 und 13, dadurch gekennzeichnet, daß v für die Zahl 1 steht und E einen Rest der Formel

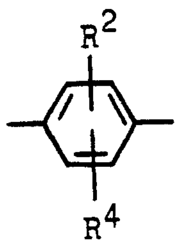

oder

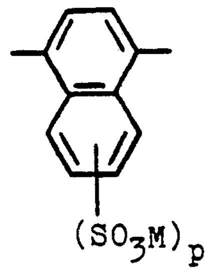

bedeutet, in welcher
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^4$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist,
p für die Zahl Null, 1 oder 2 steht und
M ein Wasserstoffatom oder ein Alkalimetall bedeutet.

16. Verfahren zur Herstellung eines Farbstoffes von Anspruch 1, dadurch gekennzeichnet, daß man die für wasserlösliche Farbstoffe üblichen Vorprodukte, von denen mindestens eines eine Gruppe der allgemeinen Formel (1) enthält, miteinander in üblicher Verfahrensweise zum entsprechenden Farbstoff von Anspruch 1 umsetzt, oder indem man Cyanurfluorid in beliebiger Folge mit einem eine Aminogruppe der allgemeinen Formel -NHR mit R der in Anspruch 1 genannten Bedeutung ein- oder mehrmals enthaltenden wasserlöslichen Farbstoff und einer Aminoverbindung der allgemeinen Formel (19)

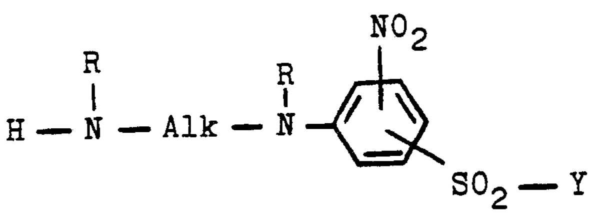

(19)

in welcher Alk, R und Y die in Anspruch 1 genannten Bedeutungen haben, umsetzt.

17. Verwendung eines Farbstoffes von mindestens einem der Ansprüche 1 bis 16 zum Färben und Bedrucken von hydroxy-und/oder carbonamidgruppenhaltigem Material, insbesondere Fasermaterial.

18. Verfahren zum Kolorieren (Färben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff einen Farbstoff von mindestens einem der Ansprüche 1 bis 16 verwendet.

Patentansprüche für folgenden Vertragstaat: ES

1. Verfahren zur Herstellung eines wasserlöslichen Farbstoffes, der eine Gruppe entsprechend der nachstehend genannten und definierten allgemeinen Formel (1) ein- oder mehrmals enthält:

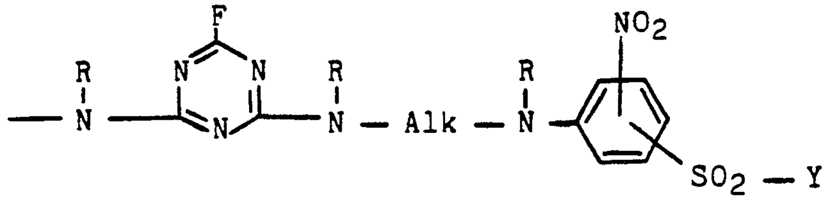

(1)

in welcher
R ein Wasserstoffatom oder eine Alkylgruppe von 1 bis 4 C-Atomen ist, die durch eine Carboxy-, Cyano-, Hydroxy-, Sulfo-, Sulfato- oder Phosphato-Gruppe substituiert sein kann, oder ein Cycloalkylrest mit 5 bis 8 C-Atomen ist, der durch 1 bis 3 Methylgruppen substituiert sein kann, wobei die R zueinander gleiche oder voneinander verschiedene Bedeutungen haben können,
Alk ein geradkettiger oder verzweigter Alkylenrest von 2 bis 6 C-Atomen ist oder einen geradkettigen oder verzweigten Alkylenrest von 3 bis 10 C-Atomen bedeutet, der durch 1, 2, 3 oder 4 Heterogruppen oder durch 1 oder 2 gegebenenfalls durch 1, 2 oder 3 Methylgruppen substituierte Cyclohexylengruppen oder durch solche Heterogruppen und Cyclohexylengruppen unterbrochen ist,
Y die Vinylgruppe oder eine Gruppe der allgemeinen Formel (2)
$-CH_2-CH_2-X$ (2)
ist, in welcher X für einen Substituenten steht, der als Anion unter Bildung der Vinylgruppe eliminierbar ist, dadurch gekennzeichnet, daß man die für wasserlösliche Farbstoffe üblichen Vorprodukte, von denen mindestens eines eine Gruppe der allgemeinen Formel (1) enthält, miteinander in üblicher Verfahrensweise zum entsprechenden Farbstoff mit der Gruppe (1) umsetzt, oder daß man Cyanurfluorid in beliebiger Folge mit einem eine Aminogruppe der allgemeinen Formel -NHR mit R der obengenannten Bedeutung ein- oder mehrmals enthaltenden wasserlöslichen Farbstoff und einer Aminoverbindung der allgemeinen Formel (19)

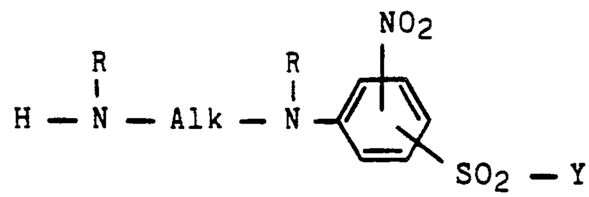

(19)

in welcher Alk, R und Y die obengenannten Bedeutungen haben, umsetzt.

2. Verfahren nach Anspruch 1, dadurch gekennzeichnet, daß der Farbstoff mit der Gruppe (1) eine Verbindung der allgemeinen Formel (3)

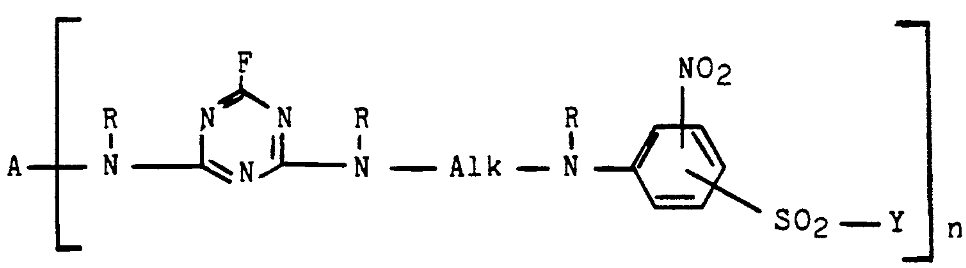

(3)

ist, in welcher
A der Rest eines sulfo- und/oder carboxygruppenhaltigen Farbstoffes ist, der ein Schwermetallion komplex gebunden enthalten kann,
n die Zahl 1 oder 2, bevorzugt 1, ist und
R, Alk und Y eine der in Anspruch 1 angegebenen Bedeutungen haben.

3. Verfahren nach Anspruch 2, dadurch gekennzeichnet, daß A der Rest eines sulfogruppenhaltigen Mono- oder Disazofarbstoffes ist.

4. Verfahren nach Anspruch 1, dadurch gekennzeichnet, daß der Farbstoff mit der Gruppe (1) eine Verbindung entsprechend der allgemeinen Formel (4a)

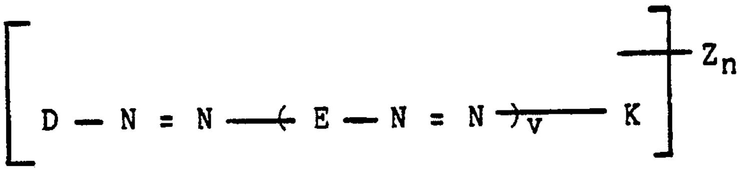

(4a)

ist, in welcher D für den Rest einer Diazokomponente steht, E den bivalenten Rest einer kupplungsfähigen und diazotierbaren Verbindung und K den Rest einer Kupplungskomponente bedeutet, v für die Zahl Null oder 1 steht, n die Zahl 1 oder 2 ist und Z einen Rest der allgemeinen Formel (1) bedeutet, wobei der Rest Z an den Rest D oder den Rest K oder im Falle von n = 2 jeweils an D und K gebunden ist.

5. Verfahren nach Anspruch 1, dadurch gekennzeichnet, daß der Farbstoff mit der Gruppe (1) eine Verbindung entsprechend der allgemeinen Formel (4b)

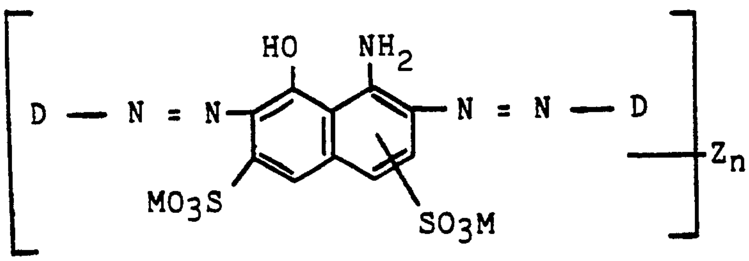

(4b)

ist, in welcher beide D, zueinander gleich oder voneinander verschieden, für den Rest einer Diazokomponente stehen, n die Zahl 1 oder 2 ist und Z einen Rest der allgemeinen Formel (1) bedeutet, der an einen der Reste D oder im Falle von n = 2 an beide Reste D gebunden ist, sowie M ein Wasserstoffatom oder ein Alkalimetall ist.

6. Verfahren nach Anspruch 1, dadurch gekennzeichnet, daß der Farbstoff mit der Gruppe (1) eine Verbindung entsprechend der allgemeinen Formel (4c)

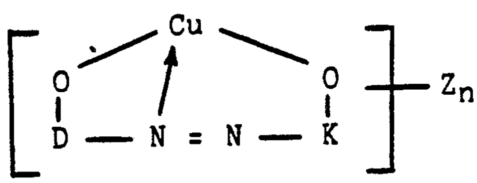

(4c)

ist, in welcher D für den Rest einer Diazokomponente steht, K den Rest einer Kupplungskomponente bedeutet, n die Zahl 1 oder 2 ist und Z einen Rest der allgemeinen Formel (1) darstellt, wobei der Rest Z an den Rest D oder den Rest K oder im Falle von n = 2 an D und an K gebunden ist und die das Cu komplex bindenden Oxygruppen in ortho-Stellung zur Azogruppe an D und K gebunden sind.

7. Verfahren nach mindestens einem der Ansprüche 1 bis 6, dadurch gekennzeichnet, daß die Reste R Wasserstoff bedeuten.

8. Verfahren nach mindestens einem der Ansprüche 1 bis 7, dadurch gekennzeichnet, daß Y die ß-Sulfatoethyl-Gruppe bedeutet.

9. Verfahren nach Anspruch 4, dadurch gekennzeichnet, daß n für die Zahl 1 steht und Z an K gebunden ist und D einen Rest der allgemeinen Formel

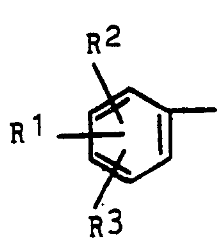

oder

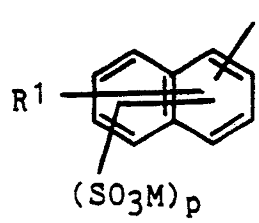

bedeutet, in welchen

$R^1$ ein Wasserstoffatom, eine Sulfogruppe oder eine Gruppe der allgemeinen Formel $-SO_2-Y$ mit Y der in Anspruch 1 genannten Bedeutung ist,
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet,
M ein Wasserstoffatom oder ein Alkalimetall ist und
der Benzol- bzw. Naphthalinkern in ortho-Stellung zur freien Bindung durch eine Hydroxygruppe substituiert sein kann.

10. Verfahren nach Anspruch 4, dadurch gekennzeichnet, daß n für die Zahl 1 steht und Z an D gebunden ist und D einen Rest der allgemeinen Formel

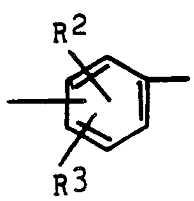

oder

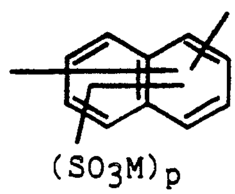

bedeutet, in welchen
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet und
M ein Wasserstoffatom oder ein Alkalimetall bedeutet.

11. Verfahren nach Anspruch 5, dadurch gekennzeichnet, daß n für die Zahl 1 steht und der eine Rest D einen Rest der allgemeinen Formel

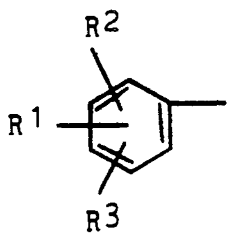

oder

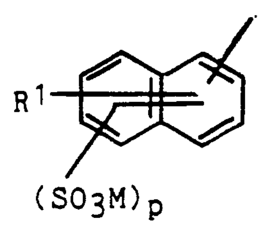

bedeutet, in welchen
$R^1$ ein Wasserstoffatom, eine Sulfogruppe oder eine Gruppe der allgemeinen Formel $-SO_1-Y$ mit Y der in Anspruch 1 genannten Bedeutung ist,
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet und
M ein Wasserstoffatom oder ein Alkalimetall bedeutet,
und der andere Rest D, an den Z gebunden ist, einen Phenylenrest der allgemeinen Formel

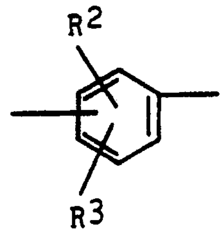

bedeutet, in welcher $R^2$ und $R^3$ eine der obengenannten Bedeutungen besitzen, wobei die Benzol- und Naphthalinkerne in ortho-Stellung zur freien Bindung durch eine Hydroxygruppe substituiert sein können.

12. Verfahren nach Anspruch 6, dadurch gekennzeichnet, daß n für die Zahl 1 steht und der Rest D einen Rest der allgemeinen Formel

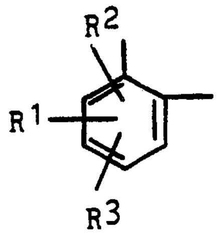

oder

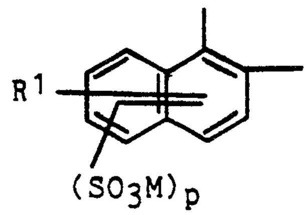

bedeutet, in welchen

$R^1$ ein Wasserstoffatom, eine Sulfogruppe oder eine Gruppe der allgemeinen Formel $-SO_2-Y$ mit Y der in Anspruch 1 genannten Bedeutung ist,

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

p die Zahl Null, 1 oder 2 bedeutet und

M ein Wasserstoffatom oder ein Alkalimetall bedeutet,

oder daß der Rest D einen Rest der allgemeinen Formel

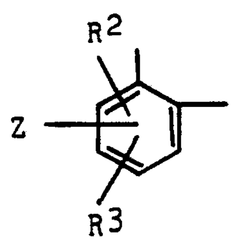

mit $R^2$ und $R^3$ sowie Z der obengenannten bzw. in Anspruch 6 genannten Bedeutungen darstellt.

13. Verfahren nach mindestens einem der Ansprüche 4, 7, 8 und 10, dadurch gekennzeichnet, daß n für die Zahl 1 steht, Z an D gebunden ist und K einen Rest der allgemeinen Formel

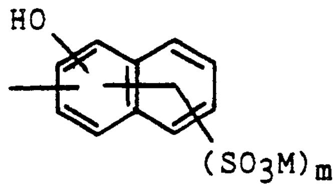

oder

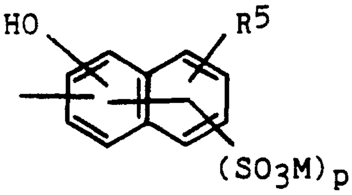

oder

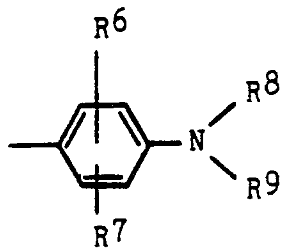

oder

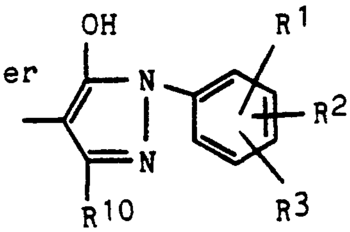

oder

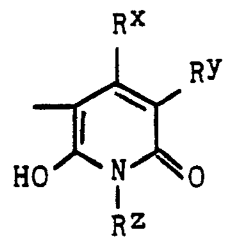

bedeutet, in welchen

$R^2$, $R^3$, p und M eine der in Anspruch 10 genannten Bedeutungen haben,

$R^1$ ein Wasserstoffatom, eine Sulfogruppe oder eine Gruppe der allgemeinen Formel $-SO_2-Y$ mit Y der in Anspruch 1 genannten Bedeutung ist,

$R^5$ Alkylureido mit Alkylgruppen von 1 bis 6 C-Atomen, Phenylureido, im Phenylrest durch Chlor, Methyl, Methoxy, Nitro, Sulfo und/oder Carboxy substituiertes Phenylureido, Alkanoylamino von 2 bis 7 C-Atomen, Cyclohexanoylamino, Benzoylamino oder im Benzolrest durch Chlor, Methyl, Methoxy, Nitro, Sulfo und/oder Carboxy substituiertes Benzoylamino bedeutet,

$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,

$R^7$ Wasserstoff, Alkyl von 1 bis 4 C-Atomen, Alkoxy von 1 bis 4 C-Atomen, Chlor oder Alkanoylamino von 2 bis 7 C-Atomen oder eine Ureido- oder Phenylureidogruppe ist,

$R^8$ Wasserstoff oder Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann,

$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist,

$R^{10}$ für Wasserstoff, Alkyl von 1 bis 4 C-Atomen, Cyano, Carboxy, Carbalkoxy von 2 bis 5 C-Atomen, Carbonamido oder Phenyl steht,

$R^x$ Wasserstoff, Alkyl von 1 bis 4 C-Atomen oder durch Alkoxy von 1 bis 4 C-Atomen oder Cyano substituiertes Alkyl von 1 bis 4 C-Atomen ist,

$R^y$ Wasserstoff, Sulfo, Sulfoalkyl mit einem Alkylrest von 1 bis 4 C-Atomen, Cyano oder Carbamoyl ist,

$R^z$ Wasserstoff oder Alkyl von 1 bis 6 C-Atomen, bevorzugt von 1 bis 4 C-Atomen, ist, das durch Phenyl, Sulfo oder Sulfophenyl substituiert sein kann und

m für die Zahl Null, 1, 2 oder 3 steht.

14. Verfahren nach mindestens einem der Ansprüche 4, 7, 8 und 9, dadurch gekennzeichnet, daß n für die Zahl 1 steht, der Rest Z an K gebunden ist und die Gruppe -K-Z einen Rest der Formel

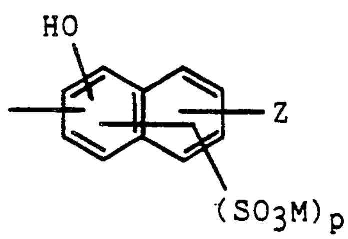

oder

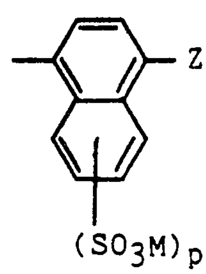

oder

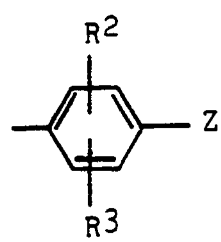

bedeutet, in welchen $R^2$ gleich Wasserstoff, Methyl, Methoxy, Chlor, Carboxy oder Sulfo, $R^3$ gleich

Wasserstoff, Methyl, Methoxy, Chlor, Carboxy, Sulfo oder Acetylamino, p die Zahl Null, 1 oder 2 und M gleich Wasserstoff oder ein Alkalimetall ist sowie Z einen in Anspruch 1 genannten und definierten Rest der Formel (1) bedeutet.

15. Verfahren nach mindestens einem der Ansprüche 4, 7 bis 10 und 13, dadurch gekennzeichnet, daß v für die Zahl 1 steht und E einen Rest der Formel

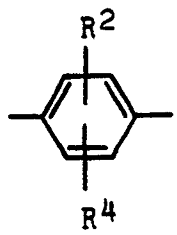

oder

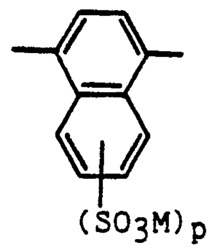

bedeutet, in welcher
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^4$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist,
p für die Zahl Null, 1 oder 2 steht und
M ein Wasserstoffatom oder ein Alkalimetall bedeutet.

16. Verwendung eines Farbstoffes von mindestens einem der Ansprüche 1 bis 15 zum Färben und Bedrucken von hydroxy-und/oder carbonamidgruppenhaltigem Material, insbesondere Fasermaterial.

17. Verfahren zum Kolorieren (Färben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff einen Farbstoff von mindestens einem der Ansprüche 1 bis 15 verwendet.

Europäisches Patentamt

# EUROPÄISCHER RECHERCHENBERICHT

Nummer der Anmeldung

EP 89 11 7849

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 271 883 (HOECHST)<br>* Ansprüche * & DE-A-3 643 014 (Kat. D)<br>----- | 1-18 | C 09 B 62/503<br>C 09 B 62/04<br>D 06 P 1/38 |
| | | | **RECHERCHIERTE SACHGEBIETE (Int. Cl.5)** |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 13-12-1989 | GINESTET M.E.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P0403)